(19) **Europäisches Patentamt**

**European Patent Office**

**Office européen des brevets**

(11) **EP 0 555 369 B1**

(12) **EUROPEAN PATENT SPECIFICATION**

(45) Date of publication and mention
of the grant of the patent:
**28.08.2002 Bulletin 2002/35**

(51) Int Cl.$^7$: **B29C 67/00**

(86) International application number:
**PCT/US91/08110**

(21) Application number: **92900076.8**

(22) Date of filing: **30.10.1991**

(87) International publication number:
**WO 92/008200 (14.05.1992 Gazette 1992/11)**

(54) **LAYER COMPARISON TECHNIQUES IN STEREOLITHOGRAPHY**

SCHICHTENVERGLEICHSTECHNIKEN IN DER STEREOLITHOGRAPHIE

TECHNIQUES DE COMPARAISON DE COUCHES EN STEREOLITHOGRAPHIE

(84) Designated Contracting States:
**AT BE CH DE DK ES FR GB GR IT LI LU NL SE**

(30) Priority: **30.10.1990 US 605979**
**30.10.1990 US 606191**
**30.10.1990 US 606802**
**31.10.1990 US 607042**

(43) Date of publication of application:
**18.08.1993 Bulletin 1993/33**

(73) Proprietor: **3D SYSTEMS, INC.**
**Valencia, California 91355 (US)**

(72) Inventors:
 • **SNEAD, David, E.**
 **Canyon Country, CA 91351 (US)**
 • **SMALLEY, Denis, R.**
 **Baldwin Park, CA 91706 (US)**
 • **COHEN, Adam L.**
 **Los Angeles, CA 90024 (US)**
 • **ALLISON, Joseph, W.**
 **Valencia, CA 91355 (US)**
 • **VORGITCH, Thomas, J.**
 **Simi Valley, CA 93063 (US)**

 • **CHEN, Thomas, P.**
 **La Canada, CA 91011 (US)**
 • **NGUYEN, Hop, D.**
 **Littlerock, CA 93543 (US)**
 • **SCHMIDT, Kris, A.**
 **Granada Hills, CA 91344 (US)**
 • **EVANS, Herbert, E.**
 **Santa Clarita, CA 91380 (US)**
 • **FREED, Raymond, S.**
 **Northridge, CA 91324 (US)**
 • **JACOBS, Paul, F.**
 **La Crescenta, CA 91214 (US)**
 • **VINSON, Wayne, A.**
 **Valencia, CA 91355 (US)**

(74) Representative: **Bluff, John William et al**
**Lloyd Wise, Tregear & Co.,**
**Commonwealth House,**
**1-19 New Oxford Street**
**London WC1A 1LW (GB)**

(56) References cited:
**US-A- 4 575 330**      **US-A- 4 665 492**
**US-A- 4 961 154**      **US-A- 5 031 120**

**Description**

This invention is concerned with the building of a three-dimensional object layer-by-layer.

Several building techniques have recently become available for building three-dimensional objects in layers. One such technique is stereolithography, which is described in EP-A-0 179 069 (U.S. Patent No. 4,575,330). According to the principles of stereolithography, a three-dimensional object is formed layer-by-layer in a stepwise fashion out of a material, e.g. a fluid medium, capable of physical transformation (solidification) upon exposure to synergistic stimulation (a solidifying medium). In one embodiment of stereolithography, layers of untransformed material such as liquid photopolymer are successively formed at the working surface of a volume of the liquid photopolymer contained in a container.

These layers are then selectively exposed to the synergistic stimulation to form successive object cross-sections. Moreover, upon transformation into the object cross-sections, the transformed material typically adheres to the previously-formed cross-sections through the natural adhesive properties of the photopolymer upon solidification.

EP-A-0179069 discloses a method of forming an object, the formed object being built of superposed selectively solidified layers of a fluid medium, solidifiable by exposure to a solidifying medium, the method being of the kind comprising the repeated steps of providing a fresh layer of the fluid medium over a layer previously selectively exposed to the solidifying medium and selectively exposing the fresh layer.

A method of this kind is also to be found in EP-A-0250121 corresponding to U.S. patent 4961154. The preferred implementation disclosed in EP-A-0250121 is to image successive pattern masks defining the patterns of successive layers onto the fluid medium.

While exposure to pattern masks is one possible technique, the technique more commonly adopted is that of scanning a spot, such as a spot of UV radiation, over a working surface of a fluid medium, the scanning of the spot over each layer and the other operations involved in object forming being under the control of a programmed computer.

EP-A-0179069 discloses apparatus for forming an object, the apparatus being of the kind in which the formed object is built of superposed selectively solidified layers of a fluid medium, solidifiable by exposure to a solidifying medium, the apparatus including a computer programmed to control the operation of the apparatus, the computer controlled operation including the repeated steps of providing a fresh layer of the fluid medium over a layer previously selectively exposed to the solidifying medium and selectively exposing the fresh layer.

As described in PCT Publication No. WO 89/10256, a stereolithography system will typically form a three-dimensional object in accordance with a corresponding object representation, which representation may be formed in a CAD system or the like. Before such a representation can be used, however, it must be sliced into a plurality of layer representations. The stereolithography system will then, in the course of building up the object in a stepwise layer-by-layer buildup, selectively expose the untransformed layers of material in accordance with the layer representations to form the object layers, and thus, the object itself.

Previous methods of forming the layer representations suffered from a number of disadvantages, however.

For photopolymer based systems an additional problem is that many photopolymers have a "minimum solidifiable thickness," i.e., a minimum thickness below which they cannot be sufficiently cured to form unsupported regions of transformed, cohesive material. For example, with presently preferred fluid photopolymers, if an attempt is made to try to form a feature of an object having a thickness less than the minimum solidifiable depth (MSD) or thickness, that feature will either simply fail to sufficiently solidify to become part of the object, or it will slump (i.e., fail to hold its shape). The minimum solidifiable thickness of a building medium (e.g., photopolymer) is not only a characteristic of the building medium or material itself but it also depends on the synergistic stimulation chosen and the environmental conditions surrounding the material. For example, oxygen absorbed in a photopolymer can act as a reaction inhibitor. Therefore, as used herein, "MSD" refers to the minimum solidification depth obtainable with a given material/solidification environment combination.

Since the MSD is the minimum solidification depth for forming unsupported regions of layers (i.e., down-facing features of the object), these regions must be given a cure depth of at least the MSD regardless of the thickness between individual layers or cross-sections from which the object is being formed. Therefore, due to the layer by layer formation process, even if the layers being used are thinner than the MSD, the accuracy of the stereolithographically reproduced object is limited by the MSD of the material being used.

As described in WO 89/10801, objects made using stereolithography tend to distort when the materials used change density between the untransformed state (e.g., liquid state) and the transformed state (e.g., solid state). This density change causes material shrinkage or expansion generating stress in a part as it is formed such that lower layers or adjacent structures tend to "curl" giving an overall distortion of the part.

There is a second type of MSD which relates to an inability to form non-curling or low-curling layers thinner than the MSD when higher layers are adhered to them. This second type of MSD is discussed below (see pages 90 and 101 of WO 92/08200).

The practice of the invention described below overcomes the MSD limitation by providing high resolution stereolithography when using a fluid-like building material that is inherently incapable of making unsupported thicknesses of solidified material as thin as the desired accuracy when solidified by the chosen synergistic stimulation.

According to one aspect of the present invention there is provided a method of forming an object of the kind set forth above which is characterised by

determining a first layer at which an up-facing surface is to be provided,
identifying a second layer, at a portion of which a down-facing surface should be provided, to have a predetermined spacing from the first layer in the build direction in order to accurately build the object,
not exposing said portion during the selective exposure of the fresh layer pertaining to said second layer, and
exposing the superposed portion of one of the next following fresh layers to achieve exposure of said portion of the second layer so as to solidify said portion.

According to another aspect of the present invention there is provided apparatus for forming an object of the kind set forth above. The computer controlled operation of the apparatus is characterised by the features that characterise the method as recited in the preceding paragraph.

The practice of the present invention allows materials which are not considered capable of producing high resolution objects by stereolithographic methods to be used to create many of these high resolution objects through improved stereolithographic techniques. In terms of photopolymers, these heretofore non-high resolution photopolymers typically have absorption and solidification properties which make them incapable of being converted to a cohesive solid plastic of thickness less-than some amount (e.g., 1 mm). In the practice of the present invention deviations are made from the typical approach, wherein these deviations involve leaving untransformed material on at least one portion of one cross-section, at least until after that cross-section has been coated over with untransformed material in preparation for formation of an additional layer of the object, and wherein the portion(s) will be solidified by transformation of material after the formation of the coating.

The present method leads to more accurate creation of objects than is possible by use of typical stereolithographic techniques. Not all material to be solidified in a given area of across-section is necessarily solidified on that cross-section. It may be solidified through and simultaneously with a higher cross-section or layer, i.e., with the solidifying radiation penetrating downward through higher layers into the appropriate region.

For ease of disclosure the specific description which follows is divided into two main sections preceded by a general introduction to stereolithographic procedure.

Section 1 is entitled "Simultaneous Multiple Layer Curing in Stereolithography." This section describes methods and apparatus for building high resolution objects from traditionally low-resolution combinations of building materials and synergistic stimulation, which combinations result in a minimum effective cure depth which is typically too deep to form the thin layers required for high resolution objects. This objective is accomplished by delaying the exposure of those areas on a particular cross-section that would negatively impact resolution if those areas were immediately cured upon formation of the cross-section. Resolution may be negatively impacted, for example, if, because of the cure depth involved, material below this cross-section is inadvertently cured upon exposure of these areas. Therefore, to preserve resolution, exposure of these areas is delayed, and corresponding areas which are above these areas on higher cross-sections are exposed such that the cure depth is deep enough to cure the desired areas without inadvertently curing material on lower cross-sections.

Section 2 is entitled "Boolean Layer Comparison Slice." This section describes the use of boolean operations in determining which portions of each layer continue from the previous layer through the present layer and through the next successive layer and which portions 15 are up-facing or down-facing or both. Therefore, this section describes methods and apparatus for comparing initial data associated with each layer, and comparing such data between layers to form resulting data that will be used in the process of physically reproducing the object. Additionally, this section describes the use of such operations to yield appropriately sized objects (e.g., undersized or oversized). Utility of the concepts of this section to implementing and enhancing the teaching of section 1 will become apparent.

The teachings of these two sections can be combined with other sections of disclosure contained in WO 92/08200 namely.

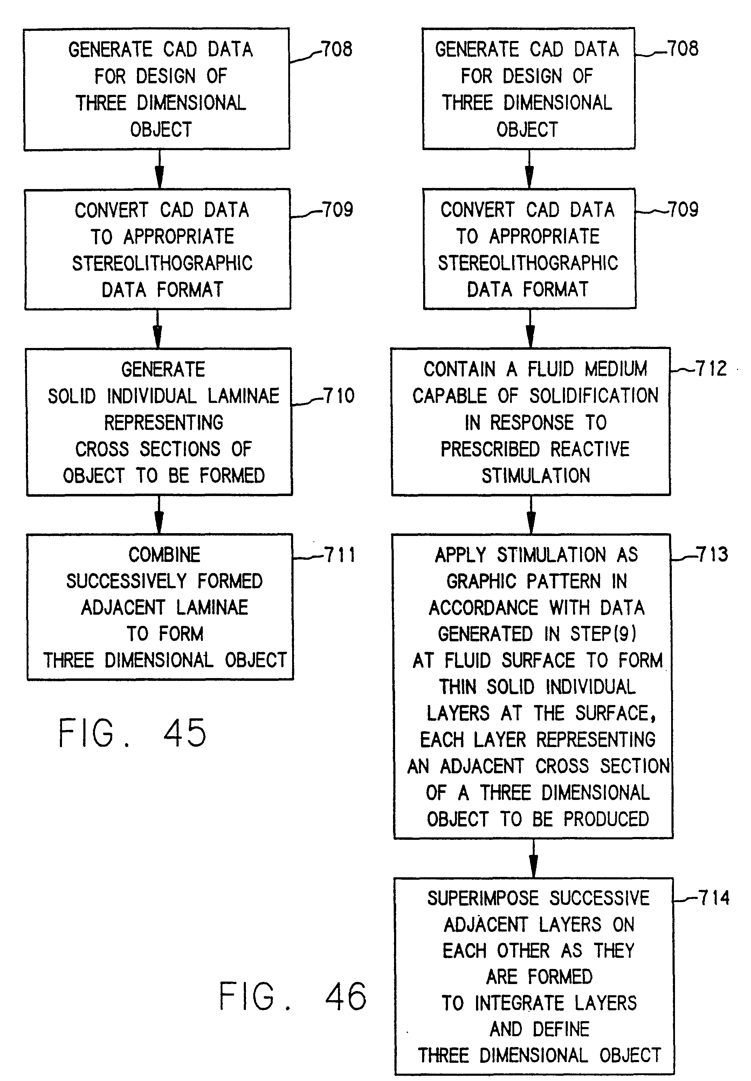

Section 3 commencing on page 106 of WO 90/08200 and entitled "Curl Balancing." This section discloses a method and apparatus for reducing curl distor-tion by balancing normal curl with reverse curl. This section discloses use of non-traditional cure depth and layer (or portion thereof) forming order to minimize curl distortion. This section includes a reference to Figs. 45 and 46 of the present disclosure.

Section 4 commencing on page 136 of WO 92/08200 and entitled "Improved Surface Resolution in Three-Dimensional Objects by Inclusion of Thin Fill Layers." This section describes methods and apparatus for forming high resolution objects by filling the surface discontinuities inherent in stereolithographically formed three-dimensional objects formed with thin fill layers of cured material during the layer by layer formation process.

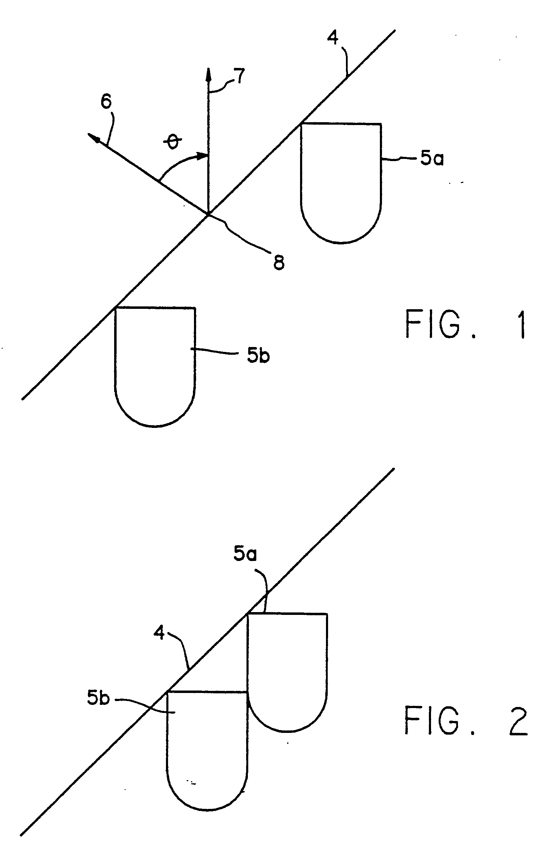

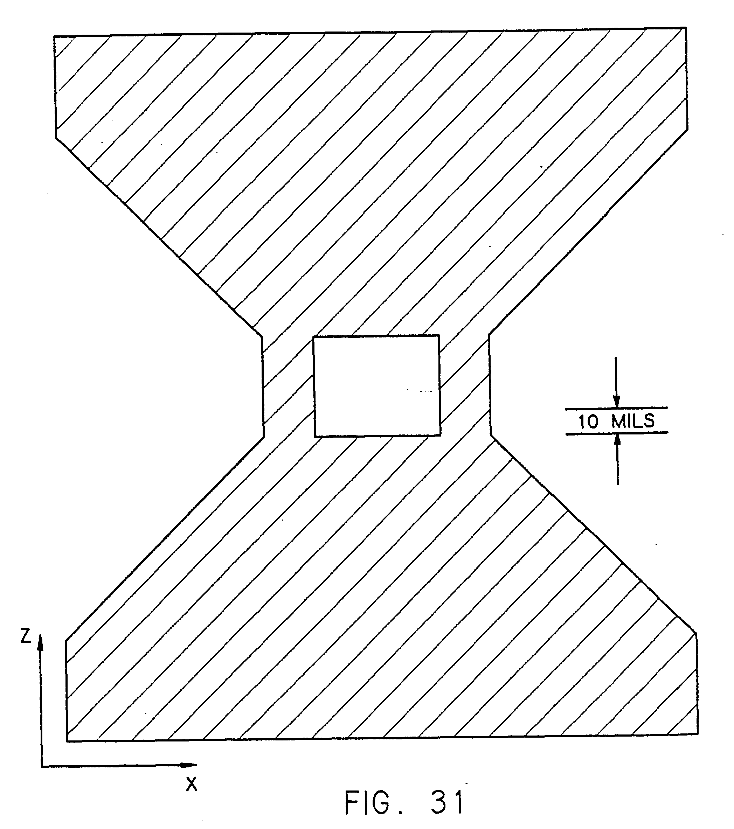

The present invention will be further described with reference to embodiments of it disclosed in Section 1 with reference to Figs. 31-44 of the drawings; with further information on the preferred slice procedure given in section 2 with reference to Figs. 1-30; and with reference to a general introduction to stereolithographic procedure given with reference to Fig. 45 and 46

## BRIEF DESCRIPTION OF THE DRAWINGS

Figs. 1 and 2 illustrate the use of the MSA in generating near-flat skin;
Figs. 3a and 3b are a flowchart of a first embodiment of the slice procedure;
Fig. 4 illustrates the correspondence between slicing planes and cross-sections.
Fig. 5 illustrates the classification of triangles;
Fig. 6 illustrates the generation of projection regions;
Fig. 7 illustrates the relationships between S[i]+, S[i]*, and S[i+1]-;
Fig. 8 illustrates the formation of U[i] from L'[i] and L'[i+1];
Fig. 9 illustrates the overlap between up and down-facing regions;
Figs. 10 and 11 illustrate adjustments to up- and down-facing borders to prevent over-exposure;
Figs. 12a and 12b illustrate the detection of an area too small to benefit from the generation of skin vectors;
Fig. 13 is a flowchart of the method of implementing the first slice procedure embodiment;
Fig. 14 is a flowchart of the detailed substeps of the method of Fig. 13;
Figs. 15a and 15b illustrate the process of splitting segments at intersection points;
Fig. 16 illustrates the process of assigning orientations to segments;
Figs. 17a and 17b illustrate the process of assigning orientations to horizontal segments;
Figs. 18a and 18b illustrate the concept of bigons as representing two overlapping segments;
Figs. 19a and 19b illustrate the case of three overlapping segments;
Figs. 20a and 20b illustrate the implementation of the boolean union operation;
Figs. 21a and 21b illustrate the treatment of bigons in the union operation;
Figs. 22a and 22b illustrate the implementation of line width compensation;
Figs. 23a-23c illustrate the implementation of the boolean differing operation;
Figs. 24a and 24b illustrate skin vector generation;
Figs. 25a-25c illustrate the generation of phantom borders for skin retraction;
Figs. 26a-26d and 27a-27d illustrate the clipping of phantom borders at corners;
Figs. 28a-28d is a flowchart of a second embodiment of the slice procedure;
Figs. 29a-29d illustrate the use of an undersized building style;
Figs. 30a-30f illustrate an embodiment of cure width compensation;
Fig. 31 is a schematic side view of an object or part that can be built using stereolithography;
Fig. 32 is a side view of the object of Fig. 31 sliced using 10 mil cross-sections and constructed using a material that can form 10 mil thicknesses;

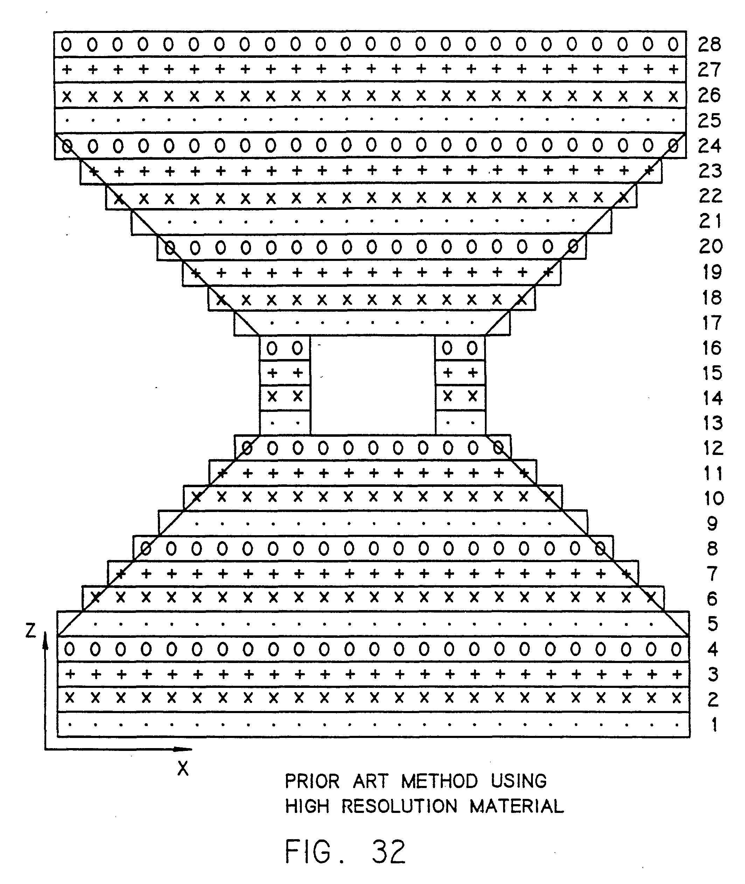

Fig. 32 is a side view of the object of Fig. 31 but this time sliced using 40 mil (1 mm) cross-sections along with a material cured to a 40 mil depth.

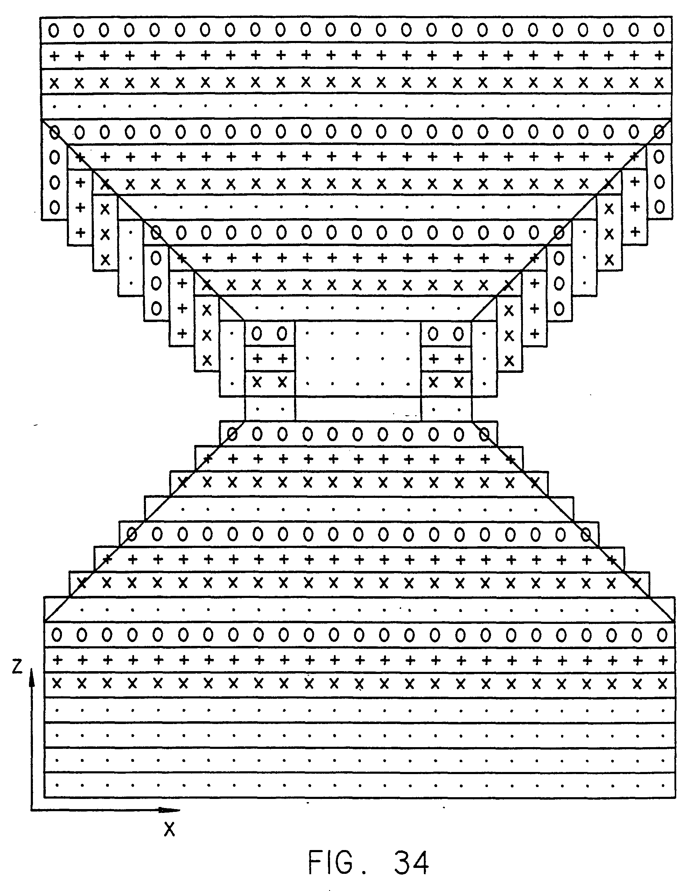

Fig. 34 is a side view of the object of Fig. 31 sliced using 10 mil cross-sections but constructed using a material that cannot form unsupported layers less than 40 mils in thickness (i.e., a 40 mil MSD material) using a typical stereolithography approach.

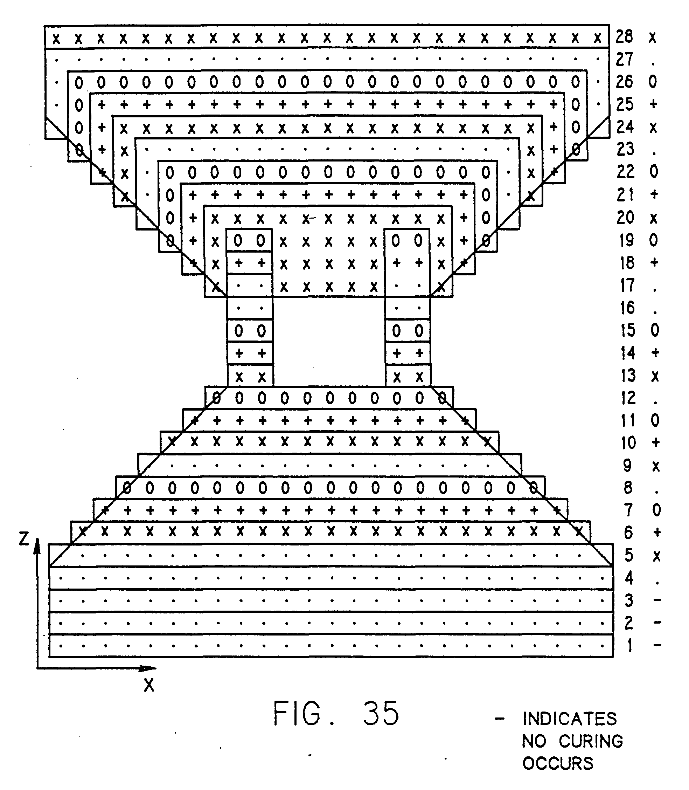

Fig. 35 is a side view of the object of Fig. 31 sliced using 10 mil cross-sections but constructed using a material that cannot form unsupported layers less than 40 mils (MSD) in thickness using a first embodiment of this invention.

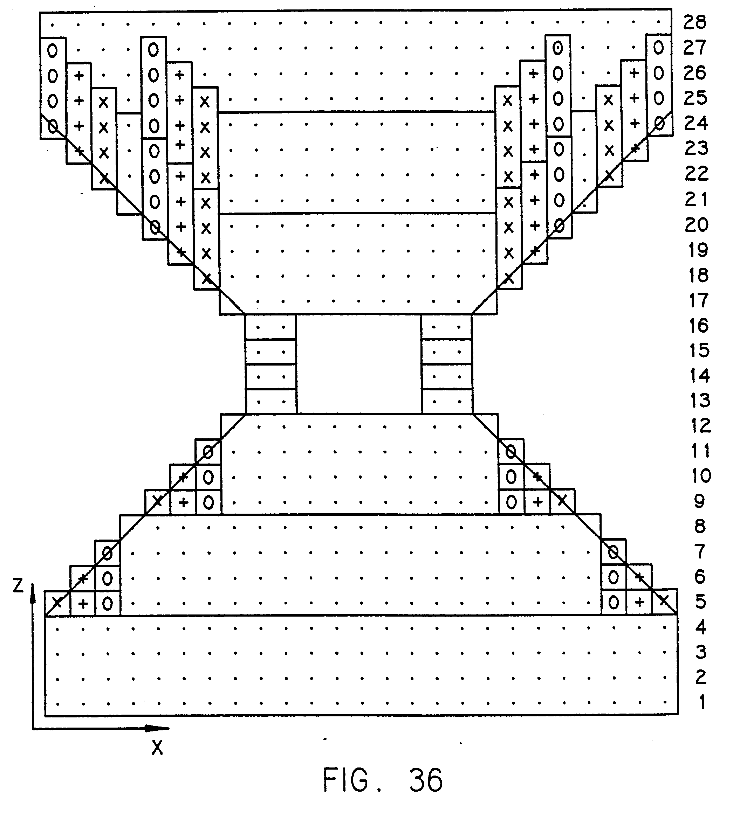

Fig. 36 is a side view of the object of Fig. 31 sliced using 10 mil cross-sections but constructed using a material that cannot form unsupported layers less than 40 mils in thickness using a second embodiment of the invention.

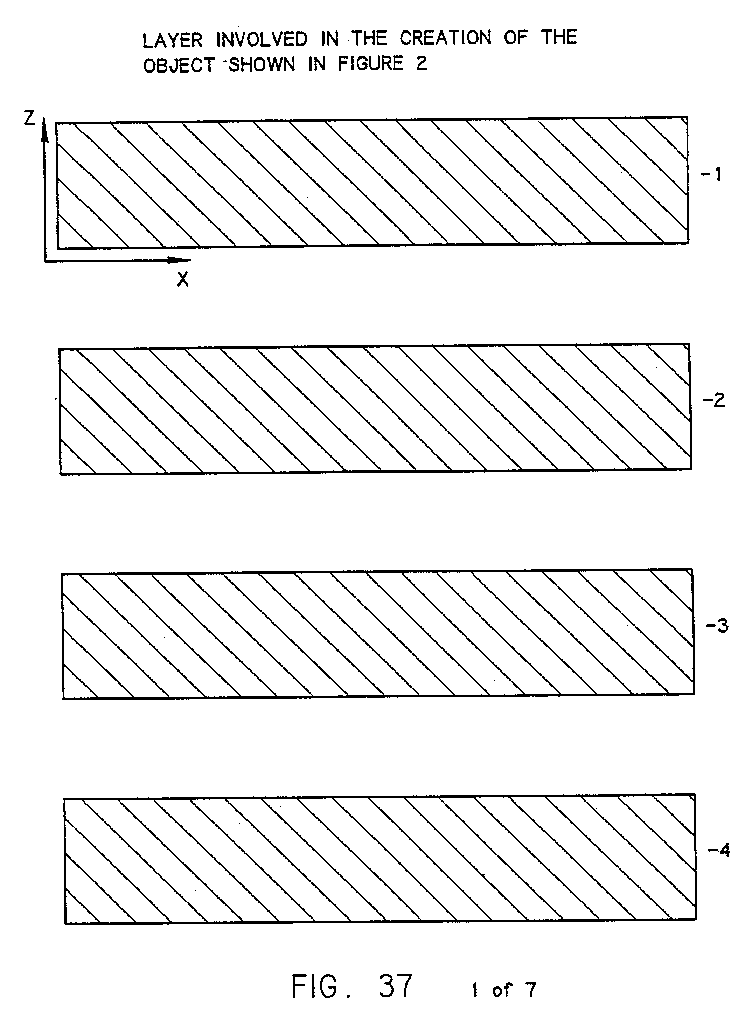

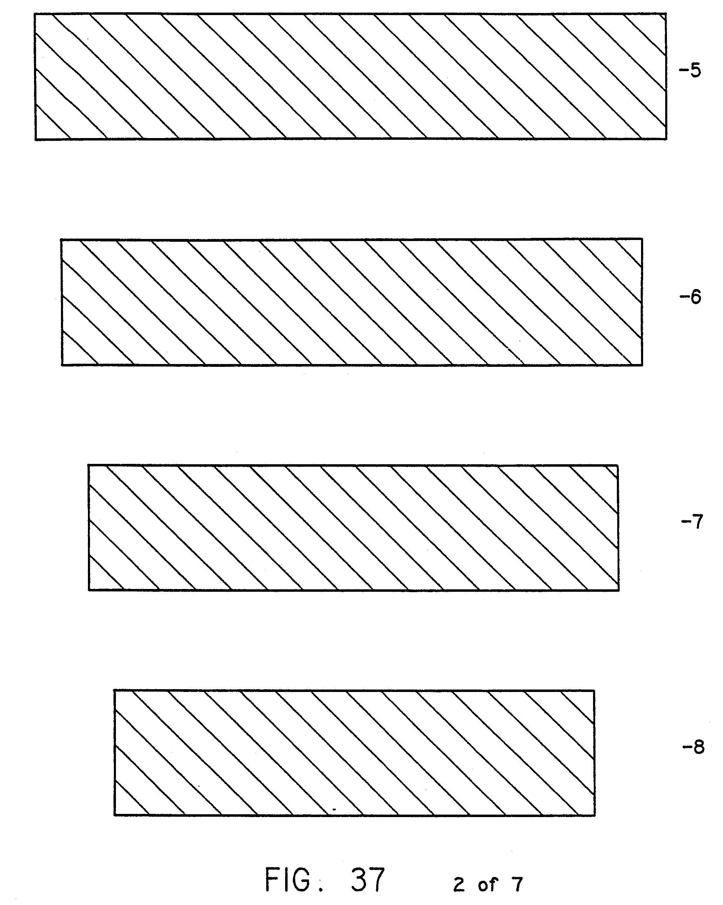

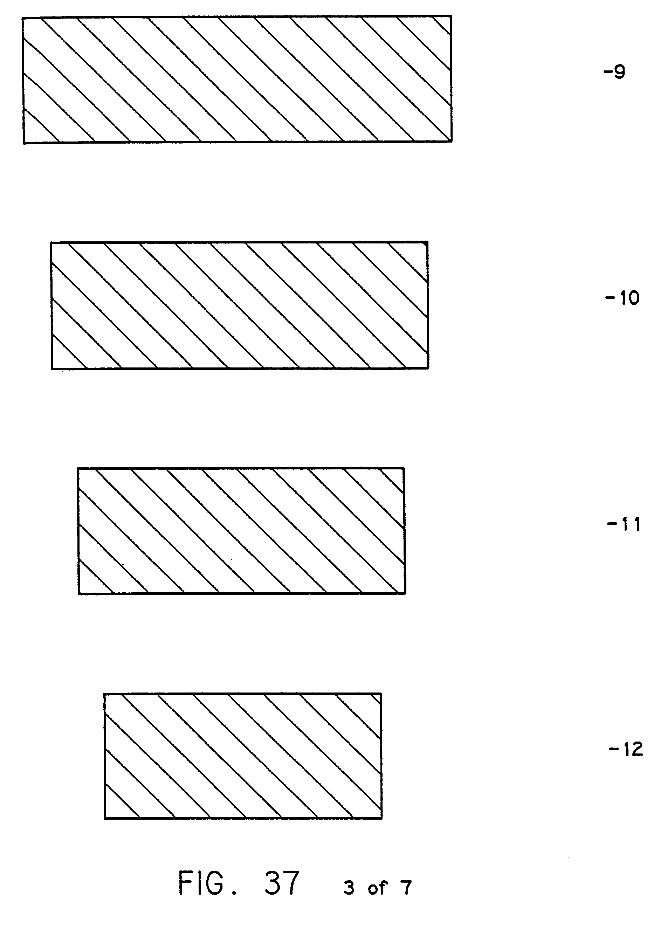

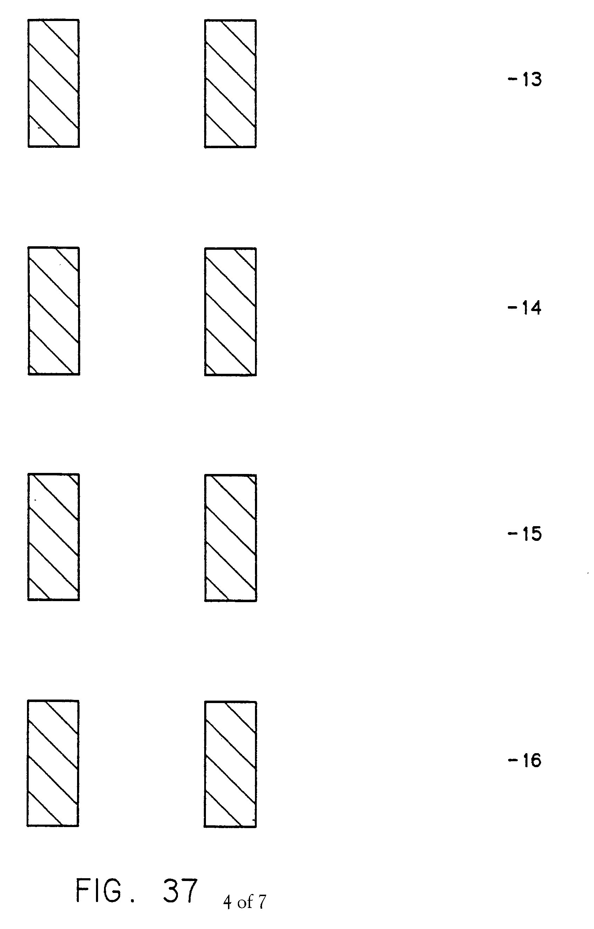

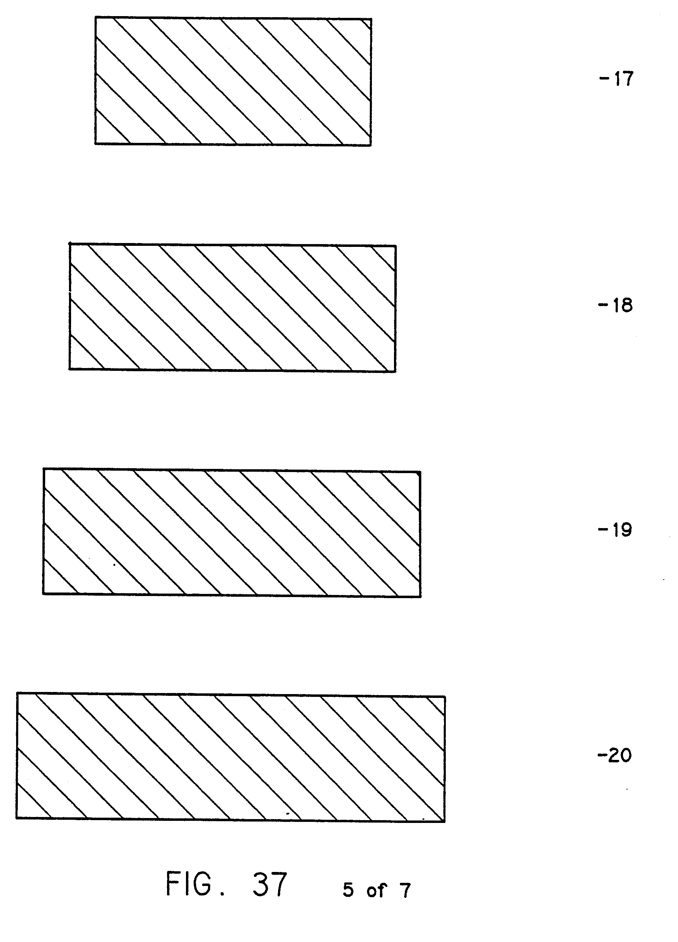

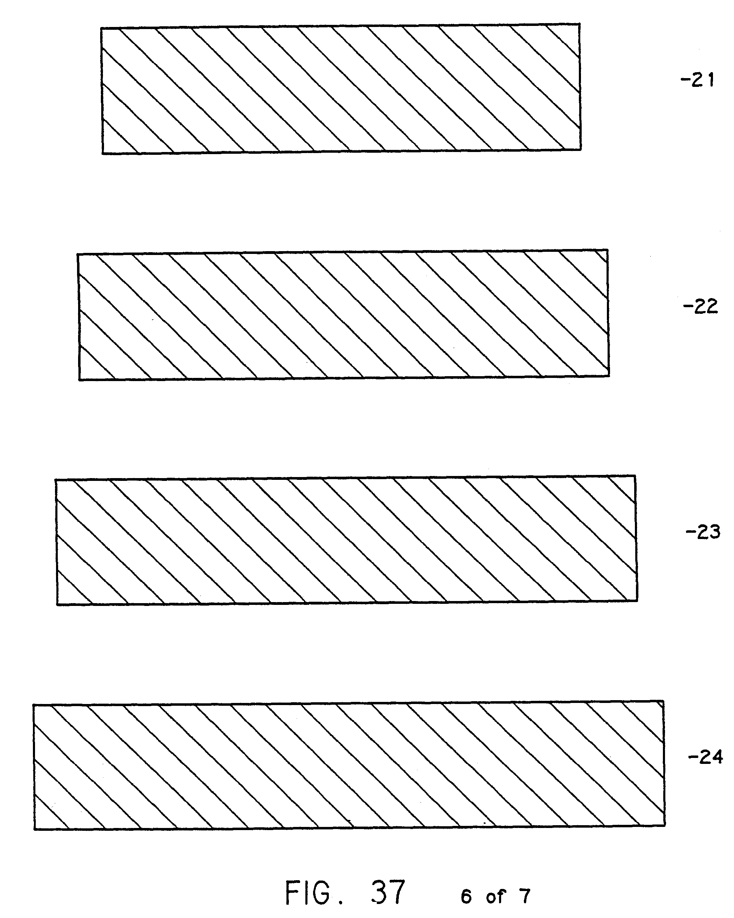

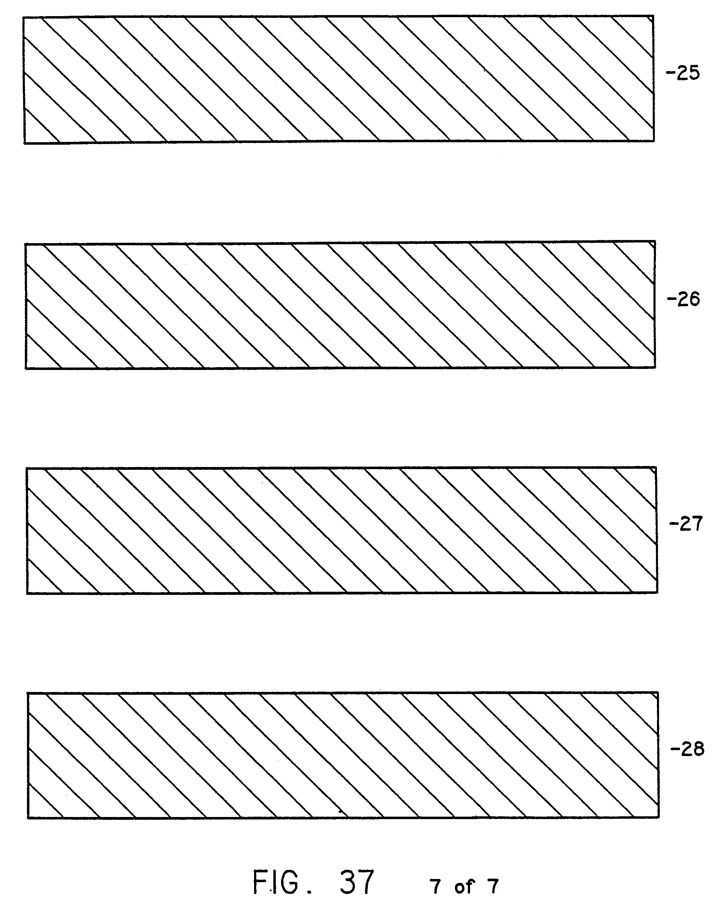

Figs. 37-1 through 37-28 show horizontal views of layers 1-28 used to build the object of Fig. 32.

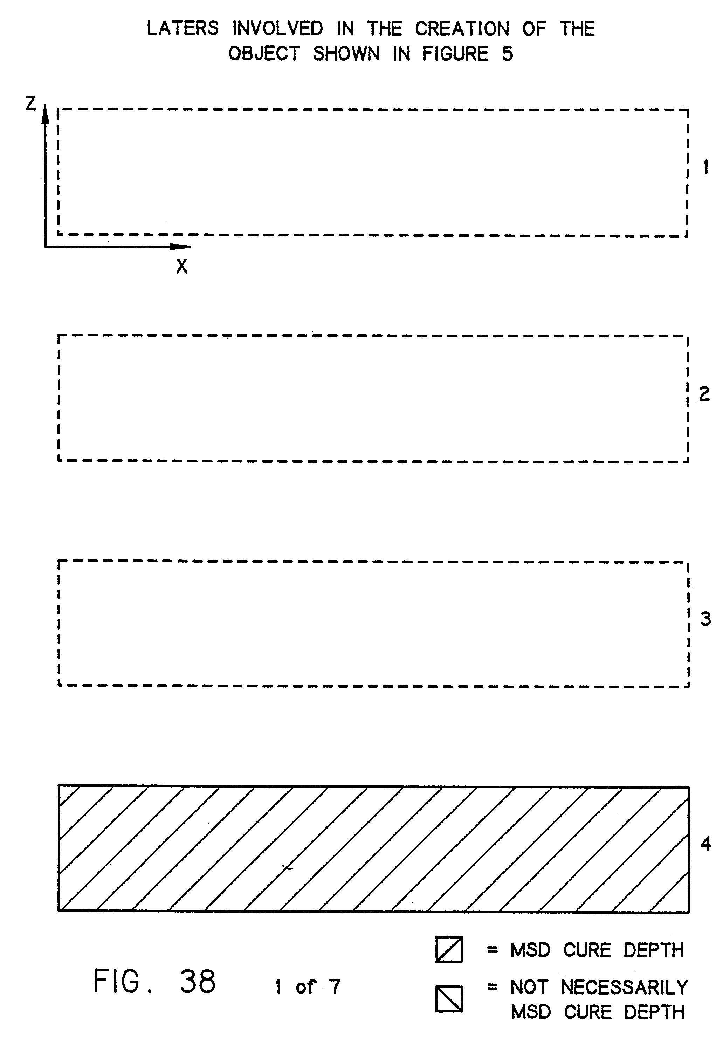

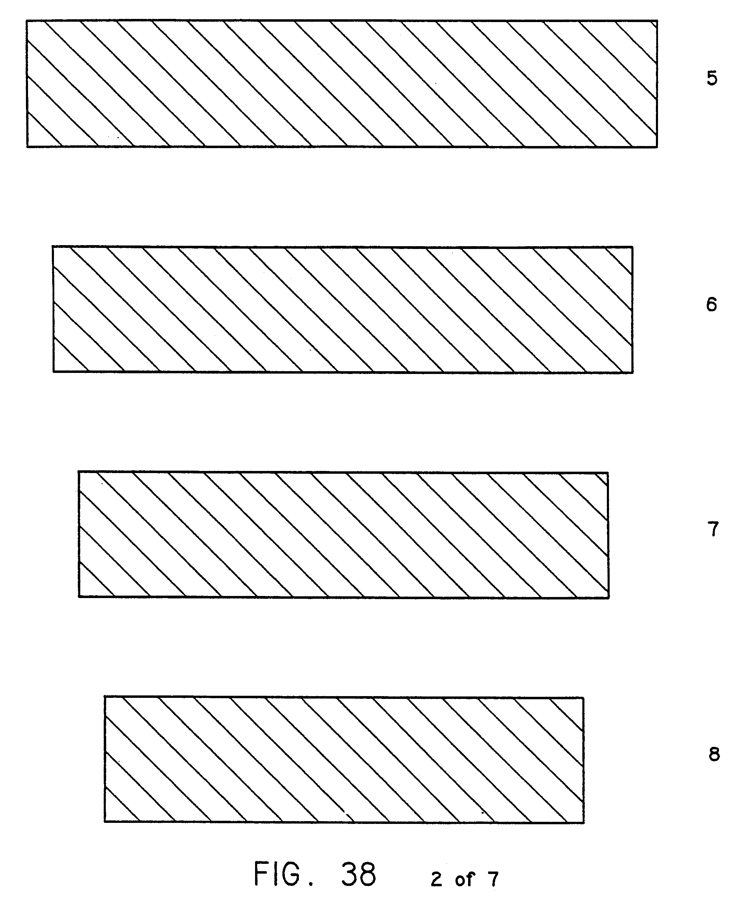

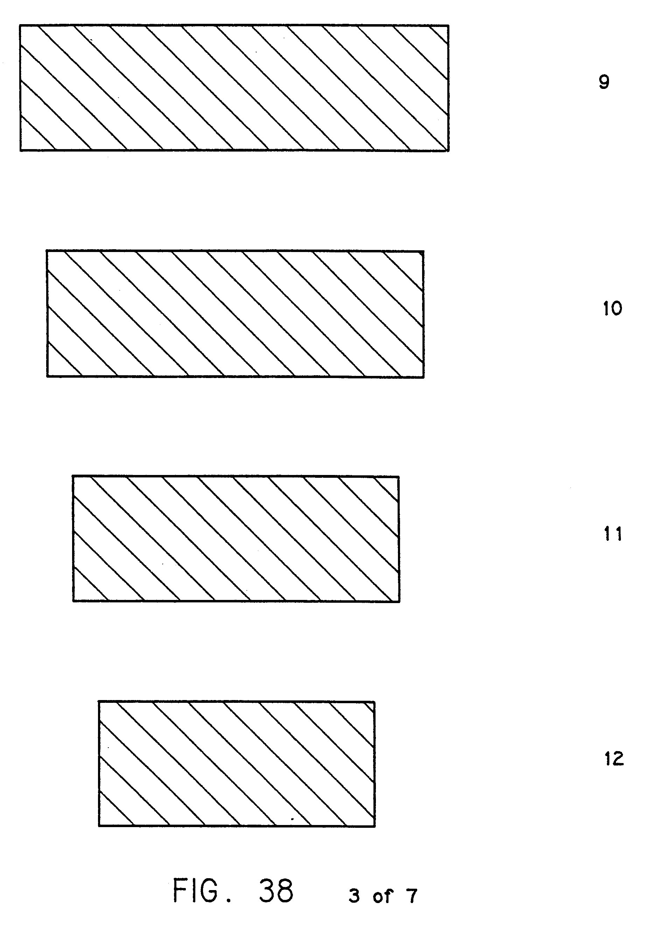

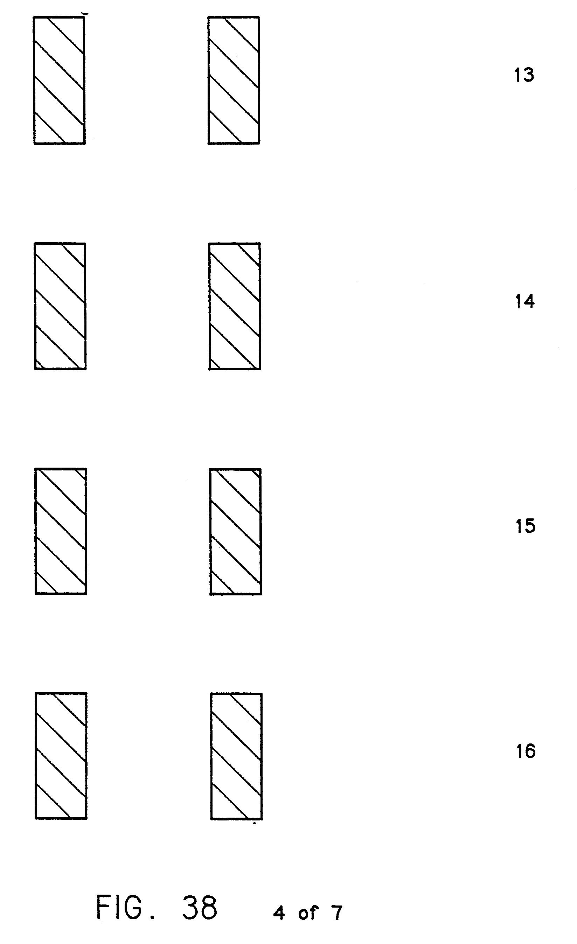

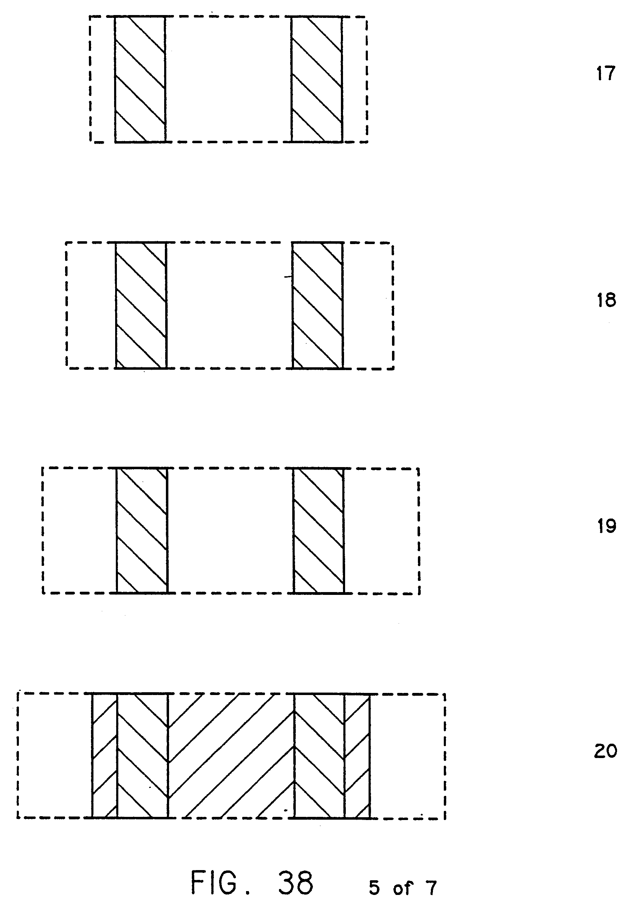

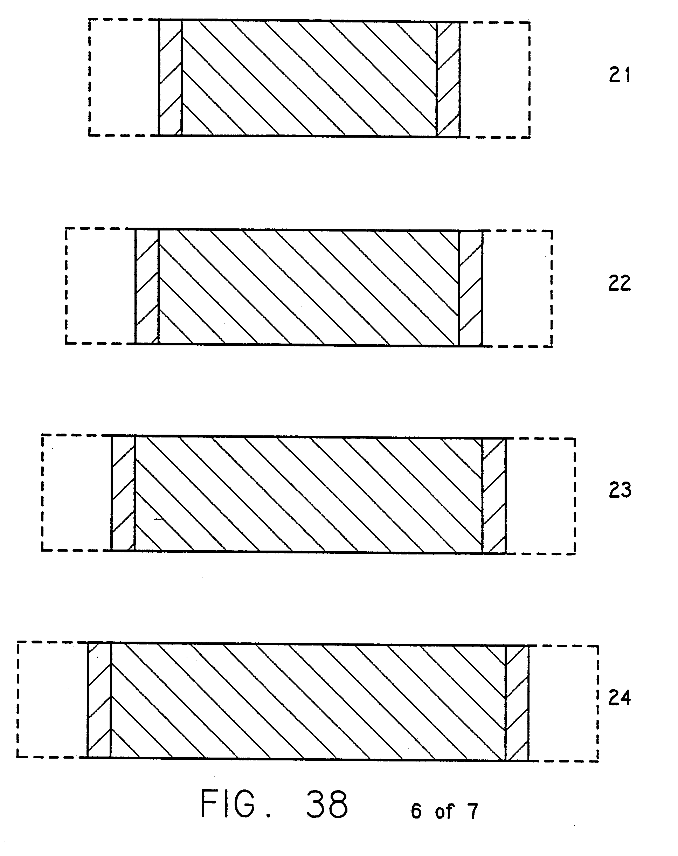

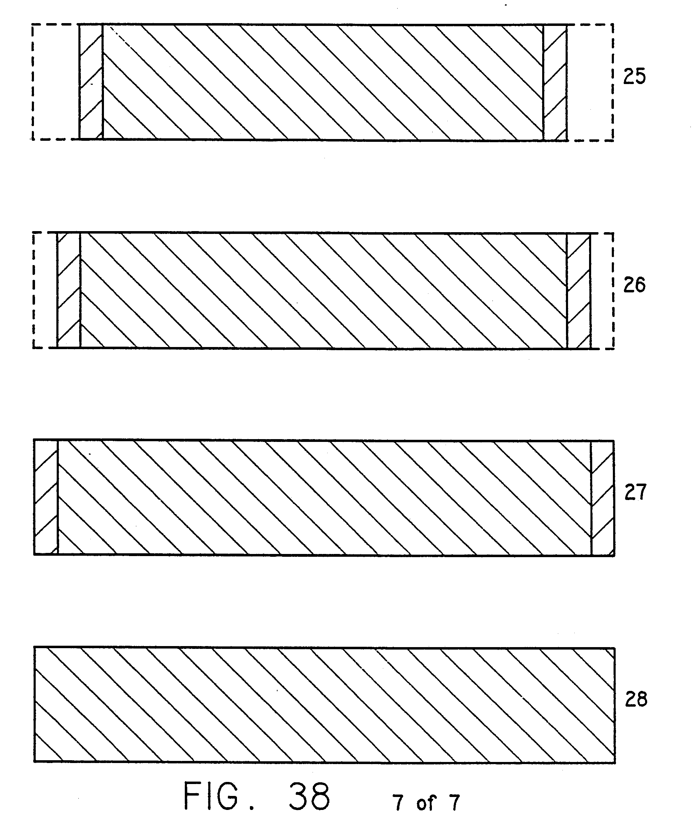

Figs. 38-1 through 38-28 show horizontal views of layers 1-28 used to build the object of Fig. 35. Phantom lines in the Figs. indicate region(s) at which no curing occurs on the layer of the region(s). Shaded lines indicate curing.

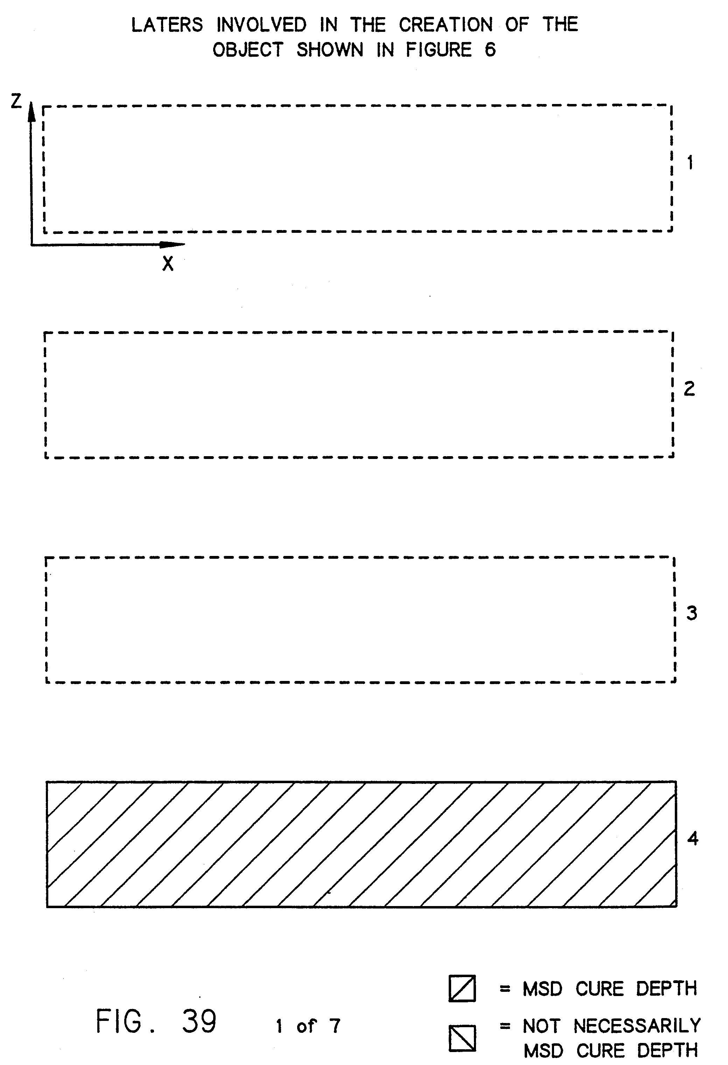

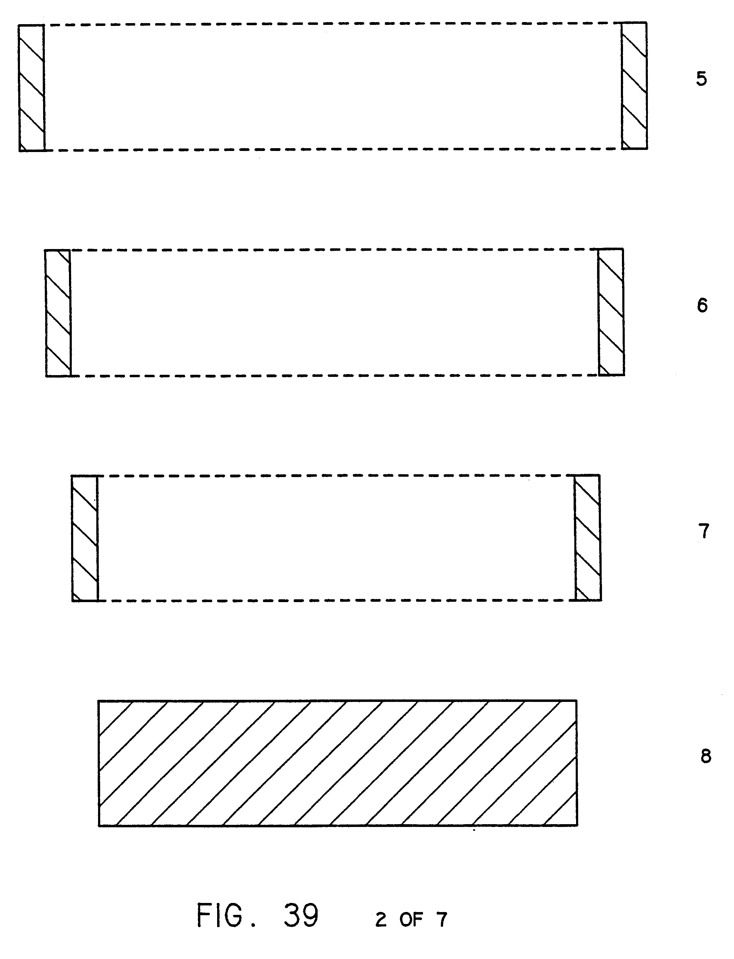

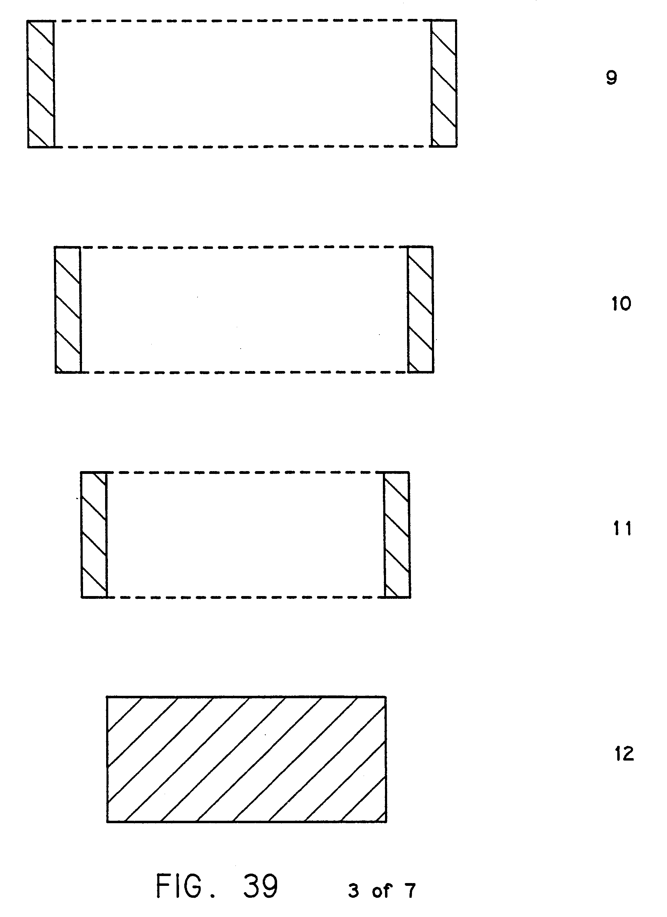

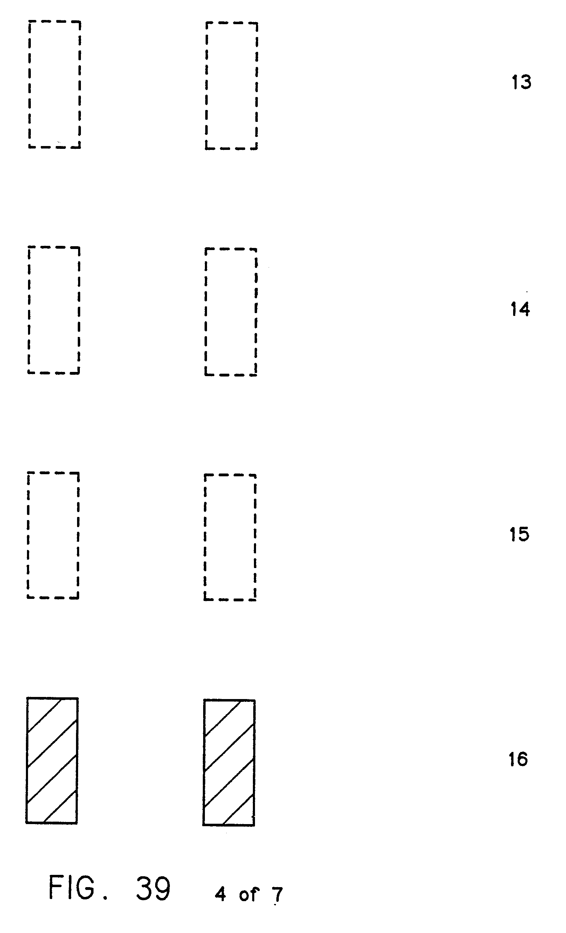

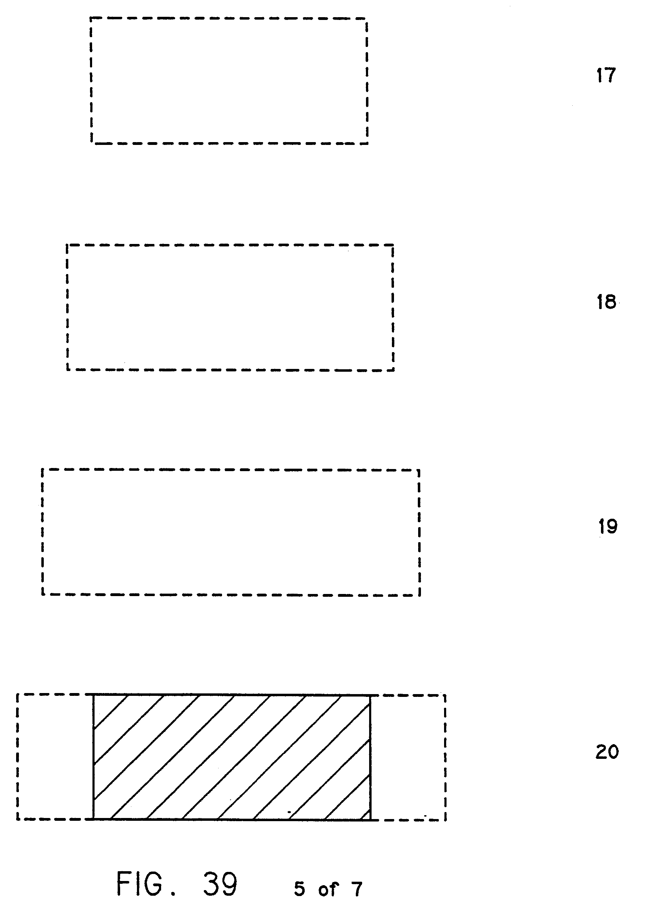

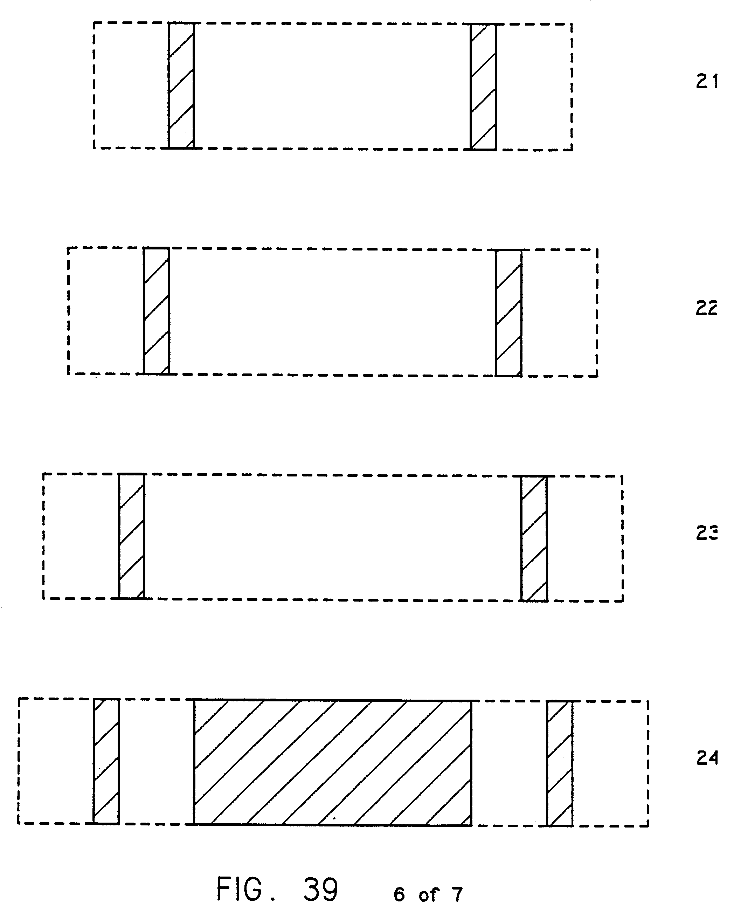

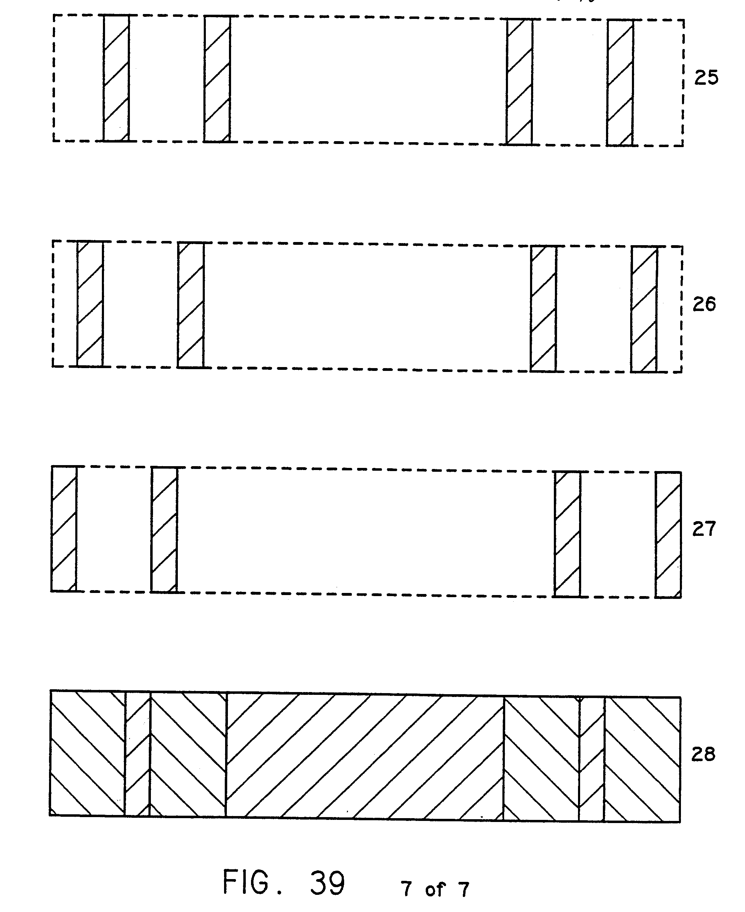

Figs. 39-1 through 39-28 show horizontal views of layers 1-28 used to build the object of Fig. 36.

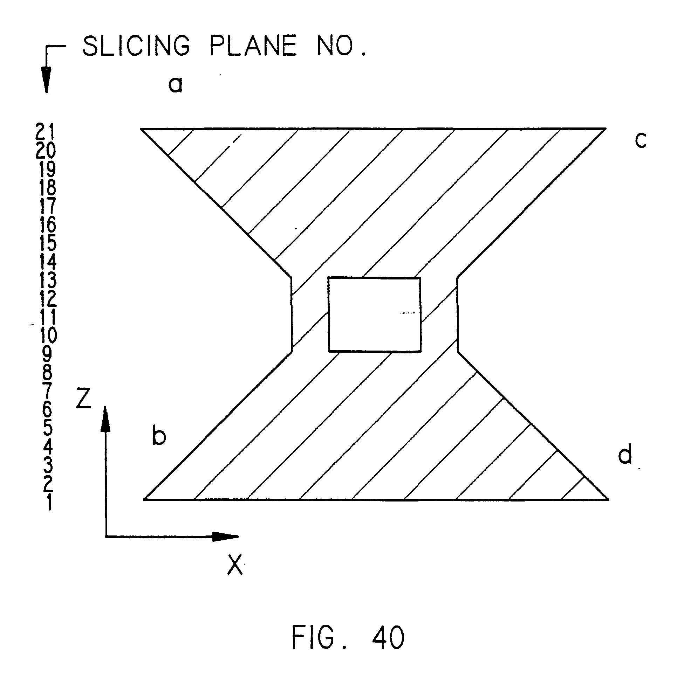

Fig. 40 is a side view of a second object that can be built using stereolithography.

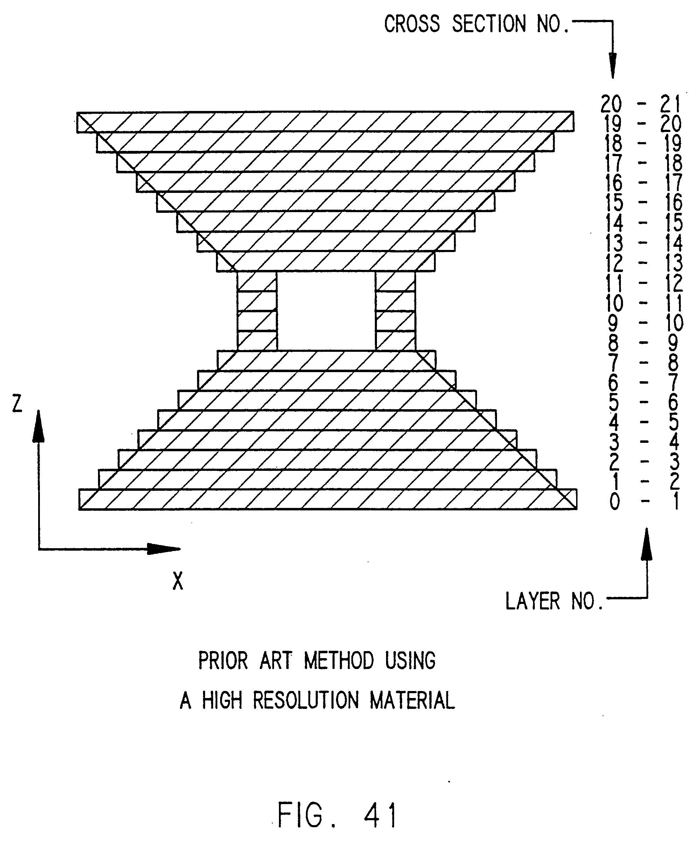

Fig. 41 is a side view of the object of Fig. 40 showing the slices and reproduction of the object by stereolithography using a high resolution material (MSD Layer thickness).

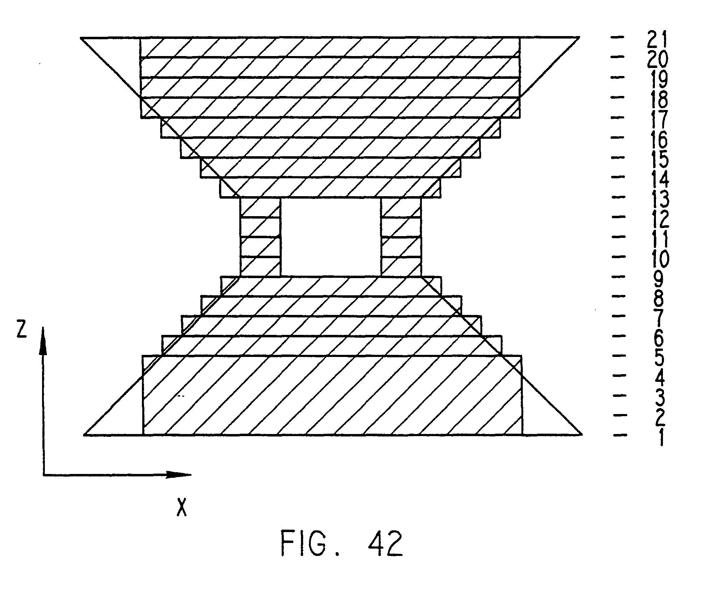

Fig. 42 is a side view of the object of Fig. 40 but now showing the portions that can be built (and the slice planes) with high resolution while using a material that has an MSD 4 times greater than the layer thickness. Also shown are the corner tip portions that require special handling.

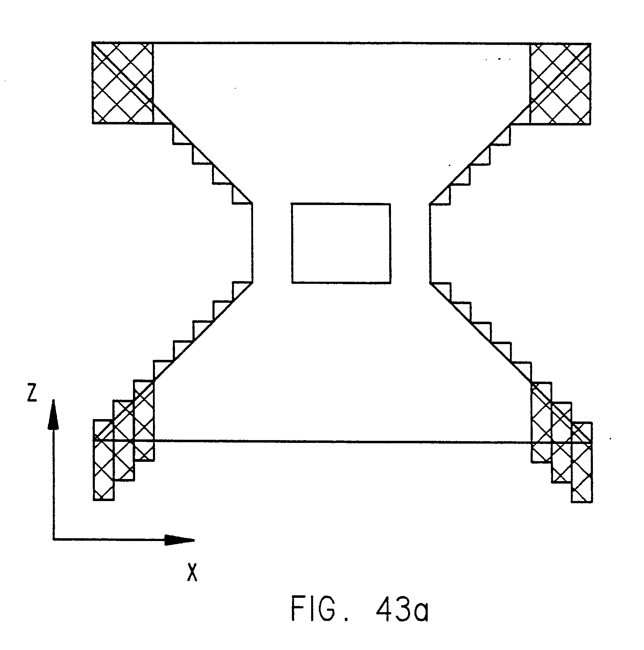

Figs. 43a-3 show the object of Fig. 40 emphasizing several of the various ways that the sections (corner portions) thinner than the MSD can be handled to minimize inaccuracies or to maximize aesthetic appeal.

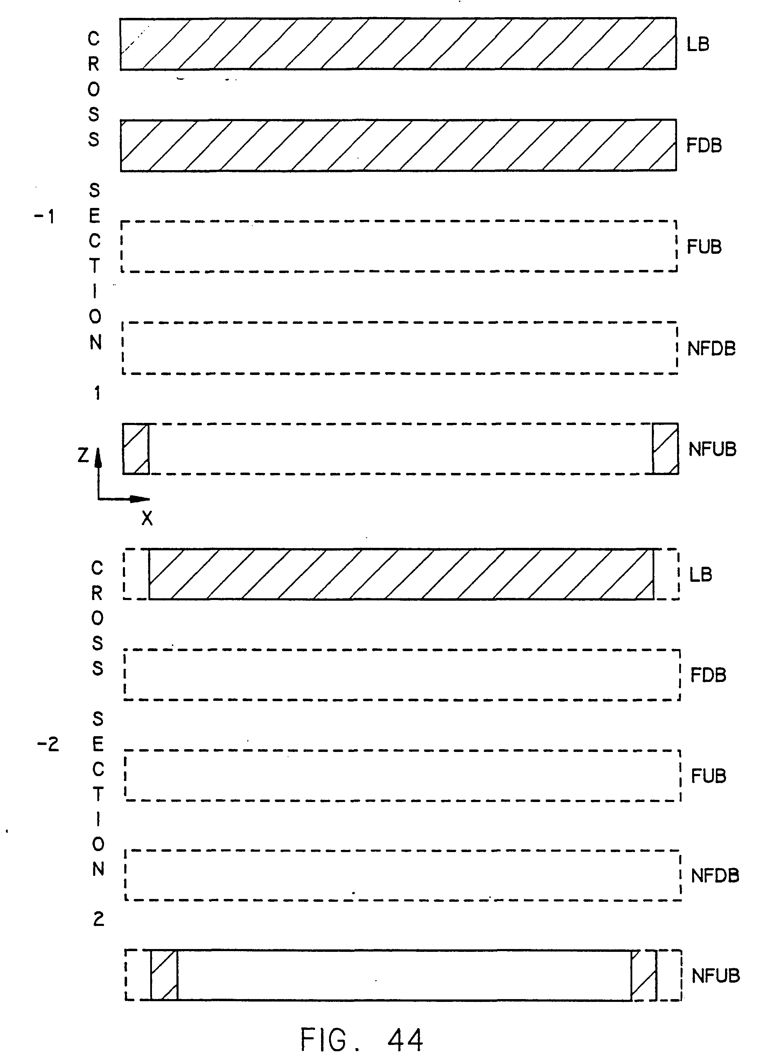

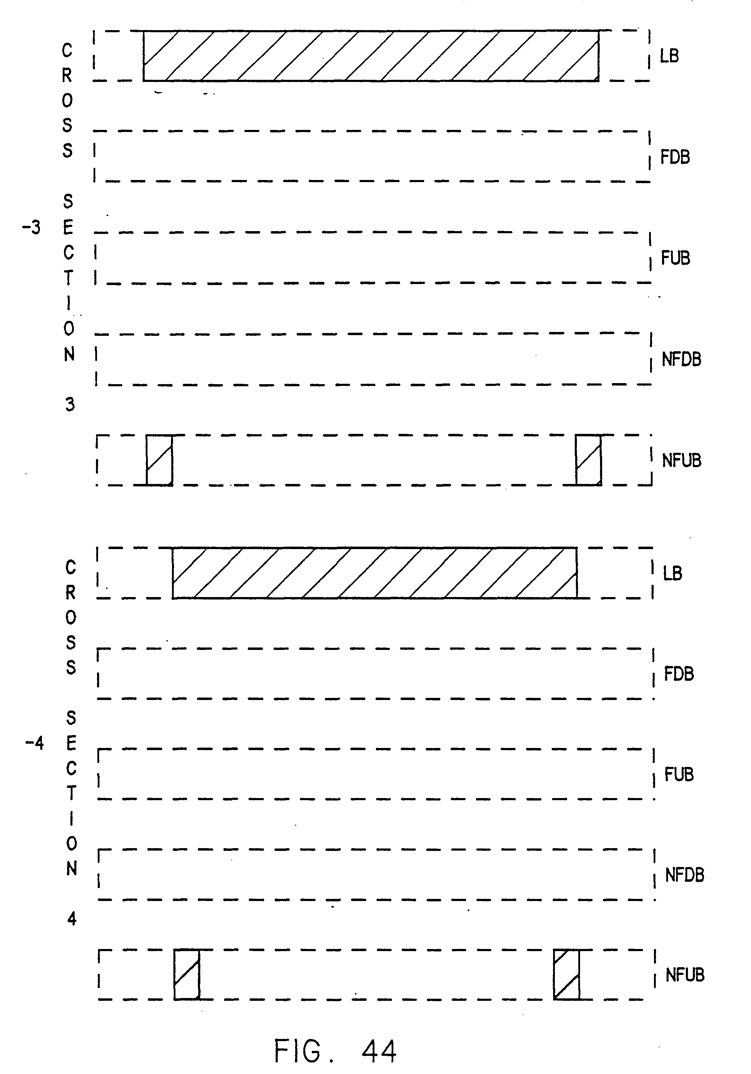

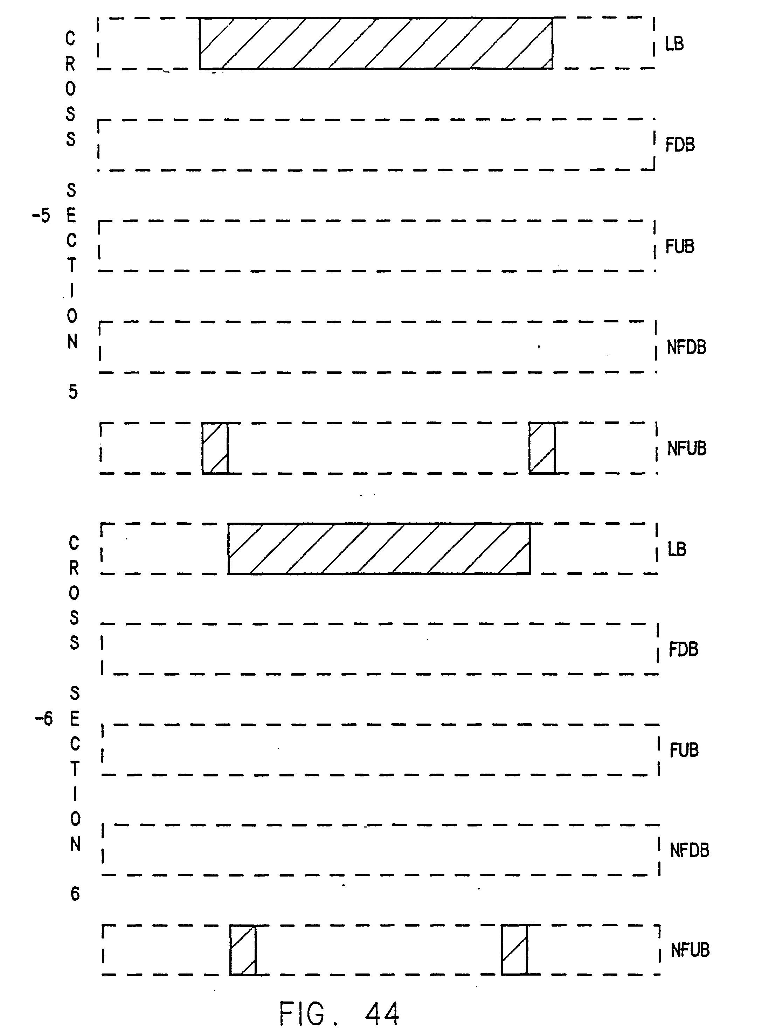

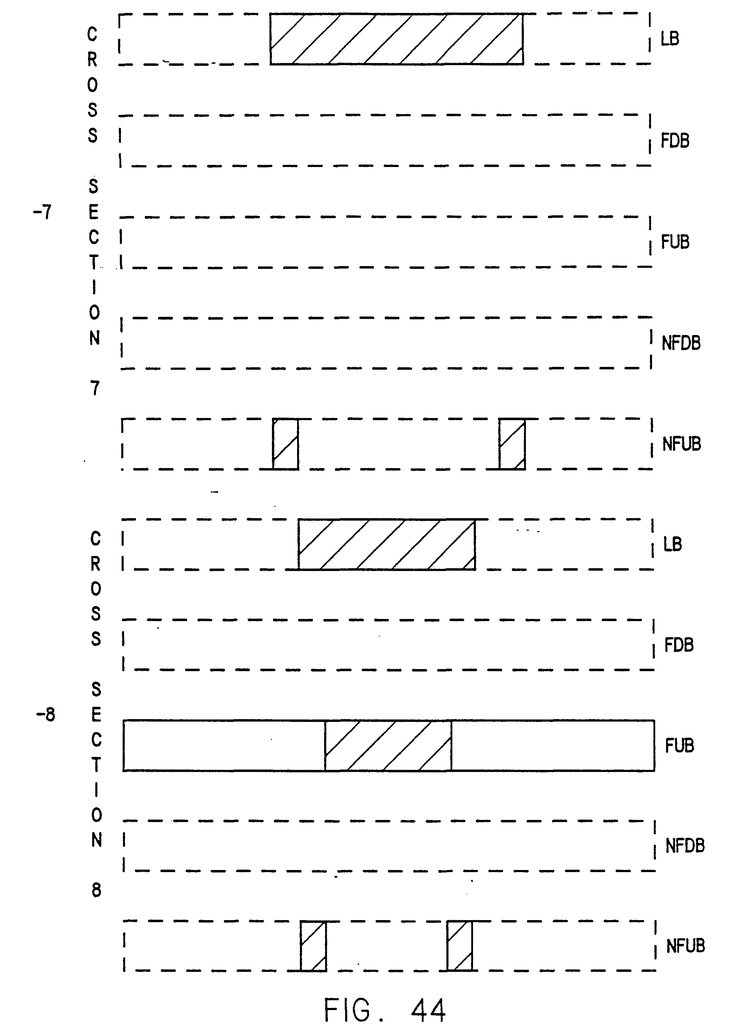

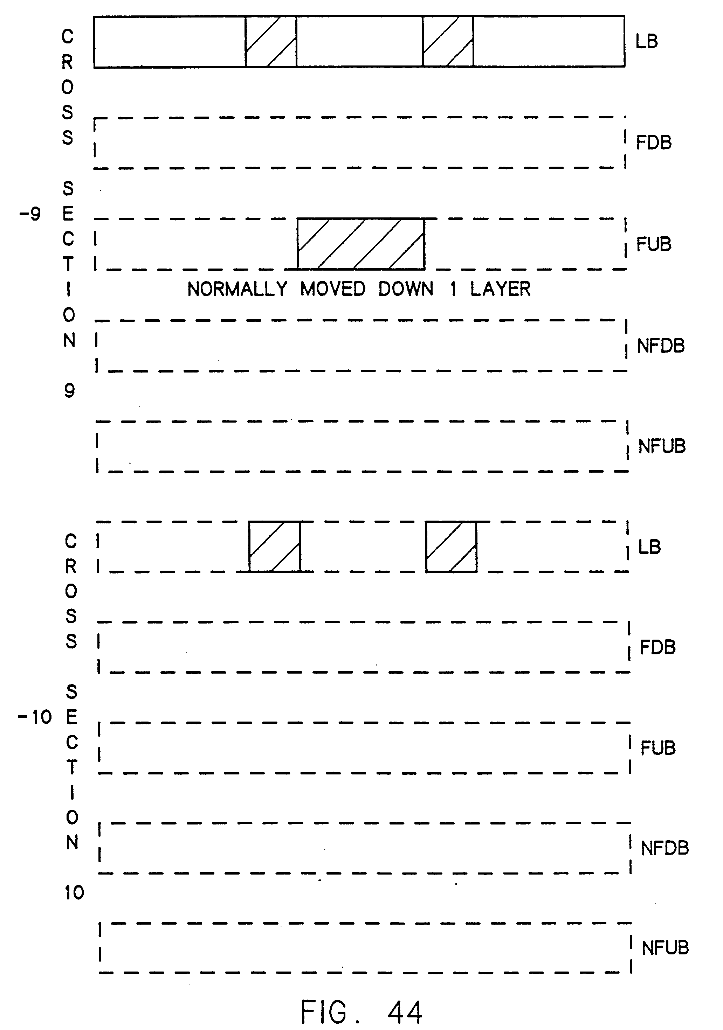

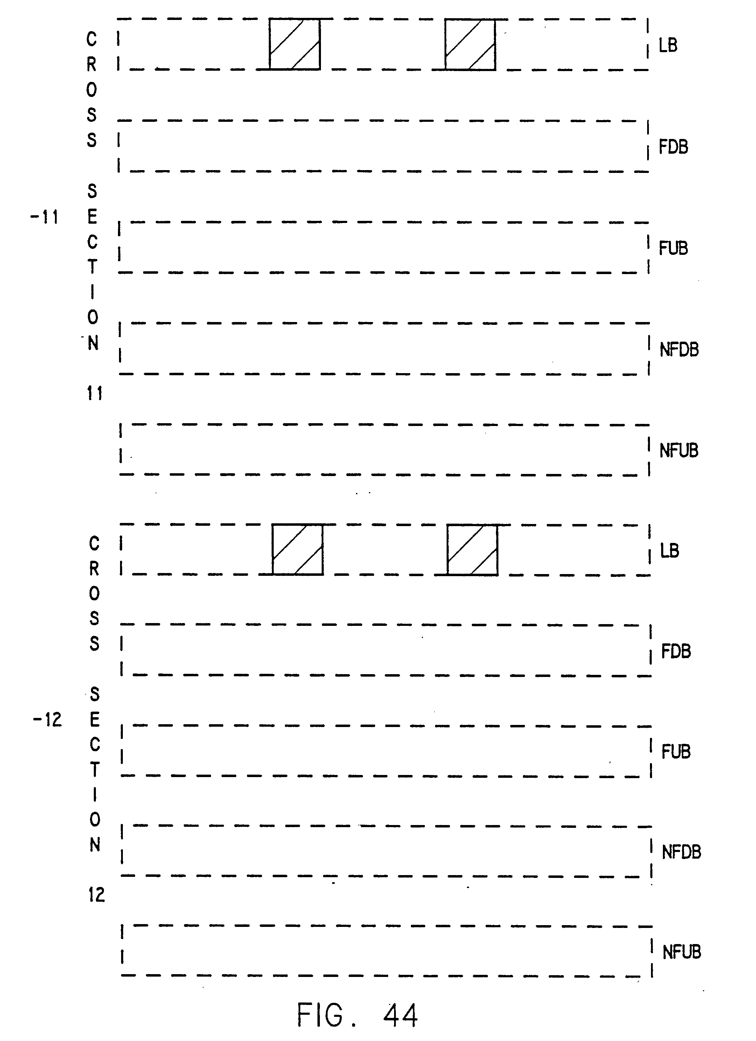

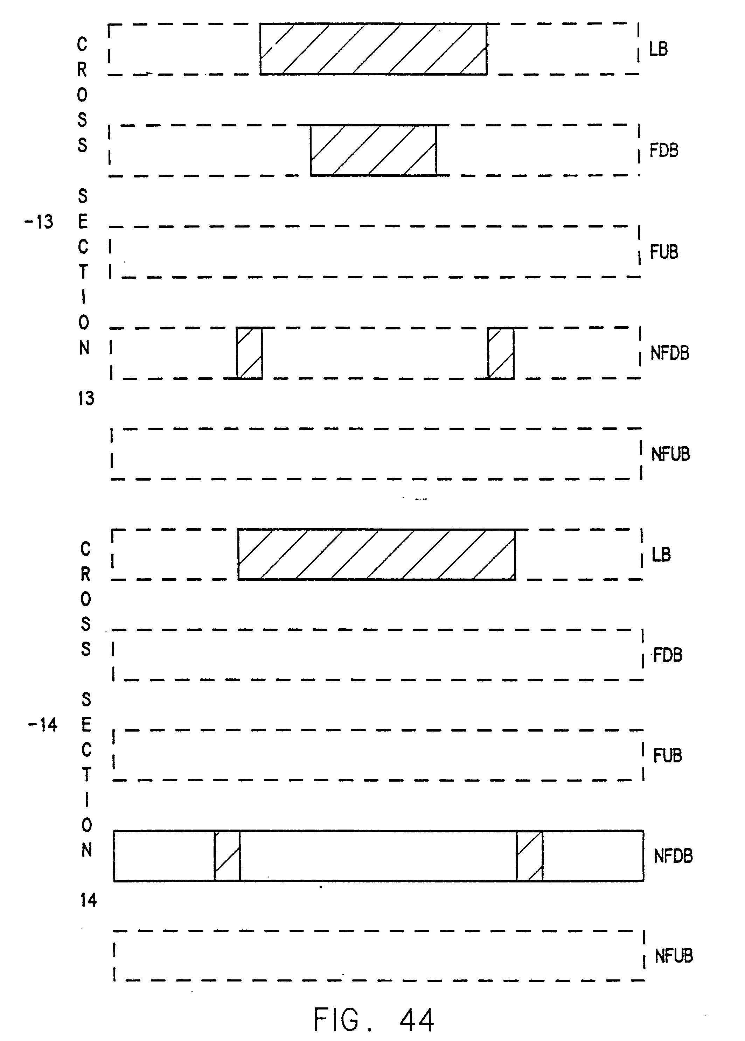

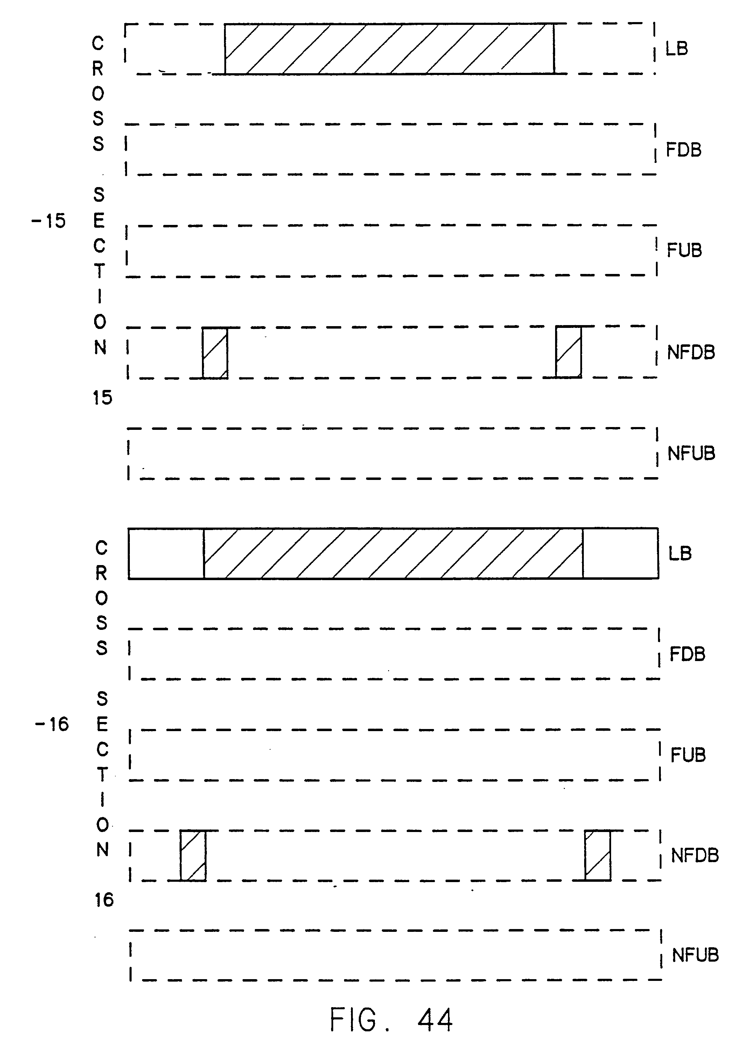

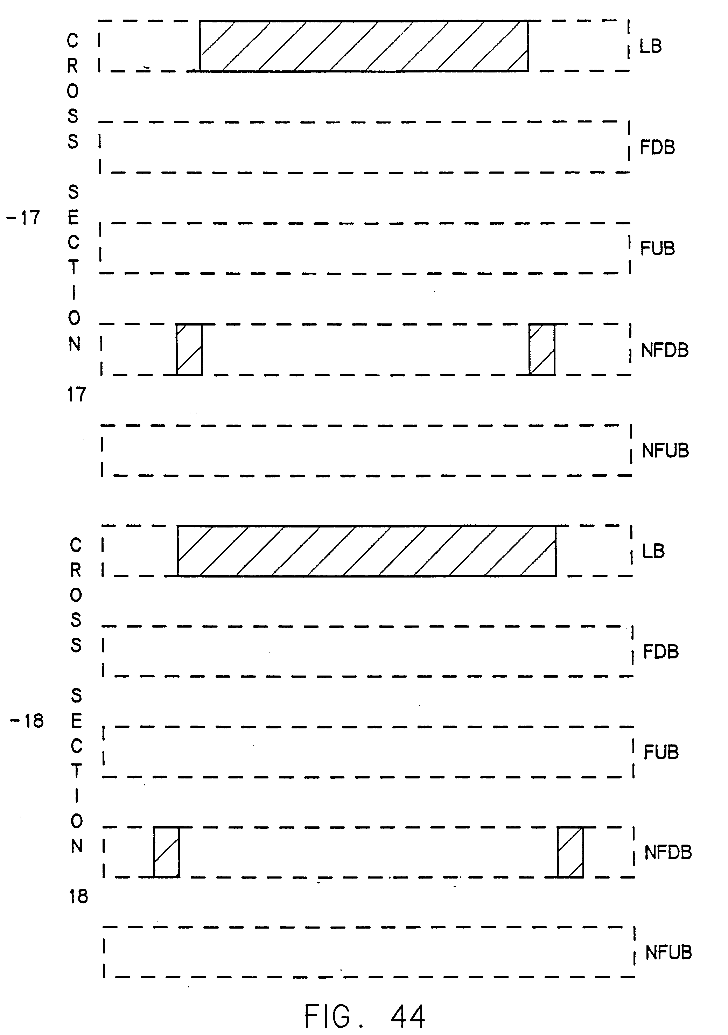

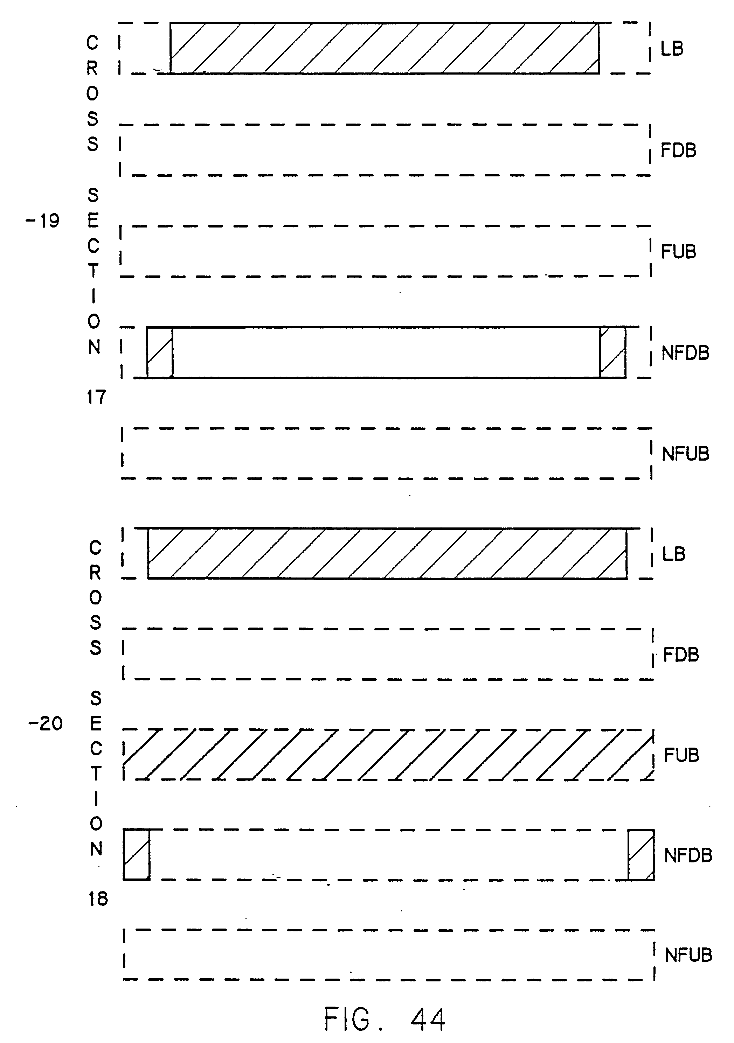

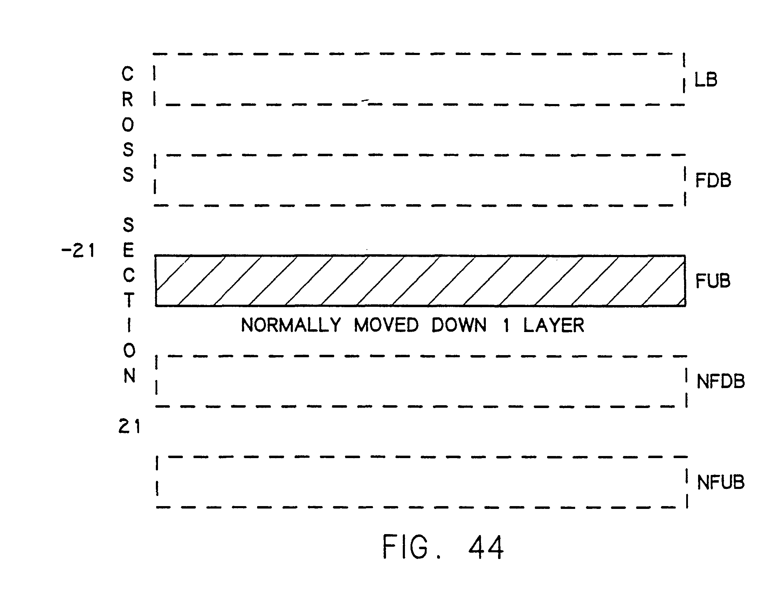

Figs. 44-1 through 44-21 are schematic illustrations of cross-sectional information (compressed along the Y axis) obtained by the application of "Slice Style 1" to the object depicted in Fig. 40 to produce the object of Fig. 41.

Figs. 45 and 46 are flow charts illustrating a basic system for generating three-dimensional objects by means of stereolithography.

## General Introduction

Figs. 45 and 46 illustrate a basic stereolithographic system indicating the steps of forming a three-dimensional object layer-by-layer under the control of a programmed computer and using data representing the object to be built.

Referring now more specifically to Fig. 45 of the drawings, the stereolithographic method is broadly outlined. Step 708 calls for generating of CAD or other data, typically in digital form, representing a three-dimensional object to be formed by the system. This CAD data usually defines surfaces in polygon format, triangles with normals perpendicular to the planes of those triangles, e.g., for slope indications, being presently preferred.

In Step 709, the PHIGS data or its equivalent is converted to a modified data base for driving the stereolithography output system in forming three-dimensional objects. In this regard, information defining the object may be specially processed to reduce stress, curl and distortion, and increase resolution, strength and accuracy of reproduction.

Step 710 in Fig. 45 calls for the generation of individual solid laminae representing cross-sections of a three-dimensional object to be formed. These generated solid lamina may differ from the desired lamina of the three-dimensional object to achieve optimal curl balancing as described in section 3 of WO 92/08200. Step 711 combines the successively formed adjacent laminae to form the desired three-dimensional object which has been programmed into the system for selective curing. Typically, steps 710 and 711 are simultaneously performed during layer formation.

Hence, the stereolithographic system generates three-dimensional objects by creating a cross-sectional pattern of the object to be formed at a selected surface of a building material (e.g., an ultraviolet (UV), visible light, or infrared (IR) curable fluid-like material or the like) capable of altering its physical state in response to appropriate synergistic stimulation such as impinging radiation, electron beam or other particle bombardment, or applied chemicals such as by ink jet or spraying over a mask adjacent the fluid surface. Successive adjacent laminae, substantially representing corresponding successive adjacent cross-sections of the object except as modified according to the instant teachings, are automatically formed and integrated together to substantially provide a step-wise lamina or thin layer buildup of the object, whereby a three-dimensional object is formed and drawn from a substantially planar or sheetlike surface of the medium during the forming process.

Step 712 calls for containing a fluid-like medium capable of solidification in response to prescribed reactive stimulation (solidifying medium). Step 713 calls for application of that stimulation as a graphic pattern, in response to data output from the computer, at a designated surface to form thin, solid, individual layers at that surface, each successive layer representing an adjacent cross-section of a three-dimensional object to be produced. In practice, each lamina will be a thin lamina, but thick enough to be adequately cohesive in forming the cross-section and adhering to the adjacent laminae defining other cross-sections of the object being formed.

Step 714 in Fig. 46 calls for superimposing successive adjacent layers or laminae on each other as they are formed, to integrate the various layers and define the desired three-dimensional object. Normally, as the medium cures and solid material forms to define one lamina, that lamina is moved relatively away from the working surface of the medium and the next lamina is formed in the new layer of medium which replaces the previously formed lamina, so that each successive lamina is superimposed and integral with (by virtue of the adhesive properties of the cured medium) all of the other cross-sectional laminae.

The process of producing such cross-sectional laminae is repeated until the entire three-dimensional object has been formed. The object is then removed and the system is ready to produce another object which may be identical to the previous object or may be an entirely new object formed by changing the program or object data controlling the stereolithographic system.

The UV curable material used in the above-described embodiment of a working stereolithography system is XB5081 stereolithography resin, made by Ciba Geigy of Basal, Switzerland.

The light source for the above-described embodiment of a stereolithography system is typically a helium-cadmium ultraviolet laser emitting 325nM radiation such as the Model 4240-N HeCd Multimode Laser, made by Liconix of Sunnyvale, California.

We can now move on to consider cases where the layer thickness is less than the minimum solidification depth (MSD) of the fluid being solidified.

Section 1: Simultaneous Multiple Layer Curing in Stereolithography

A. The simple case

Data corresponding to an object to be built is sliced with a layer thickness less than or corresponding to the desired vertical resolution. Preferably, but not necessarily, the MSD is an integral multiple of this layer thickness.

In the normal practice of stereolithography the next step would be to build the object based on the created slices with each layer or slice being cured to a depth corresponding to the layer thickness. However, the next step in the implementation of the present invention is based on the fact that we cannot cure- thicknesses of material as thin as the slices (at least unsupported thicknesses). Groups of these slices are compared to determine on which layers various portions of each cross-section will be built. For this comparison the slices are grouped consecutively with each group containing a sufficient number of slices to form a thickness equivalent to the MSD. If the MSD is 40 mils and the layer thickness is 10 mils, each group will contain 4 cross-sections. In the first preferred embodiment of the invention, group 1 contains cross-sections 1, 2, 3, and 4, group 2 contains cross-sections 2, 3, 4, and 5, and group "N" contains cross-sections N, N+1, N+2, N+3.

Turning to the drawings, Fig. 31 shows a side view of an hourglass shaped object that can be built using stereolithography. For simplicity, Fig. 31 shows only one horizontal dimension "X" along with the vertical dimension "Z". The other horizontal dimension extends into the page 1 inch. In total, this drawing represents a rectangular hourglass.

Fig. 32 is a side view of the hourglass or object of Fig. 31 but this view shows the object as reproduced by stereolithography using 10 mil thick layers or cross-sections and a material whose MSD is less than or equal to 10 mils. The layers are designated by one of 4 symbols "." , "x", "+", or "o". The use of these symbols is only to emphasize the distinction between layers. The numbers to the right side of Fig. 32 designates the various layers. There are 28 layers derived from 28 cross-sections of data which are derived from 29 slicing planes. This method of obtaining cross-sectional data is described in WO 89/10256.

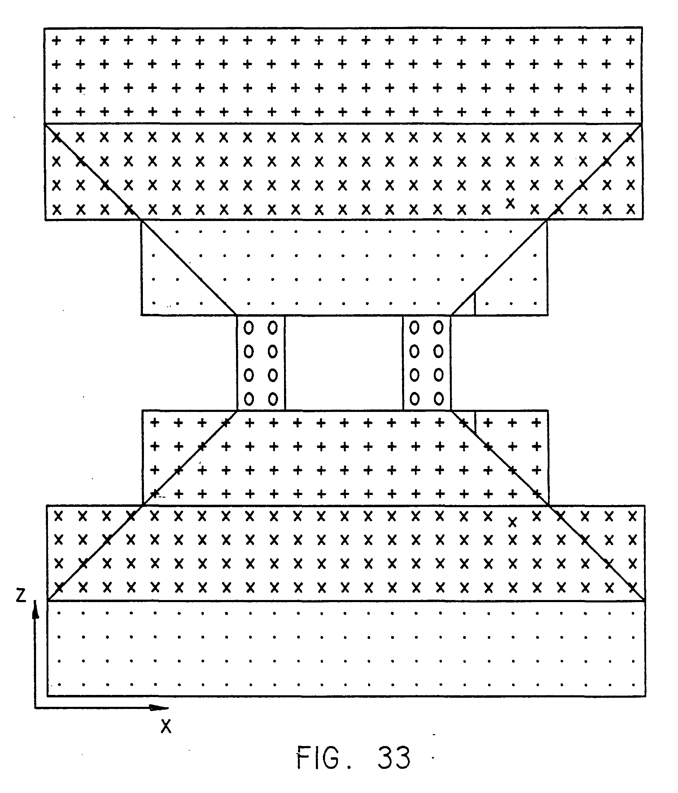

Fig. 33 is similar to Fig. 32 except that instead of 10 mil separation between cross-sections (i.e., 10 mil layer thickness) there is a 40 mil separation. When using a material with an MSD of 40 mils, in the prior art one would have to use 40 mil cross-sections or greater. Therefore this figure represents the best resolution possible with such a material using prior art techniques.

Fig. 34 represents an example of an alternative typical stereolithographic technique intended for achieving high resolution accuracy from a lower resolution material. Fig. 34 shows the object of Fig. 34 again depicted but built with 10 mil cross-sections along with a material having a 40 mil MSD. In the hope of obtaining better resolution using a 40 mil MSD material, one might try to slice the object using finer cross-sections but still solidifying it to a 40 mil cure depth. The result of doing this is shown in the Fig. 34 which illustrates that the steps between layers have been made smaller but that the vertical location of features is grossly inaccurate.

Fig. 35 represents the object of Fig. 32 again but now built using the techniques of the present invention along with 10 mil layers or cross-sections and a material of 40 mil MSD. Comparing Fig. 35 to Fig. 32, we see that we have produced an object while using a low resolution stereolithographic material which has the same degree of accuracy as when a high resolution material was used.

This result of obtaining the same degree of accuracy is not possible in the prior art. It should be noted that all objects cannot be built with this same degree of accuracy while using low resolution (LR) materials. The key to being able to obtain the same or better resolution than what is obtainable with high resolution (HR) materials using typical stereolithography is that the object cannot have vertical features that are thinner than the MSD of the lower resolution material. These features are "too thin". If an object has such vertical features then there will be a corresponding loss of reproduction accuracy. However, this- loss of reproduction accuracy occurs only in the regions of these "too thin" features. Additionally, careful planning can reduce the adverse affect that these deviations have on the part. Techniques for handling such cases are described hereinafter. Included in these techniques are careful selection of the slice axis; building along more than one axis as disclosed in U.S. Patent No. 4,575,330; and post processing by sanding or filling as may be generally required using standard stereolithography anyway.

To illustrate the conceptual details of accomplishing the reproduction depicted in Fig. 35, it is useful to compare the material cured in association with each layer in producing the objects shown in Figs. 32 and 35. Figs. 37 and 38 show these cross-sections and corresponding areas of cure for each of the 28 possible layers. Specifically, Fig. 37 shows the curing regions for each layer of the object of Fig. 32, and Fig. 38 shows the curing regions for each layer of the object of Fig. 35. In the following we refer to curing layer thickness depths of material. In actuality, we may cure somewhat more than this thickness where appropriate to get good adhesion between layers to enable formation of a cohesive three-dimensional object. As with standard stereolithography up-facing and down-facing features when cured must be skinned to prevent leakage if the objects are being built with crosshatch (as described in WO 89/10256).

Keeping in mind the less than or equal to 10 mil MSD for Fig. 32, and the 40 mil MSD of Fig. 35, from Fig. 37 we see for cross-section 1 that a 10 mil layer of material is cured which forms the first layer of the object shown in Fig. 32. However from Fig. 38 we see that no material is cured in association with the first cross-section of the object of Fig. 35 since the minimum cure would have caused the formation of a layer that would have been 30 mils overcured. The second and third cross-sections shown in Figs. 37 and 38 depict similar situations.

The fourth cross-section begins to reveal a key aspect of the practice of the instant invention. In Fig. 37 the fourth cross-section shows the same cure as does the previous 3 layers. The fourth cross-section of Fig. 38 depicts the curing of material to form the first layer of the object depicted in Fig. 35. The material cured in association with this cross-section penetrates down through the previous 3 layers to form a 40 mil thickness of material. This is identical to what we have formed up to this point for the object of Fig. 32. In essence the first 4 cross-sections of Fig. 38 were compared and a decision was made as to the inappropriateness of curing a 40 mil thickness of material in association with the first 3 cross-sections. A corresponding decision was made regarding the appropriateness of curing material in association with the fourth cross-section. We note that any time a region is first cured (therefore not supported by previously cured material) it must be skinned if the object is built with open spaced crosshatch, or else the down-facing features will leak and drain. Additionally, we note that when building a part utilizing the present invention we need only recoat in association with those layers with which curing will be associated.

The fifth cross-section of Fig. 37 cures down an additional 10 mils completing the No. 5 layer of the object of Fig. 32. The fifth cross-section of Fig. 38 is also cured but the ques-tion arises as to the depth of cure. The amount of untransformed material between the last cured cross-section (layer) and the material surface is 10 mils. This entire 10 mil gap (according to this embodiment) is to be filled in by solidifying the intervening material in association with the fifth cross-section. The MSD for the building material is 40 mils and represents the minimum unsupported solidifiable depth. However, when a region is completely supported, the "supported minimum solidification depth" (SMSD) is generally less than the MSD for a particular material. This minimum could conceivably drop from 40 to 10 mils or less. Therefore, the cure depth for this fifth cross-section can be anything greater than the greater of the SMSD or the 10 mil cross-section thickness (plus an overcure amount). The maximum cure depth associated with this fifth cross-section is a depth that does not cause tne bottom surface of the junction between solidified material and unsolidified material to grow down and thereby cause a significant change in accuracy of the lower surface or down-facing feature of the object.

Generally there is an associated change in beam cure width with a change in cure depth. One approach to handling this change in beam cure width is to allow a different beam width compensation factor for boundary types that are cured to different depths, as discussed in Section 1.

For the sixth through thirteenth cross-sections, each successive cross-section is smaller than and sits completely on or over the previous cross-section. The up-facing regions of each of these cross-sections can be cured in a different way from the non-up-facing regions if desired (e.g., up-facing regions skinned while non-up-facing regions only hatched). The explanation applied to the fifth cross-section above therefore also applies to these cross-sections.

The fourteenth through sixteenth cross-sections similarly completely overlap the preceding cross-sections so that no further explanation of these sections is necessary.

Cross-section 17 partially overlaps 16 but there are some regions which form down-facing features. Fig. 37 shows that the entire cross-section is properly cured to a 10 mil depth. The down-facing regions of the cross-section of Fig. 37 may be given different cure parameters than the non-down-facing regions, e.g., down-facing regions skinned and cured to a depth of 10 mils, non-down-facing regions only crosshatched and cured to a depth of 10 mils plus an overcure amount for adhesion.

Fig. 38 shows that only a portion of the layer is cured with the remaining portions uncured due to the inability to cure depths thinner than 40 mils. Hatched areas of Fig. 38 represent cured portions. Phantom lines designate uncured portions of the layer.

Cross-section 18 has ends which are unsupported by the previous cross-section. Fig. 37 shows the whole cross-section being cured to a depth of 10 mils. Referring to Fig. 38, cross-section 18 has a first region that is supported by what was previously cured in association with cross-section 17, a second region that overlaps the portion of 17 that was not cured, as well as a third set of regions that do not overlap any part of cross-section 17. As Fig. 38 shows, only the supported regions are cured in association with this layer or cross-section.

The regions that overlap the portion of 17 that was not previously cured are now 20 mils thick. If we cure these regions at this time, in association with this layer, we would overcure them by 20 mils. Therefore, we do not cure these regions in association with this layer. The regions that do not overlap any portion of 17 should only have a 10 mil cure depth associated with them. We therefore also do not cure them with this cross-section.

Cross-section 19 again has ends which are unsupported by the previous cross-section. Fig. 37 shows the whole cross-section being cured to a depth of 10 mils. Referring to Fig. 38, cross-section 19 has regions that are supported by material that was cured in association with cross-section 18, another set of regions that overlap the portion of 18 that was not cured (actually these regions consist of two parts: one that overlaps uncured areas on both 17 and 18, and the other which only overlaps regions that were not cured in association with cross-section 18), as well as a third set of regions that do not overlap 18 at all.

As Fig. 38 shows, only the supported regions are cured in association with cross-section 19. The region that overlaps the portion of 18 that was not previously cured is now 20 or 30 mils thick depending on whether they also overlap uncured material associated with cross-section 17. If we cure these regions at this time we would overcure them by 10 or 20 mils. Therefore, we do not cure these regions in association with this cross-section. If we cured the regions that do not overlap 18 at all then these regions would be overcured by 30 mils. Therefore, again, we do not cure these regions in association with this cross-section.

Cross-section 20 has ends which are unsupported by the previous cross-section. Again as expected, Fig. 37 shows the whole cross-section being cured to a depth of 10 mils. However, Fig. 38 shows something different about the curing of cross-section 20 as opposed to the curing of the previous 2 cross- sections. Cross-section 20 can be divided into 5 distinct sections:

1) the portion of the cross-section that does not overlap the previous cross-section (required thickness of cure 10 mils),
2) the portion of the cross-section that only overlaps the previous cross-section (required thickness of cure 20 mils),
3) the portion of the cross-section that overlaps the previous 2 cross-sections (required thickness of cure 30 mils),
4) the portion of the cross-section that overlaps the previous 3 cross-sections (required thickness of cure = 40 mils), and
5) the portion of the cross-section that overlaps material cured on the previous layer, i. e., the portion that overlaps the previous 4 or more cross-sections.

From this dissection of the cross-section, it can be seen that we can cure the fourth set of regions to a depth of 40 mils. This will cause the lower surface of solidified material to properly extend downward to the bottom of cross-section 17. As on previous cross-sections, we can also cure the fifth region any appropriate amount since it is supported. It should be noted that in the actual curing process we would generally cure region 5 before region 4 and that region 4 must be skinned if the object is being built with open faced crosshatch. This is generally done when using a liquid medium to advantageously cure regions that are supported by previously cured material, before curing regions that are not supported by previously cured material. This is an advantageous method of curing because it allows each cured region to adhere to previously cured material whether through horizontal or vertical adhesion.

Cross-sections 21 through 24 are very much like cross-section 20 in that each of these cross-sections contain regions requiring 10, 20, 30, and 40 mil cures, along with deeper overlapping regions requiring any appropriate cure depth. Only the regions requiring the 40 mil cure and the supported regions are cured in association with each one of these layers. As expected, each of the cross-sections associated with Fig. 37 are cured in turn to a thickness of 10 mils plus any necessary overcure. Again, with regard to Fig. 38, regions requiring a 40 mil cure also require skinning if building with crosshatch-.

Cross-sections 25 through 27 are again similar to cross-sections 21 through 24 in that they possess regions that can be cured to the proper depth (40 mils), regions that are supported, and regions that cannot be cured (without unacceptable introduction of error) due to the MSD. Again, the cross-sections of Fig. 37 are cured to a 10 mil depth. As usual for Fig. 38, regions of 40 mil depth must be skinned if building with crosshatch. Supported regions can be cured in any appropriate manner. The regions requiring less than a 40 mil cure are not cured in association with this cross-section but instead are cured in association with higher layers or cross-sections when the necessary MSD cure depth can be utilized without the introduction of errors.

Finally, cross-section 28 fully overlaps cross-sections 27, 26, and 25 and is therefore given an appropriate cure to form a cohesive cross-section of solidified material.

The foregoing comparison thus far has demonstrated the typical approach to stereolithography versus a particular embodiment for curing material using the present invention. This comparison, i.e., comparing Figs. 32 and 35, shows that the present method, even using a low resolution material, can generally closely match the high reproduction accuracy previously obtainable only by using a high resolution material.

Figs. 36 and 39 illustrate other embodiments. Comparing Figs. 35 and 36 illustrates that different cure patterns are used to cure material in association with each cross-section. Fig. 39 depicts the various cross-sections of the object of Fig. 36 and what will be cured in association with each layer. Fig. 39 can be compared to Fig. 38 (which illustrates the cross-sections of the object of Fig. 35) to reveal the differences between these two embodiments.

The Complex Case

Embodiments of the present invention embody a combination of two criteria. The first of these is based on the method of curing that will be used to emphasize maximum strength or other "internal curing order" related approaches. By "internal curing order" we refer to a variety of options utilized in the curing of an object that do not affect the external dimensions of the object. Two examples of this first criteria are depicted in Figs. 35 and 36.

The second criteria is based on the approach that will be followed to obtain a desired final object shape when the object has features.smaller (i.e., thinner in the vertical dimension) than the MSD. Examples of this second criteria are shown in Fig. 43a through 43e. This second criteria involves the selection of one of a variety of alternatives for obtaining the most appropriate reproduction of external features when it is impossible to create them as accurately as desired because of the MSD of the material.

The simple case, studied above, had a particular characteristic that made it possible to use a low resolution material along with a high resolution layer thickness to obtain reproductions that are equivalent to those obtainable from the use of a high resolution material and layer thickness. This characteristic is that the object has no vertical solid feature thinner than the MSD. This allowed slicing and curing of features such that inaccuracies in building would not be greater than the chosen layer thickness. It should be noted that most regions of most objects fit into this category. Therefore, a viable embodiment based on objects having no vertical features thinner than the MSD can be developed.

When a particular object to be reproduced has solid vertical features thinner than the MSD, the object can be reoriented for building by redefining the vertical axis of the object, thereby hopefully removing the thinner than MSD features. If the object cannot be reoriented there will be a loss of accuracy in creating these thin features.

This loss of accuracy can be manifested in two ways:

1) Thin features (i.e., features thinner than the MSD designated herein as "<MSD" features) will be made too thick; or

2) Thin features will not be cured and therefore will be completely removed. For clarity and brevity in the following description, thin features are always assumed to be cured. However, in other embodiments user options can be made available so that volume selections can be made so individual <MSD features can be cured to the MSD or not cured at all. This will not solve accuracy related problems as a whole but can certainly be used to de-emphasize them by bringing out the more important features, namely solid volumes or hollow volumes. Additionally, if only a few regions of a part or object are over cured or under cured due to MSD limitations, minor post processing can generally be done to sand off or fill regions as needed.

Fig. 40 depicts a side view of another object that can be reproduced using stereolithography. This object has features a, b, c, and d which form thin vertical features. In building the object using typical conventional stereolithographic techniques, on a layer by layer basis, these features will naturally be removed or be formed to a thickness greater than or equal to the minimum vertical resolution (layer thickness) that the part is being reproduced with.

Fig. 41 depicts the prior art method of reproduction of the object of Fig. 40 using a high resolution layer thickness (e.g., 10 mils) and a high resolution material (MSD 10 mils).

Fig. 42 depicts the same object as reproduced using the present invention in combination with a high resolution layer thickness and a low resolution material (MSD = 4 times the layer thickness, e.g., 40 mils). This figure depicts an embodiment where the second criteria discussed above was chosen such that all object features thinner than the MSD were not formed.

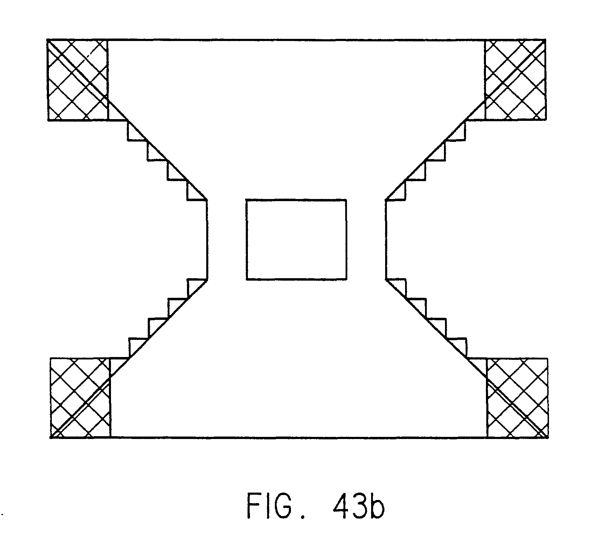

Figs. 43a and 43b depict examples of several other embodiments where the other selections of criteria 2 are made. Fig. 43a depicts the reproduction of the object where priority is given to up-facing features. In other words, if a region is thinner than the MSD (i.e. too thin), material in the region will be cured in such away as to place the up-facing features in the positions where they would occur if a higher resolution material were being used. Correspondingly, the down-facing features will necessarily be cured to a depth below the level on which they would be formed when building with a higher resolution material. This embodiment is referred to as "up-facing priority".

Fig. 43b depicts an embodiment where flat features are given priority thereby increasing aesthetic appeal of the object in some circumstances. The down-facing flat features and up-facing flat features are cured so that they are formed at the same position they would be formed at if a higher resolution material were being used. If regions exist that are both up- and down-facing so that both up- and down-facing flat features cannot be simultaneously cured to the desired level, the placement of down-facing flat features will dominate. The non-flat, sloped, features are pushed up or down. Therefore, they are formed above or below the level they would be formed at if the object were built using a higher resolution material. If two non-flat features oppose each other in a region that is thinner than the MSD, the features can be shifted proportionally according to the slopes of their upper and lower surfaces. Alternatively, the upper or lower surface may be placed at the position it would be formed at if a higher resolution material were being used. Fig. 43b accordingly illustrates a "flat priority/down-facing dominate" embodiment.

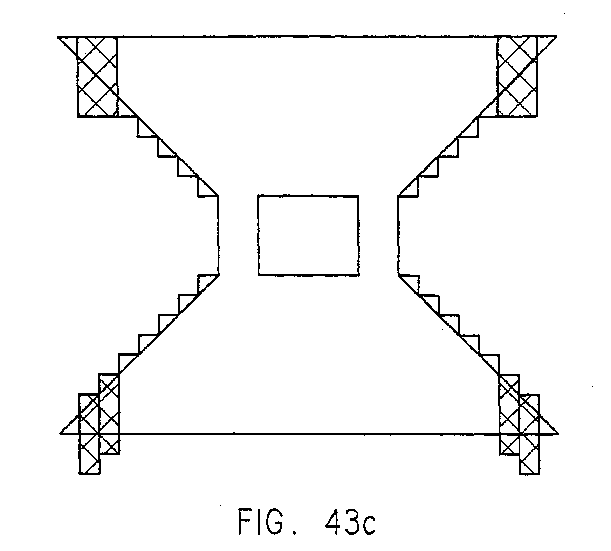

Fig. 43c depicts an embodiment where features thinner than 1/2 of the MSD are not formed along with priority being given to up-facing features.

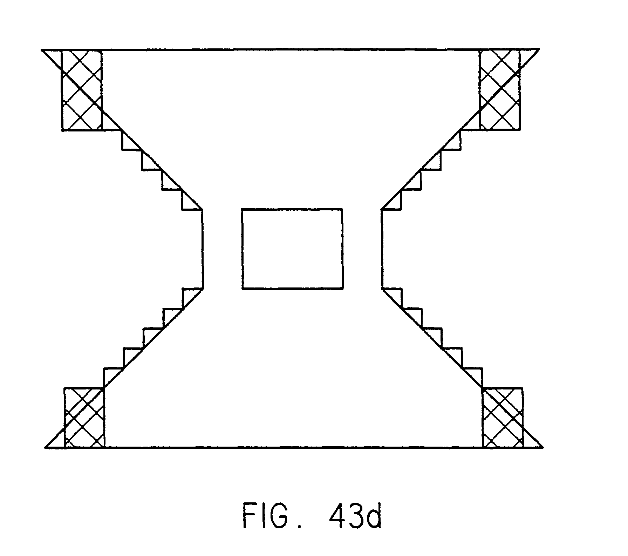

Fig. 43d depicts an embodiment where features thinner than 1/2 of the MSD are not formed along with priority being given to flat features.

Of course, the "1/2" parameter in the embodiments of Figs. 43c and 43d can be varied to any other fraction or percentage of the MSD.

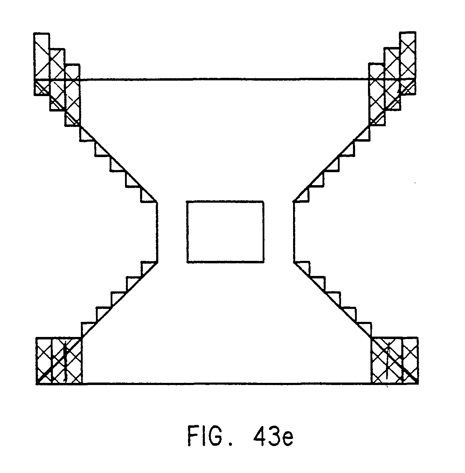

Fig. 43e depicts an embodiment where down-facing features are given priority. The down-facing features are cured so that they are formed at the same position they would be formed at if a higher resolution material were being used. In contrast to the embodiment of Fig. 43a, the up-facing features of Fig. 43e are pushed up above the positions they would actually be formed at if a higher resolution material were being used.

An Up-Facing Priority Embodiment

The following description sets forth a first preferred embodiment for obtaining the necessary information associated with each layer. This embodiment is based on the terminology and processing techniques of the Slice program as described in WO 89/10256.

This first preferred embodiment is based on the criteria that curing of features will occur in such of a way as to give priority to up-facing features (i. e., the second criteria discussed above). Therefore this embodiment is similar to the approach described in terms of Fig. 43a (up-facing priority). This criteria requires that boundary (and fill) information will be output on each cross-section as it is needed for proper placement and cure of up-facing features. If a region of a cross-section does not contain up-facing features, the region may or may not be solidified in association with the current layer. The layer on which the curing of a non-up-facing feature will occur depends on the MSD, the depth that solid extends below the region, and on strength and buildability criteria discussed above (first criteria). Up-facing features will be cured at their proper locations even if this causes the down-facing features to be cured too deep. The object will come out with the proper dimensions except where vertical features become thinner than the MSD and in that case the down-facing features will be inaccurate due to the extra cure.

In implementing the building method of the present embodiment (shown in Fig. 43a) we need to cure certain areas on each layer:

1) All areas of FUB (i.e., flat up-facing boundary), including placing of down-facing skin in appropriate regions;
2) All areas of NFUB (i.e., near-flat up-facing boundary), including placing of down-facing skin in appropriate regions;
3) All areas that are N layers thick including the placement of down-facing skin on these layers, where N equals the minimum solidification depth divided by the layer thickness (N = MSD/ZS). For example if the MSD is 40 mils and ZS is 10 mils then N equals 4; and
4) All areas that are greater then N layers in thickness.

Several methods for practicing this invention are possible. We could use operations such as comparing the areas on a pixel by pixel basis creating a net region of pixels indicating the interior of solid regions of a cross-section and those indicating net hollow regions and then creating boundaries at the border of regions where pixels are in one state versus the other. Another approach is to use the techniques described in Section 2. In Section 2 a method for determining net boundaries is based on the comparison of boundaries from different layers. The technique described in Section 2 may be applied directly to the present invention.

An object of the embodiment being exemplified is to reproduce a part as accurately as possible using a Style 1 reproduction method described in WO 89/10256 and in Section 2. Style 1 is the designation given to the reproduction of an object that is based on discontinuities between cross-sections resulting in the oversizing of the X and Y dimensions of the object. This method allows the reproduction of a large class of objects which can be post processed, after formation, by sanding off the appropriate discontinuities to the point that they disappear. At the point of discontinuity disappearance, the part is complete and represents a highly accurate reproduction of the object.

We consider the object to be conceptually sliced into a plurality of layers with each layer representing a structural portion of the object. In terms of the Slice program described in WO 89/10256, the structural portion of each layer comprises the area enclosed within the boundaries of the LB and NFDB. These combined boundary types are called the "Initial Cross-Section Boundaries" (ISCBS). The other boundaries define regions that need to be filled or skinned because they form up-facing or down-facing surfaces of the object but they do not form structure. That is, each initial slice cross-section (area contained within the Initial Cross-Section Boundaries) contains the necessary boundary information to form a layer of structure (if cured to one layer thickness) that will result in proper oversized X and Y dimensions. This oversizing is such that if appropriate removal of material along the edges of the part is done between the intersections of the present layer with the proceeding and succeeding layers, the layer of structure produced will match the original computer representation of the object accurately. This includes appropriate removal of discontinuities between layers as well as appropriate removal of material that was solidified so that hollow volumes were filled in.

Another desirable method of building, Slice Style 3, relates to the building of an object that is undersized in the X and Y dimensions. In the case of Style 3 the discontinuities between layers as well as regions that collapsed to zero thickness are filled in during post processing.

Additional styles of building are disclosed in WO 89/10256 as well as in Section 2.

We now describe generally the major steps involved in the first preferred embodiment (an up-facing embodiment). This description assumes that the MSD of the chosen material is N times as large as the chosen layer thickness.

The preferred materials and sources of synergistic stimulation (solidifying medium) for utilization in practising the present invention depend on the layer thickness that will be used, the level of MSD that can be tolerated, and the accuracy of reproduction desired. A preferred material is XB 5081, manufactured by Ciba Geigy of Basel, Switzerland, which has an MSD of approximately 5 to 8 mils when used with a HeCd laser emitting 325 nm radiation. Therefore, using the prior art teachings of stereolithography, this material can be used to make high resolution parts of accuracy of 5 to 8 mils in vertical thickness (when only considering the sources of error addressed in the instant 15 invention). This same material, in combination with the teachings of the instant invention and assuming an MSD of 8 mils, can be used to build many parts with an accuracy, for example, of 4 mils if N = 2, or an accuracy of 2 mils if N 4, or even an accuracy of 1 mil if N 8. Another preferred material is Potting Compound 363, manufactured by Loctite Corporation, which has an MSD of approximately 30 mils when used with synergistic stimulation from a high pressure mercury lamp, or alternatively Tevista Type I material, manufactured by Tokyo Ohka Kogyo Co. Ltd., Kanagawa Prefecture, Japan, which has an MSD of approximately 45-60 mils when used with synergistic stimulation from a high pressure mercury lamp. For example, when using a material like Tevista it may be advantageous to assume an MSD of 80 mils or more to ensure adequate strength under a wider range of building conditions. This assumed 80 mil MSD can still be used in a large number of objects according to the invention to yield a production accuracy of 40 mils when N = 2, or even 20 mils when N = 4.

Other preferred materials include powders and appropriate forms of synergistic stimulation as well as other fluid-like media. These powder materials when combined with a particular type of synergistic stimulation may or may not have an MSD, as previously described. Even if this type of MSD doesn't exist for these materials they may have another type of MSD (as do photopolymers). This second type of MSD refers to a minimum solidification depth that results in formation of thicknesses of material that are sufficiently rigid or strong to withstand stresses that result from adhering layers together that would tend to "curl" distort the individual layers of the object and therefore result in distortion of the object itself. The ability of a layer of cured material to resist curl increases with increasing cure depth (for many materials it is proportional to the cube of the cure depth). Curl phenomena and several means of addressing this type of distortion are described in several of the previously referenced publications. Publications of particular interest are WO 89/10259, WO 89/10254, WO 89/10801, and WO 91/06378.

Therefore, the formation process utilizing such materials can benefit from the deeper cure depths and thinner layers that can be utilized in accord with the teaching of the present invention while maintaining little or no loss in placement accuracy. As such, the present invention provides not only an extremely valuable method for achieving high resolution placement of features when using low resolution materials, but also provides an extremely valuable method of reducing curl distortion in objects when the desired accuracy of reproduction requires thinner layers than can normally be accommodated due to excessive curl distortion.

In an up-facing priority embodiment, up-facing features are given priority in terms of their placement and every attempt is made to cure down-facing features to the appropriate levels. In considering the steps involved in determining what should be cured in association with a cross-section I, we assume that the previous I-1 cross-sections have been formed in an appropriate manner.

First of all, the possible cure versus cure depth regions that might be encountered and that may need to be distinguished for making decisions about what areas should be cured on a given cross-section must be determined. In this description a building method similar to that depicted in Fig. 35, as opposed to that depicted in Fig. 36 is assumed. Therefore, whenever the depth of solidification is greater than the MSD there is always solidified material one layer thickness below the present level. We exclude Fig. 36 type building techniques, and the like, from further consideration in this analysis since their development will be within the ability of one of ordinary skill in the art after understanding the principles of the present disclosure. Table 1 shows a summary of the various cure depth regions.

Table 1

| Summary Table of the various regions that can occur on a given layer when using an Up-Facing Priority Embodiment of Simultaneous Multiple Layer Curing. | | | |
|---|---|---|---|
| Region Designation | No. of Previous Cross-Sections (Layers) | Thickness | No. of Higher Cross-Sections (Layers) |
| 1 | >= N | > = N+1 | > = 1 |
| 2 | N - 1 | N | > = 1 |
| 3 | N - 2 | N - 1 | > = 1 |

Table 1   (continued)

| Summary Table of the various regions that can occur on a given layer when using an Up-Facing Priority Embodiment of Simultaneous Multiple Layer Curing. | | | |
|---|---|---|---|
| Region Designation | No. of Previous Cross-Sections (Layers) | Thickness | No. of Higher Cross-Sections (Layers) |
| " | " | " | " |
| " | " | " | " |
| N - 1 | 2 | 3 | > = 1 |
| N | 1 | 2 | > = 1 |
| N + 1 | 0 | 1 | > = 1 |
| 1' | N | N + 1 | 0 |
| 2' | N - 1 | N | 0 |
| 3' | N - 2 | N - 1 | 0 |
| " | " | " | " |
| " | " | " | " |
| N - 1' | 2 | 3 | 0 |
| N' | 1 | 2 | 0 |
| N + 1 | 0 | 1 | 0 |

Region 1: This region is included on at least the next cross-section and on the present cross-section and on at least all N previous cross-sections. This region has a solidification depth, below the upper surface of the 1th layer, of at least N + 1 layers ( MSD + 1 layer). Since we assume a Fig. 35 type building method, we know there is solidified material located in this region one layer thickness below the present level. We cure the material in this region with an appropriate cure depth that does not cause print through of solidified material below the solidification level of this region. We also know that the material cured in this region is not used to form a down-facing surface of the object or an up-facing surface of the object. Therefore, an open cure structure (open crosshatch) can be applied to this region if desired. Additionally, the formation of solidified material in this region is used to achieve adhesion between the layers. If N = 4, then this region is included on at least the previous 4 cross-sections.

Region 2: This region is included on at least the next cross-section and on the present cross-section and on all N-1 previous cross-sections. This region has a solidification depth, below the upper surface of the Ith layer of N layers. Since we assume a Fig. 35 type building method, this region has received no cure in association with previous cross-sections and therefore it is not cured for the purpose of adhesion to previous layers. Therefore, no overcure is necessary and it can be given a cure depth equal to the MSD. This causes the lower surface of the solidified material to be formed at the appropriate position to accurately reproduce the particular feature of the object that is being created. Since this region forms a down-facing surface of the object it is cured in such away as to form a smooth lower surface. If N 4, this region is included on the previous 3 cross-sections.

Region 3: This region is included on at least the next cross-section and on the present cross-section and on all N-2 previous cross-sections. For accurate reproduction of the object, if this region were to be cured in association with the present cross-section, this region requires a depth of cure equal to the MSD less one layer thickness (MSD - 1 layer thickness). Due to the MSD, if this region is cured in association with the present cross-section, it will be cured 1 layer thickness too deep. However, since this region has at least one more layer of structure above it, we do not need to cure it in association with the present cross-section. We can postpone the curing of this region until at least the next cross-section is formed. This delay in formation will allow more accurate reproduction of the object. If this region is cured in association with the next cross-section it will be treated as a down-facing feature and maybe an up-facing feature if this region does not continue on beyond the next cross-section. If N = 4, this region is included on the previous 2 cross-sections.

Region N-1: This region continues on to at least the next cross-section and it is included on the present cross-section and on the 2 previous cross-sections (as long as N > = 2). This region cannot be cured in association with the present cross-section without causing an N-3 layer thickness error in the placement of the down-facing feature associated with the bottom of this region. As N becomes larger (assuming a fixed layer thickness and therefore and increasing MSD) so does the error associated with curing this region in association with the present cross-section. Since we know that there is at least one cross-section above this region, we know that we can delay the curing of this region until at least then. This postponing will allow more accurate placement of down-facing features and therefore more accurate reproduction of the object. If N = 2, this region is region 1 and it therefore has similar characteristics to region 1 described above. If N = 3, this region corresponds to region 2, and it therefore has similar characteristics to region 2 described above. If N = 4, this region is Region 3 and it therefore has similar characteristics to region 3 described above. If N > = 4, this region is included on the two previous cross-sections (layers).

Region N: This region is included on at least the next cross-section and on the present cross-section and on the previous cross-section. If N = 2, this region is region 2 and therefore is similar to region 2 described above. If N = 3, this region is region 3 and therefore is similar to region 3 described above. If N = 4, this region is Region 4 and it includes the previous cross-section. With all cases where N 2, more accuracy in reproduction can be obtained by delaying the curing of this region until at least the next layer. This delay is possible since we know that this region continues until at least the next cross-section.

Region N + 1: This region is included on at least the next cross-section and on the present cross-section. It does not include any previous cross-sections. With all cases where N > = 2, more accuracy in reproduction can be obtained the curing of this region is delayed until at least the next cross-section. If N = 4, this is Region 5. If this region were cured in association with the present cross-section (assuming N = 4) then the bottom surface of this region would be placed 3 layers thicknesses below its desired location.

We next consider the regions labeled with a prime " , ". These primed regions are similar to the unprimed regions except they contain no additional cross-sections above them. Therefore, the primed regions form up-facing areas. With a building technique that calls for the proper placement of up-facing features, these regions must all be cured on the cross-sections on which they occur.

Region 1': This region is included on the present cross-section and on at least all N previous cross-sections. This region is not included on the next cross-section. This region has a solidification depth below, the upper surface of the Ith layer of at least N + 1 layers (MSD + 1 layer). Since we assume a Fig. 35 type building method, we know there is solidified material located in this region one layer thickness below the present level. We therefore cure the material in this region with an appropriate cure depth that does not cause print through of solidified material below the solidification level of this region. We note that the MSD is the minimum solidification depth for an unsupported region and since this is a supported region it may be possible to use a cure depth smaller than the MSD. We also know that the material cured in this region is not used to form a down-facing surface of the object but it is used to form an up-facing surface of the object. Therefore, this region must be cured to form a uniform up-facing surface. Additionally, the formation of solidified material in this region is used to achieve adhesion between the layers. If N = 4, then this region is included on at least the previous four layers.

Region 2': This region is included on the present cross-section and on all N - 1 previous cross-sections. This region is not included on the next cross-section. This region has a solidification depth, below its upper surface of N layers. Since we assume a Fig. 35 type building method, this region has received no cure in association with previous cross-sections and therefore it is not cured for the purpose of adhesion to previous layers. Therefore, no overcure is necessary and it can be given a cure depth equal to the MSD. This causes the lower surface of the solidified material to be formed at the appropriate position to accurately reproduce the particular feature of the object that is being created. This region forms both a down-facing surface and an up-facing surface and is therefore cured in such away as to form smooth lower and upper surfaces. If N = 4, this region is included on the previous 3 cross-sections.

Region 3': This region is included on the present cross-section and on all N-2 previous cross-sections. This region is not included on the next cross-section. F.or accurate reproduction of the object, if this region is to be cured in association with the present cross-section, it requires a depth of cure equal to one layer thickness less than the MSD (MSD - 1 layer thickness). Unfortunately, this cure depth will not form a cohesive layer of structure. Additionally, this region must be cured in association with the present cross-section. Therefore, there will be an error in positioning of the down-facing feature, below this region, of one layer thickness. This region has three attributes: 1) It is an up-facing region, 2) It is a down-facing region, and 3) when it is cured, it will be solidified 1 layer thickness too deep. If N = 4, this region is included on the previous 2 cross-sections.

Region N-1': This region is included on the present cross-section and on the 2 previous cross-sections (as long as N > = 2). This region is not included on the next cross-section. This region must be cured in association with the present cross-section but this will result in an error in cure depth of N - 3 layers. This region forms both an up-facing and down-facing feature of the object and it must therefore be cured appropriately. If N = 2, this region is region 1' and it therefore has similar characteristics to region 1' described above. If N = 3, this region corresponds to region 2', and it therefore has similar characteristics to region 2' described above. If N = 4, this region is Region 3' and it therefore has similar characteristics to region 3' described above.

Region N': This region is included on the present cross-section and on the previous cross-section. This region is not included on the next cross-section. Since curing of this region must occur in association with the present cross-section, there will be an error in placement of the down-facing feature, below this cross-section, of N - 2 layers. This region is used to form both an up-facing and a down-facing feature of the object and therefore must be cured appropriately. If N = 2, this region is region 2' and therefore is similar to region 2' described above. If N = 3, this region is region 3' and therefore is similar to region 3' described above. If N = 4, this region is Region 4' and results-in an error in placing the down-facing feature of 2 layer thicknesses.

Region N + 1': This region is included the present cross-section only. It does not include any previous cross-sections or any higher cross-sections. With all cases, where N = 1, this region must be cured in association with the present layer. It forms both an up-facing and a down-facing feature of the object and it will be cured N - 1 layers too deep. If N = 4, this is Region 5. In the case of N = 4, when this region is cured in association with the present cross-section, the bottom surface of this region will be placed 3 layers thicknesses below its desired location.

Having described the various possible regions that can occur on a given cross-section, we proceed with the steps required to determine the net cross-sections that will be used to form each layer in the process of building an object from a plurality of initial cross-sections.

We consider the "initial cross-sections" of an object to be those obtained using standard stereolithography. Each initial cross-section can be subdivided into several regions. These regions, as described above, are distinguished by the relationships between the present cross-section and the N proceeding cross-sections along with their relationships to the next successive cross-section. In association with a given cross-section all of the primed, " ' ", regions are cured along with regions 1 and 2. Region 1 and 1' are used to assure adhesion between the present cross-section and the previous cross-sections. These regions have solidified material 1 layer thickness below them. Region 1' also functions as an up-facing surface and must be cured accordingly. Region 2 forms a downfacing surface and must be cured accordingly. Region 2' to region N + 1' form both up-facing and down-facing regions and must be cured accordingly. Region 3' to region N + 1' are the regions that are prematurely cured, due to the geometry of the object, and are therefore the regions that represent varying degrees of error introduced into the down-facing features of the reproduction.

After determining the extent of the initial cross-section boundaries for cross-section "I" we divide it into the various regions disclosed above. We proceed to divide the next initial cross-section "I + 1" into its appropriate regions. The primed regions of cross-section "I" do not contribute to any regions of cross-section "I + 1". All of the unprimed regions contribute to the next cross-section. The "1" region from cross-section "I" remains a "1" region for cross-section "I + 1" if cross-section "I + 2" still contains the region. If "I + 2" does not contain the region, the region becomes a 1' region. If "I + 2" partially contains the region, it becomes partially a "1" region and partially a 1' region. The other unprimed regions of cross-section "I" carry over to cross-section "I + 1" as primed or unprimed regions, or partially as both, depending on whether they continue on to cross-section "I + 2" or not. However, these other regions drop one region number with each succeeding layer until they get included into regions 1 or I' if they are not lost by inclusion in one of the higher prime regions prior to this.

For example, cross-section I, region 3 becomes cross-section "I + 1" region 2 or 2', etc. Therefore we can see how the different curing regions on each cross-section are determined on successive layers based on the previous layers and on the initial cross-section boundary of the following layer. For example, cross-section 1 (the first cross-section of the object) can include only type N + 1 and type N + 1' regions. whereas cross-section 2 can contain type N + 1, N + 1', N, and N' regions depending on how the regions of cross-section 1 and cross-section 3 relate to cross-section 2, etc.

Section 2 discloses a layer comparison method to determine how to transform the object representation into buildable cross-sections. The primary embodiment of this section of the application is directed towards building oversized parts, but the techniques described can easily be modified to produced undersized parts. Section 2 discloses methods of comparing successive cross-sections to determine the up-facing and down-facing features of each cross-section as well as the non-up-facing and down-facing regions.

The distinguishable regions described above associated with each initial cross-section were described in terms of relationships between the present cross-section and adjoining cross-sections. Therefore, a method of generically comparing neighboring cross-sections to determine overlapping regions (intersecting areas on two cross-sections) as well as non-overlapping regions (either included on one cross-section or the other cross-section but not on both) can be used to implement the present invention. There are various ways to optimize the processing of such information to obtain the regions, and their cure depths, associated with each layer. For example we may obtain the boundary (or area) data associated with each region on a given cross-section according to the steps described in Table 2. Table 2 depicts Boolean operations that can be utilized to obtain the regions described in association with Table 1 for an arbitrary cross-section I. These regions, as indicated, are obtainable by intersection and differencing operations. These operations are performed on intermediate boundaries indicated by an * and initial cross-section boundaries of layer (I-1-N) up to layer (I+1).

Table 2

| Summary Table of some possible area comparisons that can be used to obtain regional information for a given cross-section when using an Up-Facing Feature Priority Embodiment. | | |
| --- | --- | --- |
| Step No. | Steps | Region |
| 1 | {I}(ISCB) n {I+1}(ISCB) = {I}(*) | |
| 2 | {I}(ISCB) - {I+1}(ISCB) = {I}(*') | |
| 3 | {I}(*) - {I-1}(ISCB) = | {I}(N+1) |
| 4 | {I}(*') - {I-1}(ISCB) = | {I}(N+1') |
| 5 | {I}(*) n {I-1}(ISCB) = {I}(N+1*) | |
| 6 | {I}(*') n {I-1}(ISCB) = {I}(N+1'*) | |
| 7 | {I}(N+1*) - {I-2}(ISCB) = | {I}(N) |
| 8 | {I}(N+1'*) - {I-2}(ISCB) = | {I}(N') |
| 9 | {I}(N+1*) n {I-2}(ISCB) = {I}(N*) | |
| 10 | {I}(N+1'*) n {I-2}(ISCB) = {I}(N'*) | |
| 11 | {I}(N*) - {I-3}(ISCB) = | {I}(N-1) |
| 12 | {I}(N'*) - {I-3}(ISCB) = | {I}(N-1') |
| 13 | {I}(N*) n {I-3}(ISCB) = {I}(N-2*) | |
| 14 | {I}(N'*) n {I-3}(ISCB) = {I}(N-2'*) | |
| 15 | " | " |
| 16 | " | " |
| 17 | {I}(5*) n {I+2-N}(ISCB) = {I}(4*) | |
| 18 | {I}(5'*) n {I+2-N}(ISCB) = {I}(4'*) | |
| 19 | {I}(4*) - {I+1-N}(ISCB) | {I}(3) |
| 20 | {I}(4'*) - {I+1-N}(ISCB) | {I}(3') |
| 21 | {I}(4*) n {I+1-N}(ISCB) = {I}(3.) | |
| 22 | {I}(4'*) n {I+1-N}(ISCB) = {I}(3'*) | |
| 23 | {I}(3*) - {I-N}(ISCB) = | {I}(2) |
| 24 | {I}(3'*) - {I-N}(ISCB) = | {I}(2') |
| 25 | {I}(3*) n {I-N}(ISCB) = {I}(2*) | |
| 26 | {I}(3'*) n {I-N}(ISCB) = {I}(2'*) | |
| 27 | {I}(2*) - {I-1-N}(ISCB) = | {I}(1) |
| 28 | {I}(2'*) - {I-1-N}(ISCB) = | {I}(1') |
| 29 | {I}(2*) n {I-1-N}(ISCB) = {I}(N-2.) | |
| 30 | {I}(2'*) n {I-1-N}(ISCB) = {I}(N-2'*) | |
| where { } indicates the Cross-section Number e.g., {I} = The Present Cross-Section indicates the ( ) indicates the particular region of the cross-section in the preceding (I. e.g., (ISCB) = The Initial Cross-Section Boundary Area e.g., (N) = The Boundary Area of the Nth region "n" = the intersection operation "-" = the difference operation "=" = the result of the particular operation | | |

The above table involves Boolean functions, namely: the intersection operation "n" and the difference operation "-" performed on areas of different layers. These operations are discussed below in section 2: "Boolean Layer Comparison Slice"

This generalized up-facing embodiment can be modified for utilization with materials that are not limited, for a given layer thickness, by the first type of MSD (inabi-lity to form a cohesive structure thinner than the MSD), but instead are limited by the second type of MSD (inability to form non-curling or low- curling layers thinner than the MSD when higher layers are adhered to them). In this case the primed regions of the previous disclosure can all be cured to the proper depth. This is because one doesn't need to worry about the next higher layer inducing curl in the material transformed in association with the primed regions of the present cross-section since the next higher layer doesn't exist above these regions. There-fore, each of these primed regions can be given the appropriate cure depth. The unprimed regions, on the other hand, must be cured according to the previous teachings. We can conclude that material/layer thickness combinations not limited by the first type of MSD but instead that are limited by the second type of MSD can be used to form all types of high resolution objects (of vertical resolution equal to the layer thickness) without loss of accuracy due to the misplacement of features and with only little or no loss of accuracy due to curl. This represents a signi-ficant improvement to the simple approaches to stereo-lithography that don't address the issue of curl distortion. If this method doesn't completely lead to the desired level of curl reduction it can be combined with the other methods of curl reduction described in the previously referenced applications.

For combinations that are limited by both types of MSD an intermediate method can be developed that maximizes the overall accuracy of the object to be formed.

As with the above Up-facing Priority approach other approaches can be developed regarding the placement of features when regions become thinner than the MSD. Similarly other approaches can be developed regarding the curing of regions that are thicker than the MSD.

Down-Facing Priority

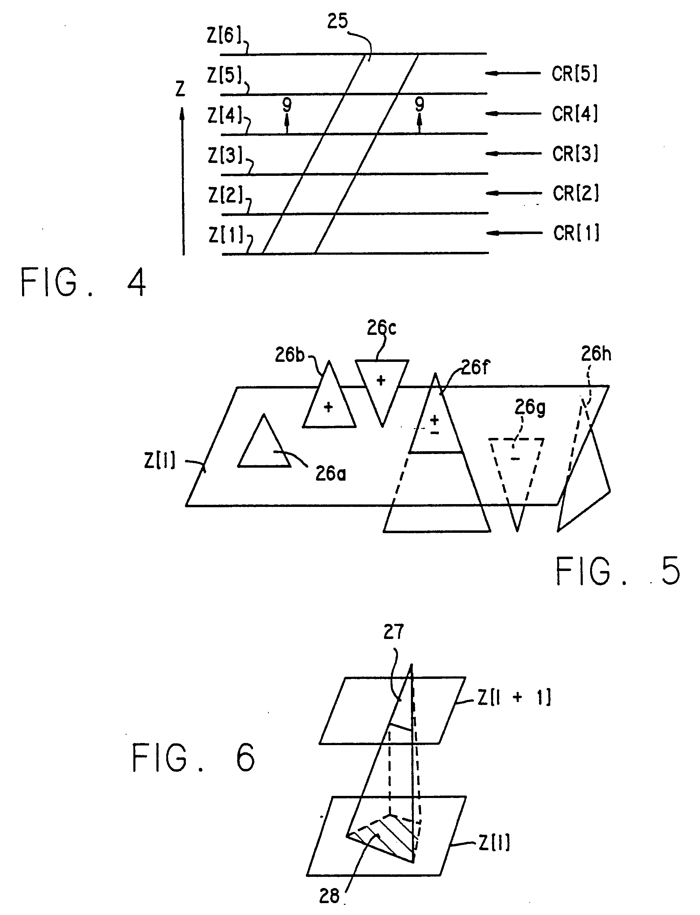

As with up-facing priority embodiments, as well as other priority embodiments, there are many methods for implementing a down-facing priority embodiment. These various methods may have their origin in different algorithms that are used to obtain the desired data or they may have their differences arise from the desire to obtain different types-of data. For example, one embodiment may require knowledge of which regions are up-facing while another embodiment may not require such information. As another example, embodiments may differ due to the desired method of curing internal regions of the object. Such differences are depicted in the cure styles of Figs. 5 and 6.

A simple down-facing priority embodiment has one major aspect that differs form a simple up-facing priority embodiment. when a down-facing feature is encountered on a given layer "I", the area of the feature is conceptually pushed up through the next N-1 layers (assuming the MSD = N layer thicknesses). This down-facing feature will be associated with layer "I+N-1" for curing instead of layer "I" from which it was derived. This down-facing feature is cured to a depth equal to the MSD, thereby placing the lower surface of the down-facing feature at the proper vertical level of the part. As a down-facing region is pushed up through the next N-1 layers its area is removed from curing consideration on the first N-2 of these higher layers.

This above discussion refers to layers not slicing planes. One can consider a down-facing feature to be found at a slicing plane which indicates the lower extent of a layer, whereas the vertical level or value associated with the layer is equal to the value of the next higher slicing plane. This next higher slicing plane indicates the upper extent of the layer which contains the down-facing feature. Presently preferred methods (as taught in the above referenced application) form down-facing features by curing them from the top of their associated layers down to the bottom of their layers.

The following steps can be followed in implementing a simple Down-Facing Priority Embodiment of the present invention. These steps are based on the ability to perform boolean layer comparisons as disclosed in Section 1. These steps can be performed by processing data one layer at a time followed by transformation of material for that layer (this does require some memory of previously formed layers and it does assume that knowledge about up-facing regions isn't necessary) and then processing the data for the next successive layer. This first possibility relates to slicing and obtaining data as needed. This is sometimes referred to as "Slicing on the Fly". Alternatively, these steps may be performed on a multiple layer basis prior to material transformation or on all the layers of the object prior to transforming material.

The procedure begins by processing each layer of the object according to the teachings of Section 1. One first obtains down-facing, up-facing, and continuing (volume) regions for each layer. Only the boundaries need be determined for these individual regions. It is not necessary to determine crosshatch and fill at this point.

In standard stereolithography the $LB_1(I)t$ i.e., layer boundary vectors, are cured to a depth of 1 layer thickness plus any necessary overcure to obtain adhesion to the previous cross-section. The area within the $LB_i(I)$ can be cured in any appropriate manner including complete solidification (e.g., skintinuous methods as described in WO 91/06378 and further described herein after or partial solidification (e.g., hatching methods). Additionally, these areas can be cured by methods that include various curl reduction techniques (e.g., multipass, rivets, tiles, or the like).

Likewise in standard stereolithography, the $UB_i(I)$ are similarly cured except that the entire upper surface of the region must be transformed to form a smooth up-facing feature. The $DB_i(I)$ are to be cured to a depth of 1 layer thickness and are formed so that a substantially uniform cure depth is supplied so that a smooth down-facing feature is formed.

In the present embodiment, the $DB_i(I)$ are shifted up by N-1 layers to become the final down-facing boundaries of layer "I+N-1", $DB_f(I+N-1)$. This leaves the $UB_i(I)$ and $LB_i(I)$ associated with layer I.

Next, the $DB_i(I-N+1)$ are shifted up to layer I to become the final down-facing boundaries of layer "I", $DB_f(I)$.

Next, any area within the $UB_i(I)$ and $LB_i(I)$ which is also in the $DB_f(I)$ is removed from the $UB_i(I)$ and $LB_i(I)$ to form the first modified up-facing boundaries and continuing boundaries of layer "I", $UB_{m1}(I)$ and $LB_{m1}(I)$.

Next, the $UB_{m1}(I)$ and $LB_{m1}(I)$ -undergo a second modification by removal of any intersecting area with the $DB_i(I-N+2)$ for N>2) yielding the $UB_{m2}(I)$ and $LB_{m2}(I)$.

Similar modifications continue to occur until any down-facing features originally associated with the previous layer are removed from the $UB_{mn-2}(I)$ and the $LB_{mn-2}(I)$ to form the $UB_{mn-1}(I) = UB_f(I)$ and the $LB_{mn-1}(I) = LB_f(I)$ wherein m = modification and n = N and f = final.

The $LB_f(I)$, $UB_f(I)$, and the $DB_f(I)$ represent the regions which will be cured in association with layer I. Appropriate cross-hatch, fill or other area transformation parameters are determined for these areas. Methods for making such determinations are described in detail in the previously referenced patent application.

The $DB_f(I)$ is cured to the MSD with appropriate parameters for creating a smooth lower surface. The down-facing features created by following these teachings will be appropriately placed.

The $LB_f(I)$ is cured to an appropriate depth which is generally greater than or equal to one layer thickness (the exact depth depends on the MSD for supported regions). By definition, there is material transformed one layer thickness below this region. Furthermore, by definition this region does not form an up-facing feature of the object. Therefore, this region can be cured to an appropriate depth to form an adequately cohesive layer as well as to ensure adequate adhesion to the previously cured layer of material without regard to the necessity of complete area transformation. Various curl reduction methods can be utilized in transforming this region, including an open crosshatch structure, if desired.

The $UB_f(I)$ region is cured to a similar depth as the $LB_f(I)$ region but the region is cured so as to form a continuously transformed upper surface resulting in a smooth up-facing feature.

This procedure is followed for all layers. The data obtained from this embodiment can be used to form a substantially high resolution object, wherein any deviations, due to features being thinner than the MSD, will result in placing the upper surfaces of the up-facing features out of position. Down-facing features will be accurately placed. This is indicated in Fig. 43e.

Other down-facing priority embodiments are possible as well as embodiments implementing the other styles of Fig. 43 or the like.

Even though the embodiments of this disclosure have been directed toward obtaining cure parameters through data processing, this only represents one approach to causing appropriate transformation of material in association with each layer. Therefore, the data processing terminology should be interpreted to include any means for modifying original object descriptive parameters that result in the transformation of material according to the teaching of this invention. The teachings of this invention relate to interpreting object descriptive parameters and reproducing the object in a manner which deviates from a strict layer by layer formation, as necessary to achieve a higher accuracy reproduction. The methods and apparatus of this invention lead to higher accuracy reproductions by utilization of the simultaneous multiple layer curing techniques disclosed herein.

Section 2: Boolean Layer Comparison Slice

An overview of a first embodiment of the now proposed slice procedure will now be provided. This embodiment normally builds oversized parts, but provides the capability of rapidly and flexibly building undersized parts, or average-sized parts. Moreover, this embodiment still requires that the object representation be converted into the intermediate format of tesselated triangles. However, as will be seen in the following discussions, this embodiment is still much less dependent on the triangular representation then previous slicing methods, enabling it to be used with other data formats with simple modifications. These simple modifications will also be pointed out in the following description. Also, if a tesselated triangle representation is input to this embodiment of the invention, this embodiment will round all triangle vertices to slicing layers. Rounding of triangle vertices is described in WO 89/10256. Rounding actually preserves object features which would otherwise be lost by the slicing process. Therefore, since the enhancement to object resolution resulting from preserving object features is believed to outweigh the detrimental impact that rounding may have on resolution, rounding of vertices is performed in this embodiment.

Alternative embodiments can use non-rounded vertices if appropriate care is taken to deal with cases where features terminate between layers.

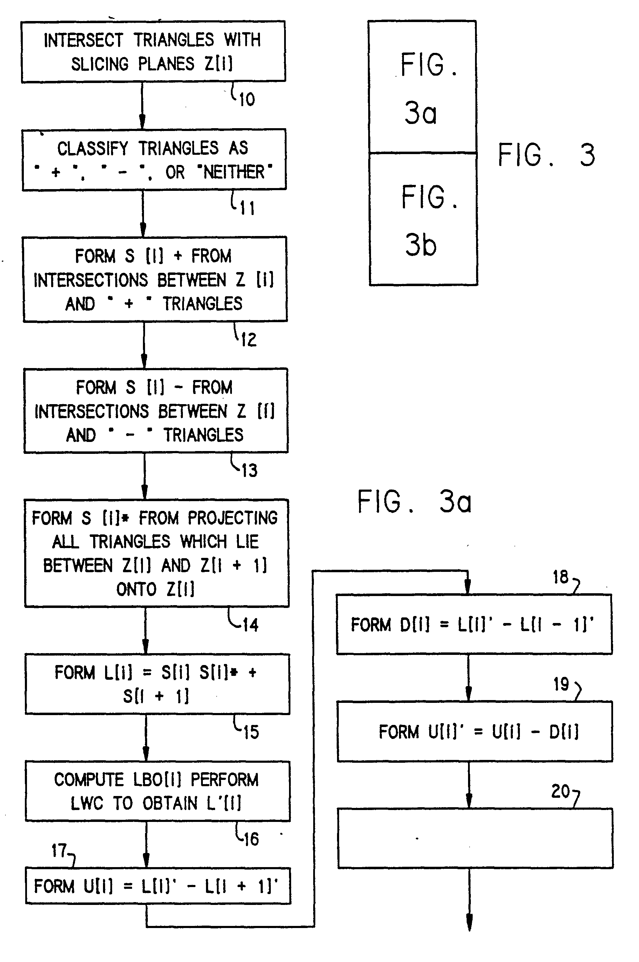

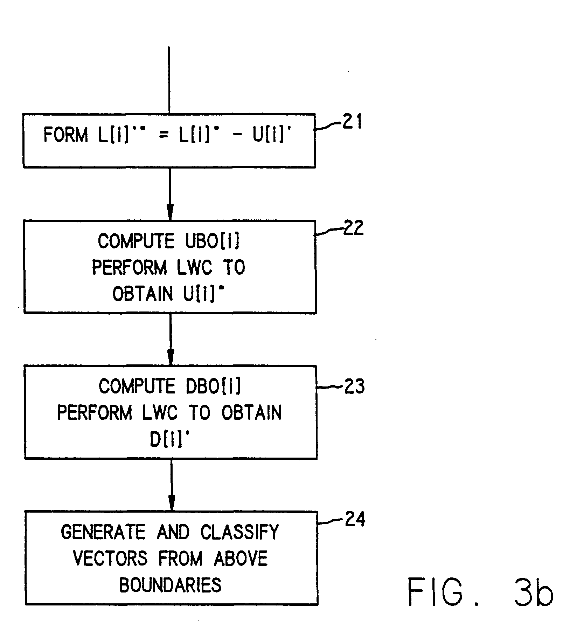

An overall flowchart for the method of the first embodiment is illustrated in Fig. 3a and 3b. The first step is step 10, wherein the triangular representation is overlayed with a plurality of slicing layers $z[i]$, spaced along a z-axis. This is conceptually shown in Fig. 4, which shows object representation 25 interlaced with slicing layers $z[1]$-$z[6]$ spaced along the z--axis.

Turning back to Fig. 3a, in step 11, each of the tesselated triangles of the object representation intersecting a slicing layer is then classified into "+" triangles, "-" triangles, or "neither" triangles. For a slicing plane $z[i]$, "+" triangles are defined as those triangles which pass through the slicing plane extending upwards, or which begin at the slicing plane and extend upwards; "-" triangles are those triangles which pass through the slicing plane extending downwards, or which end at the slicing plane and extend downwards; if a triangle is neither a "+" or a "-" triangle, it falls into the "neither" category. Many triangles are both "+" and "-" triangles.

Turning to Fig. 5, for example, triangles 26a-26h are shown, all of which intersect slicing plane z[i] at one or more points.

Triangle 26a will neither classify as a + or a - triangle, since it is entirely within the slicing plane and does not extend above or below it. It is therefore a "neither" triangle. Triangles 26b and 26c are both + triangles, since both begin at the slicing layer, at a line segment and a point, respectively, and extend upwards. Triangle 26f is both a "+" and a "-" triangle since it fits the definition of both categories: it is a "+" triangle since it passes upwards through the slicing plane (intersecting it at a line segment), and it is a "-" triangle since it also passes downwards through the slicing plane. Triangles 26g and 26h are both "-" triangles since both end at the slicing plane, at a line segment and a point, respectively, and extend downwards.

Turning back to Fig. 3a, in step 12, for each slicing plane z[i], the method will form a border, known as S[i]+, from the intersections between the "+" triangles and the slicing plane. The process of forming a border from the intersections between triangles and planes, such as slicing planes (sometime known as slicing layers) and the like, is described in detail in WO 89/10256.

In step 13, for each slicing plane z[i], the algorithm will also form a border, known as S[i]-, from the intersections between the "-" triangles and the slicing planes.

In step 14, for each slicing plane z[i], the algorithm will determine the projection of all triangle areas between z[i] and z[i+1] onto z[i]. The projection is defined as S[i]*. Turning to Fig. 6, this figure shows triangle 27, which is one of the triangles situated between slicing planes z[i] and z[i+1]. As shown, the projection of triangle 27 onto slicing plane z[i] is identified with reference numeral 28. Once the projections are determined, the boundaries of the projection will be determined in a manner analogous to the generation of near-flat boundaries described in detail in WO 89/10256, which are also determined from triangular projections. These boundaries are known as S[i]*.

Note that each object cross-section, CR[i], which is planned to be formed, corresponds with the data between two successive slicing planes z[i] and z[i+1]. This correspondence will guarantee that the correct number of cross-sections, which should equal the number of slicing planes minus one, is formed.

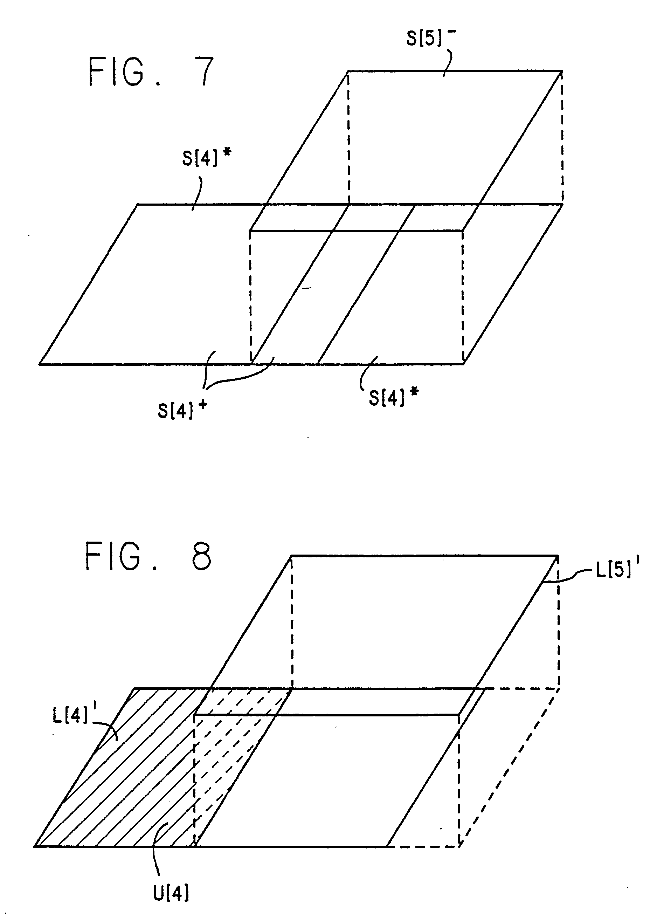

Turning back to Fig. 3a, in step 15, for each cross-section, CR[i], layer boundary data, L[i], is formed, by taking the boolean union of S[i]+, S[i]*, and S[i+1]-. Turning to Fig. 7, which is top view of the plane 9 from Fig. 4, the generation of L[4] is shown. First, S[4]+, S[5]-, and S[4]* are generated, as shown, and then the union of these three areas is taken to determine L[4], as shown. If the above-described downshift is to be avoided, then the above data should be associated with CR[i+1] since it is used to form the portion of the object between z[i+1] and z[i].

Note that step 15 creates a layer boundary which is always oversized compared to the original object representation. In Fig. 7, for example, the most accurate representation of the object at slicing plane z[4] is actually S[4]+, which is smaller than L[4]. Therefore, the final object, once built, will be oversized compared to the object representation. The generation of undersized and average sized objects in this first embodiment will be described later on.

Turning back to Fig. 3a, in step 16, line width compensation ("LWC") is performed, according to which the layer boundaries L[i], generated in step 15, are compensated for one to the finite cure width of the material after it transforms. Essentially, in this step, the layer boundaries are displaced inwards (towards the solid region which is being bounded) by about one-half of the cure width associated with the appropriate cure depth, so that when the beam of synergistic stimulation is directed to trace the object boundaries, and material at the boundary is transformed, the object will be the correct size. If LWC were not performed, the xy dimensions of the object would be oversized by about one cure width. LWC is explained in more detail further on. Performing LWC at this stage of processing implicitly assumes that the various types of boundaries that will be formed at later stages of the processing can all be adequately compensated by this single adjustment. Alternatively, it is possible to do additional compensating for one or more of the boundary types at a later stage. This additional compensation can be either of a positive or negative nature.

The amount of offset for the layer boundary is known as the layer boundary offset (LBO). The amount of offset is not simply one-half the beam width, but instead is one-half the cure width, which is the width of transformed material after exposure to the beam. In general, the cure width will be different from the beam width, since the cure width is dependent on cure depth, as explained in detail in WO 89/10256. That is, as the cure depth increases, so does the cure width.

Therefore, the LBO may be different from layer to layer, since the layer thickness, and hence cure depth, may vary from layer to layer. The LBO for layer i is designated as LBO[i].

To determine the LBO for a particular layer, the desired layer thickness is first determined (determined from the difference between successive slice planes z[i] to z[i+1] or the like) and the overcure amount, typically 6 mils, is then added. The result is the expected cure depth for the layer. As described in WO 89/10256, the overcure amount is the designated amount by which one layer is designated to penetrate into, and therefore overlap, the layer below it in order to ensure good adhesion between the layers. Once the cure depth for the layer has been determined, the program will then determine the estimated cure width based on the cure depth, and set the LBO to one-half that amount. Optionally, the down-facing regions, which will be later determined for layer i, can be given a slight negative compensation (their areas will grow) to compensate for any decrease in cure width due to a somewhat smaller cure depth.

To estimate the cure width, a plurality of previously determined data pairs may be utilized, each pair comprising an empirically measured cure depth and its corresponding cure width. Assuming that the expected cure depth does not fall exactly on one of the cure depths in the data pairs, the cure width will be estimated simply by interpolating. Alternatively, cure depths and widths can be determined from beam profile data and known properties of the building material.

Once the LBO has been determined, the layer boundaries are adjusted by this value. The compensated layer boundaries are designated as L[i]'.

In step 17, the process of generating up-facing boundaries for each layer is performed. To begin the process for each layer, the boolean subtraction between that layer and a successive higher layer is performed, which essentially determines the area on the layer which is not overlapped by the successive higher layer. The non-overlapping areas are designated as U[i].

To perform the boolean subtraction, utilization is made of a mathematical identity which results in computational efficiency. As is known, the boolean subtraction between two areas, A and B, is equal to the intersection between area A and the complement of area B:

$$A\text{-}B = A \cap (\text{-}B)$$

Therefore, to perform the boolean subtraction referred to earlier, the following computation is performed in step 17:

$$U[i] = L[i]' - L[i+1]' = L[i]' \cap (\text{-}L[i+1]')$$

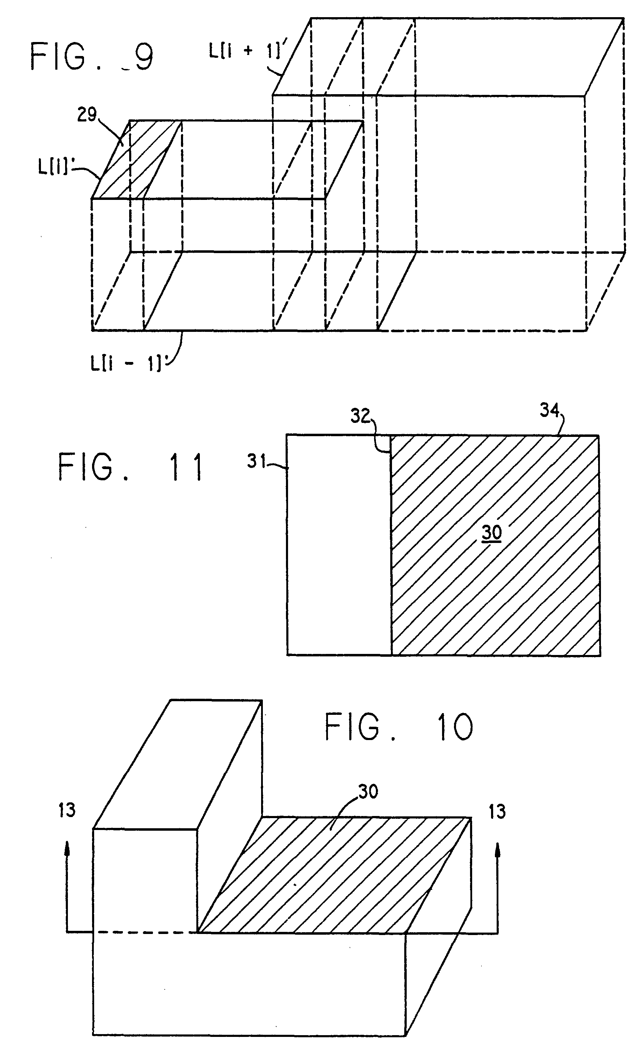

As an example of this computation, Fig. 8 shows the derivation of U[4] from L[4]' and L[5]', which are taken from the example of Fig. 4. U[4] is the shaded area in Fig. 8. The complement of L'[5] is everything but the area enclosed by L'[5]. Therefore, the intersection between this complement and L'[4] is the area enclosed by L'[4] excluding that portion that is also enclosed by L'[5].

Note that U[4] represents only the first step in the determination of the up-facing areas. This is because the areas defined by U[i] might actually include down-facing areas as well as up-facing areas. Therefore, an adjustment needs to be made to U[i] to exclude down-facing areas. (As mentioned previously, it is important to distinguish down-facing areas from all other areas since they will generally not be overcured.)

Fig. 9 shows an example where the area designated by numeral 29 would be included in U[i], but which should be excluded since it is also a down-facing region. This area is a down-facing region since L[i]' does not overlap L[i-1]', the next lower layer, in this region. As indicated earlier, the down-facing regions need to be excluded, since they do not overlap the next lower layer and should not be over-cured. The next two steps accomplish this. Alternatively, areas that are both up-facing and down-facing can be labeled as down-facing, as is done in this embodiment, or they may be given a different designation so that areas that are only down-facing can be cured differently from those that are both up-facing and down-facing.

Turning back to Fig. 3a, in step 18, the down-facing borders, D[i], are determined for each layer by taking the boolean difference between the compensated layer boundaries for that layer, L[i]', and the compensated layer boundaries for the previous layer boundary, L[i-1]'. In the manner indicated previously, this is accomplished by taking the intersection between L[i]' and the complement of L[i-1]', according to the following formula:

$$D[i] = L[i]' - L[i-1]' = L[i]' \cap (\text{-}L[i-1]')$$

Next, in step 19, the up-facing boundaries computed in step 17, U[i], are compensated to subtract out any down-facing regions which may also be present in the up-facing regions. This is accomplished by taking, for each layer, the boolean difference between U[i] and D[i]. In the manner indicated previously, this difference is determined by taking the intersection between U[i] and the complement of D[i] as per the following formula, to compute the adjusted up-facing boundaries, U[i]':

$$U[i]' = U[i] - D[i] = U[i] \cap (\text{-}D[i])$$

Note that, at this point, the adjusted layer boundaries, L[i]', still encompass the up-facing and down-facing regions, D[i] and U[i]'. Therefore, these two areas need to be subtracted from the layer boundaries. This is accomplished in the next two steps in Fig. 3a.

In step 20, the layer boundaries are adjusted again to subtract out the down-facing regions. The twice-adjusted layer boundaries, L[i]", are computed by taking the boolean difference between the compensated layer boundaries, L[i]', and the down-facing boundaries, D[i]. In step 21, the layer boundaries are adjusted a third time to subtract out the up-facing regions. The thrice-adjusted layer boundaries, L[i]"', are computed by taking the boolean difference between the twice-adjusted layer boundaries, L[i]", and the adjusted up-facing boundaries, U[i]'. Note that, at this point, the following mutually exclusive, descriptive information has been computed for each cross-section: L"'[i], D[i], and U'[i].

Note that it is still desirable to separate out the up-facing boundaries from the layer boundaries and obtain mutually exclusive data even though up-facing regions will typically be cured with the same overcure as other regions within the layer boundaries. If the up-facing boundaries were allowed to remain within the layer boundaries, then the areas within the layer boundaries would be redundantly defined. As a result, these areas may be traced more than once by the synergistic stimulation, and therefore overcured, resulting in possible distortion either through undesirable increases in the cure depth or the cure width at these areas.

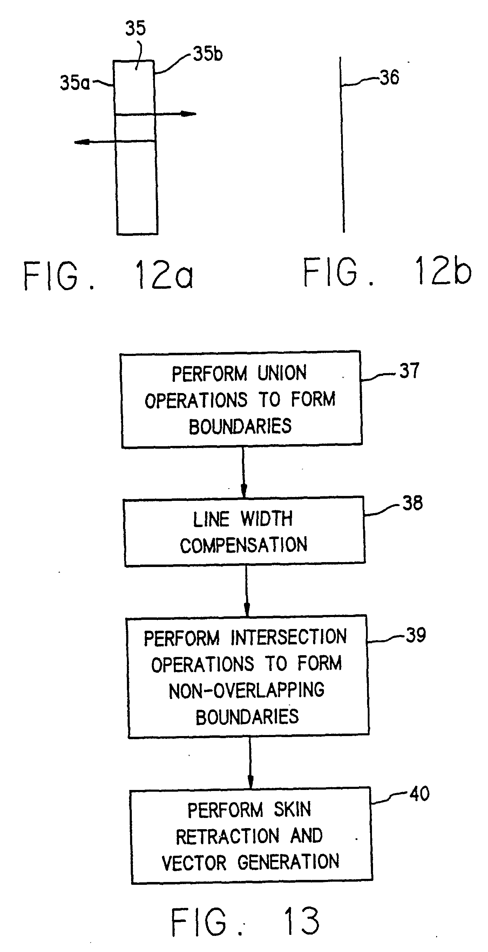

Turning now to Figs. 11, 12a and 12b, some additional adjustments to the up-facing and down-facing boundaries must be made in order to avoid additional redundant definitions of certain areas, with the resultant possibility of over-exposure of these areas. Fig. 11 illustrates a top view of a layer of an object having an up-facing region 30. The thrice-adjusted layer boundary, L[i]"', is referenced with numeral 31, and the adjusted up-facing boundary, U[i]', is referenced with numeral 34. The areas encompassed by the layer boundary and the up-facing boundary meet, but do not overlap, along segment 32. However, if the entire area encompassed by area 30 is exposed to form a transformed area, which abuts right up against segment 32, and in addition, if the entire area enclosed by boundary 31 is transformed to form a transformed area which also abuts against 32, then the material along this segment will be exposed four separate times, i.e., through exposure of areas enclosed by 31 and 34, and through exposure of layer boundary 31, and up-facing boundary 34. As indicated previously, this over-exposure should be avoided in order to prevent the resultant increase in cure width and cure depth which results. Therefore, adjustments to the up-facing and down-facing borders are useful to prevent this over-exposure. This is accomplished in steps 22 and 23.

An additional and very important result of these adjustments is that they will have the beneficial effect of eliminating the generation of skin vectors for areas too small to actually require skin vectors. Turning to Fig. 12a, for example, the area identified by numeral 35 is assumed to represent either an up or down-facing region which is too small to benefit from the generation of skin vectors. This is so because when the synergistic stimulation traces segments 35a and 35b around the perimeter of the area, this area will be automatically transformed (due to the cure width involved).

The determination of such areas can be accomplished, for example, by moving segment 35a to the right by one-half the cure width, while also moving segment 35b to the left by one-half the cure width, as shown. As will be discussed subsequently, these steps can be accomplished by utilizing, in large measure, the LWC algorithm from step 16. If the result of migrating these segments is the collapse of the region or partial collapse, then this indicates that skin vector generation need not be performed in this region or portion of this region. As shown in Fig. 12b, the migration of the segments collapses the region into line segment 36, indicating that skin vectors need not be generated. The detection of these areas is performed in the next two steps of Figs. 3a and 3b.

In step 22, an up boundary offset (UBO) is computed for each layer in a similar manner to the computation of the LBO, i.e., by interpolating based on the value of the layer thickness plus an expected overcure amount. This value is used to offset the up-facing boundaries in the manner very similar to that described previously. The primary difference between the use of the UBO and the LBO is that the UBO is not used to form physical boundaries that will be drawn, whereas the LBO is used to form such boundaries. The UBO is used to form boundaries from which the appropriate areas for skinning and/or hatching will be determined. As such, if these areas are reduced to zero or become negative, they are simply not skinned and/or hatched.

The LBO, on the other hand, is used to offset the boundaries that will physically be formed when producing a layer of a part. As such, when areas within these boundaries reduce to zero, or become negative after the compensation associated with the LBO, a decision must be made as to whether or not it is appropriate to form the collapsed feature as a single line of cured material or whether it is more appropriate to simply remove such features from further consideration. The most preferred choice may vary from part to part or layer to layer or region of a layer to region of a layer. Therefore, the most appropriate method of making the decision may be to make it a user specified option. This decision may be made on a part by part basis, layer-by-layer basis, or a region of a layer by region of a layer basis. This difference between the use of the LBO and UBO leads to somewhat different processing routines as will be described later.

Next, the adjusted up-facing boundaries U[i]' are adjusted inwards by about one-half the UBO for that layer, UBO[i], to obtain the twice-adjusted up-facing boundaries, U[i]". Note that with the generation of U[i]", the singly adjusted up-facing boundaries U[i]', are still retained. This-is because the twice-adjusted boundaries are only kept temporarily

EP 0 555 369 B1

for the purpose of generating skin vectors and/or hatch vectors, and are not retained for the purpose of generating border vectors. Instead, the singly adjusted boundaries, U[i]', are kept for this purpose.

Then, in step 23, adjusted down-facing boundaries, D[i]', are computed by adjusting for a down-boundary offset, DBO, for that layer. The down boundary offset values for each layer are computed in a manner analogous to the offsets for the up boundaries in step 21 except for generally a smaller depth of cure and smaller corresponding width of cure, and the adjustment to the down-facing boundaries is made in a similar manner. Again, with the generation of the singly-adjusted boundaries, D[i]', the unadjusted boundaries, D[i], are still retained. This is because the adjusted boundaries are only used for the temporary purpose of generating skin vectors and/or hatch vectors, the unadjusted down-facing boundaries, D[i], being retained for the generation of the border vectors.

Note it is also possible to determine and use an additional offset value to compensate the L'''[i] or the L''[i] boundaries to produce secondary boundaries. The secondary boundaries can then be used for the generation of cross-hatch (hatch) or skin (if used), wherein the original L'''[i] or L''[i] would still be used to form the physical boundaries that would enclose the hatch or skin produced from the secondary boundaries.

Finally, in step 24, vectors are generated from the boundary data as follows. First, for each layer, layer boundary vectors (LB) are generated from the thrice adjusted layer boundaries L'''[i]. (This is a simple process and is simply the generation of one or more loops of vectors which trace out the boundaries.) Second, the flat up boundary (FUB) vectors are generated from the adjusted up boundaries U[i]'. Third, layer hatch (LH) vectors are generated from the twice adjusted (not thrice-adjusted) layer boundaries, L[i]'', using one of the hatch generation algorithms to be described subsequently. Note that the twice-adjusted boundaries, L[i]'', are used, which encompass the up-facing regions but not the down-facing regions (see step 21 in Fig. 3b), rather than the thrice-adjusted boundaries, L[i]'''. This is because hatch vectors will eventually be generated for both the layer boundary and up boundary regions, and it is more efficient to generate them in one step, rather than in two steps, which would be required if L[i]''' were used here. Although generally found to be unnecessary, separate hatch vectors can be generated for the L'''[i] regions and for the U'[i] regions instead of a single set for the combined L'''[i] and U'[i] regions. This can be done at the cost of producing additional vectors but with the benefit of yielding additional versatility in the process of actually transforming the building material. Note that the generation of hatch vectors for the down-facing regions cannot be combined with the generation of hatch vectors for the layer boundaries since these vectors for the down-facing regions will likely be given different cure depths and possibly completely different processing from that given to the LH, since a uniformly cured, non-over-cured region is desired to be formed. Fourth, the flat down boundary (FDB) vectors are then derived from the unadjusted down-facing boundaries, D[i], generally without any overcuring specified. Fifth, down hatch boundary vectors (NFDH) are formed from the down boundaries, D[i], using one of the hatch generation algorithms to be described subsequently. Sixth, the up fill vectors (FUF) are formed from the twice-adjusted up boundaries U[i]'', and, then, the down fill vectors (FDF) are formed from the adjusted down boundaries, D[i]', using one of the skin vector generation algorithms described subsequently.

Note that the algorithm retains some of the vector mnemonics associated with the previous SLICE programs described in WO 89/10256 in order to retain compatibility with the remaining computer programs other than SLICE which run on the PROCESS computer. The correspondence between vector mnemonics, vector description, the borders used to generate the vectors, and the order in which each vector type is generated, and then drawn, is summarized below:

| ORDER | MNEMONIC | DESCRIPTION | DERIVED FROM |
|-------|----------|-------------|--------------|
| 1 | LB | layer boundary | L'''[i] |
| 2 | FUB | up boundary | U'[i] |
| 3 | LH | layer hatch | L''[i] |
| 4 | FDB | down boundary | D[i] |
| 5 | NFDH | down hatch | D[i] |
| 6 | FUF | up fill | U''[i] |
| 7 | FDF | down fill | D'[i] |

Although the above-listed drawing order is preferred, other satisfactory drawing orders may be utilized. An important aspect of selecting the drawing order is to avoid drawing vectors that are not adequately supported by previously-formed portions of the object. If these unattached or loosely attached vectors are drawn prior to drawing other vectors, the transformed material forming the vectors can drift out of position or be distorted out of position before they can be adhered to other vectors. Therefore, it is usually advisable to solidify the material on a given layer in a manner which starts with the supported regions (since these regions will be adhered to the cross-section below) and then solidify the material which extends radially outward from these regions into the unsupported regions. This desired manner of formation can be implemented by comparison of adjacent cross-sections, known cure depths and widths for each vector, and known attributes of the drawing style used and of any curl reduction methods used. The above-described order reflects these considerations. Additionally, it always draws boundaries prior to their associated hatch or fill to ensure that the hatch and fill will be constrained by the boundaries even if the hatch and fill should initially be unadhered.

Another possible drawing order is LH, FUF, LB, FUB, FDB, NFDH, and finally FDF. This drawing order creates the LH and FUF before their corresponding boundaries since it can be assumed that both of these vector types are used to transform material which is supported from below by material which was transformed in association with the previous cross-section. Furthermore, this drawing order has the advantage that the boundaries will not be distorted by shrinkage of the hatch and fill as the hatch and fill are formed. Therefore, it may be assumed that the boundaries will ultimately be located in more accurate positions.

The above list of vector types does not contain an up-facing hatch category. As stated previously, this is because the up-facing hatch is included in the LH of the above list. This inclusion has generally been found to be satisfactory, but the up-facing hatch can be separated out into its own category if the need or desire arises. Separating the LH into its own category is a specifiable option in the present software.

Implementation

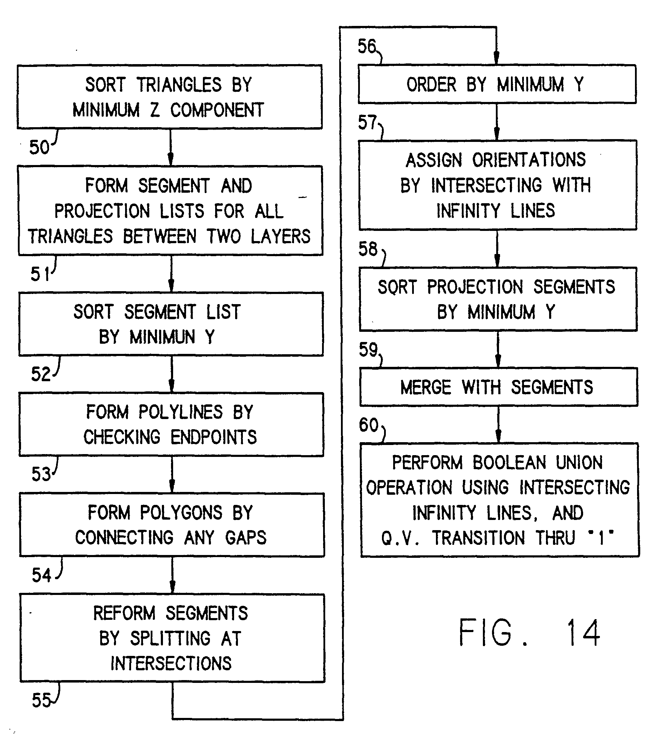

The implementation of the above embodiment will now be described. Fig. 13 illustrates an overall view of the implementation, which comprises the steps of performing union operations to form boundaries in step 37, performing line width compensation in step 38, performing difference operations to form non-overlapping boundaries in step 39, and performing skin and hatch retraction and fill and/or hatch vector generation in step 40. All these steps are presently conducted on the SLICE computer (which may be the same as the PROCESS computer), which takes the tesselated triangle formatted object representation as input, and produces vectors as output. The PROCESS computer is one with or is coupled to the SLICE computer for receiving these vectors, and then, responsive to these vectors, directs the beam of synergistic stimulation to trace out the vectors on a working surface of the material.

Each of these steps will be addressed in order. The detailed substeps which make up step 37 are illustrated in Fig. 14.

First, in step 50, all the triangles are sorted by the minimum z-component of any of the triangle vertices. The z-axis is assumed to be the slicing axis, which in the first embodiment, is the vertical dimension. Therefore, this step will order the triangles along the slicing axis. It should be noted that the choice of the z-axis is arbitrary, and, assuming a cartesian coordinate system, the y or x-axis could equally have been used.

Then, in step 51, the triangles are overlayed with a plurality of slicing planes spaced along the z-axis. Then, after consideration of all the triangles between any two successive slicing planes, a segment list is generated, comprising segments generated from the intersections of all such triangles with the one of the two successive slicing planes having the smaller z-component. In addition, a projection list is generated, comprising segments generated from the projections of triangles, between the two layers, onto the smaller z- component slicing plane, with flat and vertical triangles excluded from consideration. If it is desired not to shift the reproduced object along the z-axis, both these lists are associated with the higher of the two layers after their formation. After the segment and projection segment lists have been formed for a cross-section, segment and projection lists for all the cross-sections are formed. In each instance, the segment and projection lists for a cross-section are formed from the two slicing layers which bound the cross-section. Alternatively, all the segment lists may not be generated. Initially, it is possible to generate such segment lists for the preceding succeeding layer, the present layer, and the successive layer. After the appropriate computations are done for the present layer, the vectors for the present layer are stored or executed. The information for the succeeding layer is removed, followed by the layer designation being transferred upward so that was the- next successive layer becomes the present layer. The process is then repeated, thereby minimizing memory and storage space usage.

Note that the segments in the projection list, upon formation, are ordered in a counter-clockwise orientation, such that in following the directions of the segments which bound a projection, the solid regions are to the left and the hollow regions are to the right of the boundary. Another way of expressing this is that the segments follow the right hand rule, whereby the segments are assumed to encircle solids in a counter-clockwise direction, and to encircle hollow regions in a clockwise orientation.

Unlike the segments in the projection list, however, the segments in the segment list are not oriented upon formation. These segments are oriented in step 57, discussed subsequently.

For a given cross-section, beginning in step 52, the segment list is first operated on to clean it up, and correct for any corrupted input data. The inputted triangles are assumed to completely span the surface of the object, and to abut other triangles only at their vertices. If either or both of these assumptions are violated, the input data representing the triangles may be corrupted. This may manifest itself in the form of gaps or overlaps in the segment list. As discussed below, in step 52 and subsequent steps, these gaps are filled.

In step 52, the segments in the list are ordered according to their minimum y dimension, although the x-dimensions could equally have been used. Then, in step 53, the endpoints of segments are considered in turn by comparing them with the endpoints of successive segments, and if any two endpoints match, the corresponding segments are combined to form "polylines." In step 54, the endpoints of any polylines that have not closed upon themselves to form polygons are considered in turn, and compared with the endpoints of successive unclosed polylines. If gaps are present, segments are created to fill in the gaps, considering the shortest gaps first. The result is to form polygons out of the unclosed polylines. In the closing of polylines into polygons, precautions are taken to avoid vectors which cross over other vectors. At such intersection points, both vectors are split as necessary and non-overlapping polygons are formed or one polygon and a non-overlapping polyline is formed.

In step 55, after any gaps have been filled, the longest possible segments-are reformed from the polygons by combining successive collinear or nearly collinear polylines or segments where possible. A characteristic of these longer segments, unlike those used to form the polygons earlier, is that all gaps will have now been removed, and the segments will completely form polygons. Moreover, another characteristic of these longer segments is that they will not be allowed to pass over any other segment. This is accomplished by following the rule to split a segment into multiple segments at an intersection point, to avoid having any two segments cross or to have a segment pass through an intersection point with another segment.

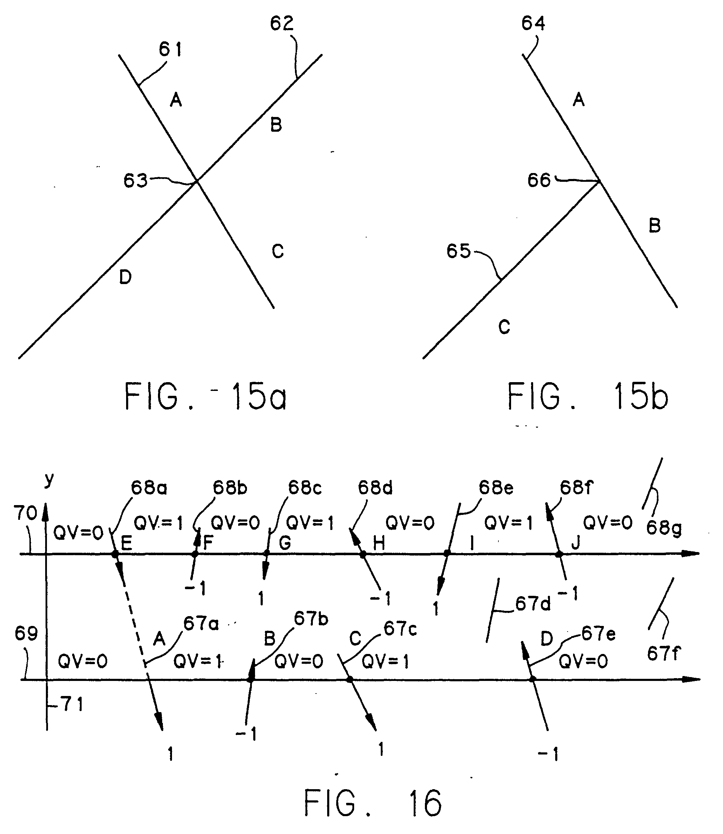

The splitting process is illustrated in Figs. 15a and 15b. Fig. 15a shows segments 61 and 62 intersecting at point 63. To avoid violating the rule mentioned earlier, the segments are divided up into the four sub-segments A, B, C, and D.

Fig. 15b shows another example of splitting segments 64 and 65, which intersect at 66, except that here, the splitting is into three sub-segments, A, B, and C, rather than into four sub-segments.

Turning back to Fig. 14, in step 56, the reformed segments are ordered by their minimum y dimension.

In step 57, orientations are assigned to the segments, since, as discussed previously, unlike the segments in the projection list, these segments have not been assigned orientations. To do so, the segments are first intersected with so-called "infinity" lines (so-called because they are considered to originate at infinity), which are parallel to the x-axis (although the y- or z-axis is equally possible). Then, at each intersection point with a segment, a quantitative volume analysis ("QV analysis") is performed, and, as a result of this analysis, the segment is assigned a corresponding orientation.

To begin the QV analysis, it is assumed that an infinity line always begins in a hollow region, and that every time it intersects a segment, that it is either entering or exiting a solid region. The segments are assumed to be oriented so that to their left is solid and to their right is hollow, that is they are assumed to encircle a solid region by looping around it in a counter-clockwise orientation. This is equivalent to orienting these segments according to a right-hand rule. Again, a left-hand rule is also possible.

The quantitative volume ("QV") associated with an infinity line will vary from one point on the line to another depending on whether that portion of the infinity line is located within a hollow portion, or a solid portion. When the infinity line is in a hollow region, it is assumed to have a QV of 0, and when it is within a solid region of an object, it is assumed to have a QV of 1 (if the infinity line were located within an overlapping solid region of two objects, it would have a QV of 2, and so on). This situation of overlapping solid regions is excluded from this stage of the processing since at this stage hollow and solid regions are being determined by alternating the designation as successive boundary vectors are determined. A different algorithm is possible that could substantially process overlapping solid regions at this phase.

Each segment can only have one orientation associated with it since over its entire length it, by definition and by virtue of the previously-described splitting technique, is bound by hollow on one side and by solid on the other.

The ordered segments are successively overlapped with infinity lines until each segment has been assigned an orientation. Any number of infinity lines can be used, the only provision being that enough be used so that each segment will be assigned an orientation. The first infinity line may be chosen to intersect as many segments as possible. After the orientations for these segments are assigned, another infinity line is intersected with as many remaining segments as possible, orientations are assigned, and the process repeats itself until all segments have been assigned orientations.

The above process can be illustrated with the aid of Fig. 16, which shows segments 67a-67f, and 68a-68g. These segments all have at least a component parallel to the y axis and they are assumed to be ordered by minimum y, and are therefore illustrated accordingly. The y-axis is designated with numeral 71.

First, an infinity line, designated by numeral 69, is chosen to intersect as many segments as possible. In this case, this line overlays segments 67a-67c and 67e. The actual intersections of the segments with the line are designated as A, B, C, and D.

As mentioned earlier, the origin of the infinity line is assumed to be at infinity, which is assumed to be hollow. Therefore, the infinity line at infinity is assumed to have an associated quantitative value of 0. This is indicated on the infinity just prior to the intersection with segment 67a at point A. Next, each intersection point along the infinity line is considered in turn, and QV values are successively assigned to each portion of the infinity line after intersection with a segment. If the QV value makes a transition from 0 to 1, this indicates the entry of solid. If it makes a transition from 1 to 0, this indicates the exiting of solid. The successive QV values are as shown in the figure.

Next, assuming an orientation, which indicates solid to the left and hollow to the right, the orientations of the segments are derived from the QV values on the infinity line. If the QV value makes a transition from 0 to 1 across a segment, this indicates that a solid has been entered, and following the right-hand rule, it is assumed that the segment is pointing downwards. Of course, if the QV makes a transition from 1 to 0, this indicates that a solid has been exited, and following the right-hand rule, it is assumed that the segment is pointing upwards. If the segment is determined to point downwards, it will be given an orientation of 1, while if it is determined to point upwards, it will be given an orientation of -1. The derived orientations are shown in the figure, as numbers below the corresponding segments. An arrow has also been added to each segment to pictorially show its derived orientation.

Next, another infinity line is drawn, identified by numeral 70 in the figure, to intersect another group of segments, identified by numerals 68a-68f in the figure. The corresponding intersection points are identified as E, F, G, H, I, and J in the figure. Then, the above analysis is repeated, to assign orientations to the intersected segments, which are indicated in the figure.

A consistency check is then performed to determine if a segment assigned an orientation by two different infinity lines has been assigned the same orientation. In Fig. 16, for example, if segments 68a and 67a were part of the same overall segment (which situation is denoted by the broken line connecting these two segments) then a check would be made to ensure that the orientations assigned by the different infinity lines to this segment are the same. This is, in fact, the case in Fig. 16. Additional checks can be performed to ensure that segments in each polygon have been assigned compatible directions.

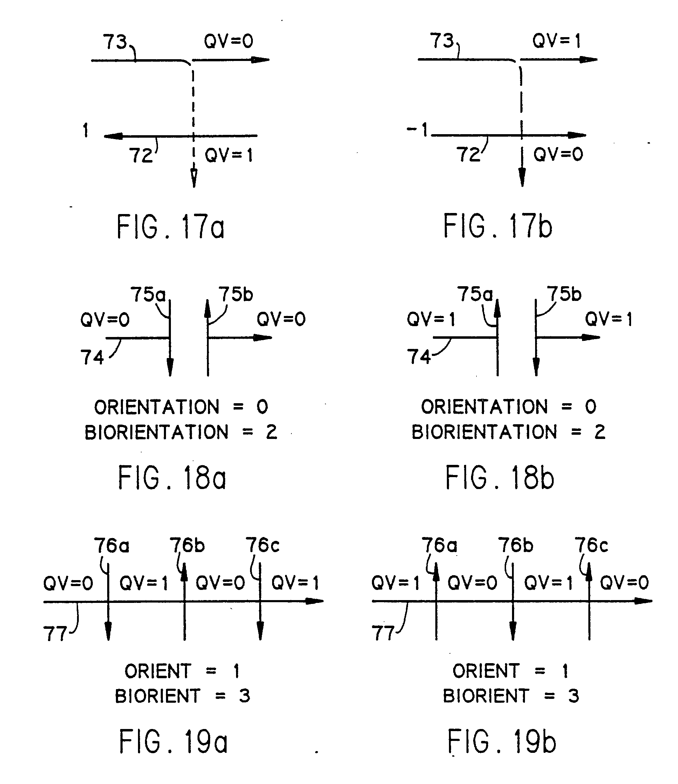

Several special cases will now be considered. The first is illustrated in Figs. 17a-17b, where the segment 72 to be assigned an orientation is horizontal to the infinity line 73. In this instance, it will be assumed that the infinity line passes through the segment from top to bottom, as shown by the broken line in the figures, even though in reality, the infinity line follows the path indicated by the solid line in the figures. If the QV changes from 0 to 1 as in Fig. 17a, the segment will be assigned an orientation of 1, while if the QV changes from 1 to 0, as in Fig. 17b, the segment will be assigned an orientation of -1.

Another special case is where two or more segments overlap. Overlapping segments may be caused by triangles overlapping. This situation may occur as triangle vertices are rounded to slicing layers.

To handle this situation, an orientation value will be assigned to the overlapping segments as a whole. This value is equal to the sum of the orientations of the individual segments. In addition, a new value, a "biorientation" value, is assigned both to the individual segments and to the overlapping segment groupings. For individual segments, the biorientation value is set to 1. For segment groupings, the biorientation value will be the sum of the biorientations for the individual segments.

In Fig. 18a, for example, infinity line 74 is shown as intersecting overlapping vectors 75a and 75b (spaced apart for illustrative purposes only). As shown, the derived orientation for the grouping is 0 since there are only two vectors in the group. As indicated previously, this value is derived from the sum of the two individual orientations, which are 1 and -1, respectively. The biorientation value for the example of Fig. 18a will be 2, which is the sum of the biorientation values for the individual segments. It can be seen that the biorientation value for the grouping is simply a count of the number of segments in the grouping.

Note that a grouping of two segments is considered to be a construct known as a "bigon," that is a polygon formed from two sides. Therefore, since two overlapping segments form substantially a polygon of two sides, the grouping in Fig. 18a is properly termed a bigon. Presently, the biorientation value for a bigon conveys another piece of information, which is whether the bigon represents a collapsed hollow or solid. At present, a bigon having a positive biorientation value is assumed to represent a collapsed solid. The bigon illustrated in Fig. 18b represents a collapsed hollow. In actuality, at this level of processing, both situations in Figs. 18a and 18b would be given the same physical orientation. Therefore, although useful for understanding the process, the orientation depicted in Fig. 18b would not really be created in the present embodiment. All bigons are treated as enclosing a trapped positive area. Therefore, they are considered to enclose their area in a counterclockwise manner. However, at later processing stages, including the union operation to be described shortly, there two situations are treated differently due to the fact the other vectors on the layers inherently indicate that one of the bigons is within a solid region, and the other is within a hollow region. The vectors of Fig. 18a are drawn as a portion of the object whereas the vectors of Fig. 18b are not drawn since they merely represent a double exposure of a particular area.

In the differencing and intersection operations (after a complementing operation) to be described hereinafter, these bigons will be distinguished from one another by having opposite signs being assigned to their biorientation values. This is important, since it provides the ability to retain collapsed features that might otherwise be lost.

The previously depicted infinity lines were straight lines running parallel to the x-axis, with imaginary bends placed in the lines for utilization in determining orientations of segments which run parallel to the x-axis. However, it should be understood that the physically significant features of the lines are that they start at a point of known quantitative volume and that they are continuous. As such, the orientation of each of the vectors in the segment list can be determined by a single curved infinity line that intersects each of the vectors, wherein the infinity line starts at a position of known quantitative volume, and wherein the orientation of the vectors is determined by the upward or downward transition of the quantitative volume between 0 and 1. In addition, the orientation of each vector should be labeled such that the vectors are given a direction which points to the right of the direction (at the point of contact) of the infinity line when the transition is from hollow into solid and to the left when the transition is from solid into hollow.

The case of three overlapping segments 76a, 76b, and 76c is illustrated in Figs. 19a and 19b. The infinity line intersecting the vectors is designated with numeral 77. Fig. 19a illustrates the case where the infinity line enters the grouping of three segments from a hollow, while Fig. 19b illustrates the case where the infinity line enters the grouping of three segments from a solid.

The segments which make up the grouping are shown spaced apart for illustrative purposes only, and the respective changes in the value of QV is shown. Note that in Fig. 19a, the value of the orientation is 1, all in accordance with the sum of the individual orientations, while the orientation value in Fig. 19b is -1.

In both cases, however, the grouping comprises both a collapsed hollow, and a collapsed solid. Therefore, the biorientation value for both cases is assumed to be 3.

This completes the discussion of the particular approach currently used to assign orientations to segments in the first embodiment. Turning back to Fig. 14, in step 58, the projection segments are sorted by minimum y, and then in step 59, merged with the segments in the segment list. Note that the segments in the projection list already have orientations assigned to them, and do not have to have orientations derived for them as per the segments in the segment list. The orientation for the vectors in the projection list is determined in a manner analogous to that used for determining orientation for the near-flat boundary vectors described in previously referenced and incorporated PCT Publication WO 89/10256. Merging the segments for the two lists together paves the way for taking the union of the areas encompassed by the segments of both sets, which union, as discussed previously, will result in the formation of the layer boundaries.

In step 60, the union operations are performed. To perform the union operation, a series of infinity lines will be run through the segments in the merged list. Then, the QV value will be computed at each intersection point (here, unlike step 57, the QV values are derived from the segment orientations), and any segment where the QV makes a transition from below 1 to a value of 1 or greater, or a transition from above 1 or exactly 1 to less than 1 will be retained. All other segments will be discarded. The retained segments, as will be seen in the discussion below, will form the union of the areas encompassed by the segments in the segment and projection lists.

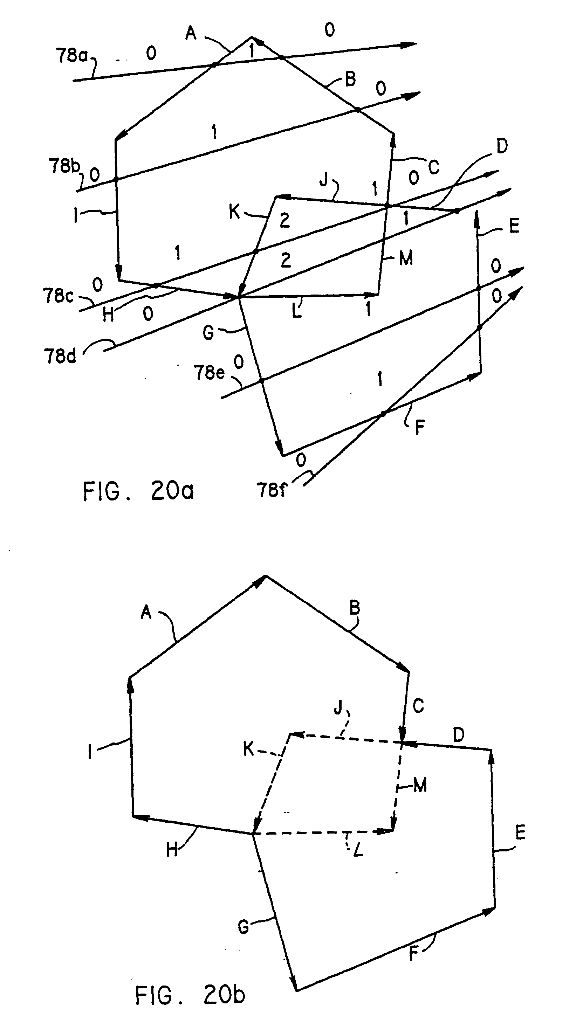

This operation is illustrated in Fig. 20a, which shows segments forming two loops, one loop assumed to be formed from segments in the segment list, the other assumed to be formed from segments in the projection list. In general, there is at least some overlap (matching vectors) between those in the segment list and those in the projection list.

A plurality of infinity lines 78a-78f are shown intersecting the segments, and after the intersection points have been determined and located, the QV values are determined. The QV values are shown in the figure. Using the retention rule discussed previously, the retained vectors are labelled as A-I. These segments are redrawn for clarity in Fig. 20b, with the excluded segments, J-M, shown as dashed lines. As shown, the area encompassed by the retained segments is the union of the two areas shown in Fig. 20a. It should be recalled that the decision to retain or remove vectors was based on whether the transition across the vector included quantitative volume changes between at least 0 and 1 inclusive.

For the retained segments, any orientation value greater than 1 is changed to 1, and any orientation value less than -1, is changed to -1. By this process, overlapping segments are effectively discarded. Moreover, the biorientation values for these segments is reset to 1. However, note that some segment groupings will still be retained. These include bigons representing collapsed solids. Bigons representing collapsed holes are discarded. Then, the retained segments are reconnected to form polygons.

Discarding collapsed holes reflects the policy of this embodiment that solid features are considered more important for accurately representing the object than hollow features. To implement this policy, when a bigon is encountered, in the union operation, a new parameter, QV', is defined. To determine QV', the value of the biorientation parameter, rather than the orientation parameter, is added to the QV value just prior to the bigon, and the resulting value analyzed. If the transition from QV to QV' goes from below 1 to 1 or greater, the bigon is retained; otherwise, the bigon is excluded. The orientation parameter is never used since it will be 0, and will never cause a transition in the QV.

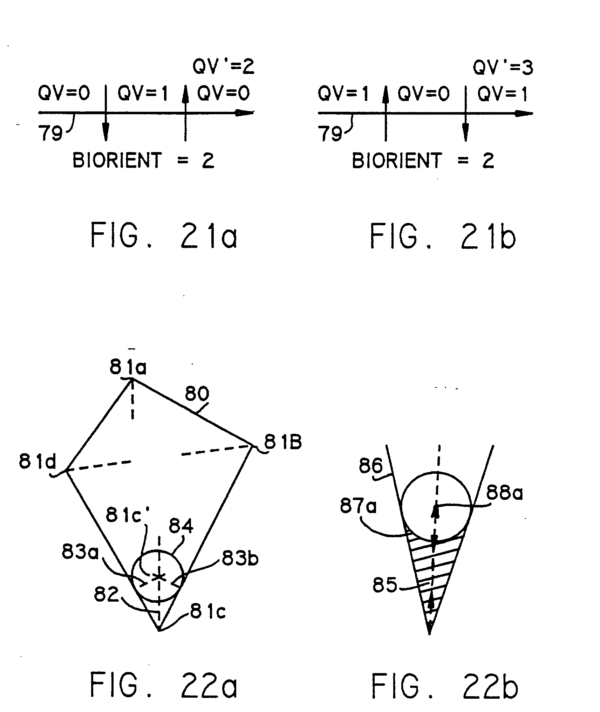

Turning to Figs. 21a and 21b, the treatment of bigons in this union operation will be described in greater detail. These figures show bigons being intersected with infinity line 79. The value of QV will be unchanged, as indicated, on either side of the bigon since the orientation parameter is 0, but the value of QV', which is the value of QV with the biorientation parameter added to it, makes a transition compared to the QV value just prior to entering the bigon to 2 (from 0) in Fig. 21a. As a result, the bigon is retained. The situation depicted in Fig. 21b is similar to that depicted in Fig. 18b. The biorientation of this figure is +2. Therefore, upon crossing the segment, the QV' goes from 1 to 3. Since it does not go through the range 0 to 1, this bigon would therefore be removed. As a result, in the union operation, it is seen that the bigons which form independent structure are kept while the bigons which duplicate structure are removed.

This completes the steps illustrated in Fig. 14.

Turning back to Fig. 13, in step 38, line width compensation (LWC) is next performed. First, it should be understood that the layer boundaries for each layer define a polygon, and the first step of LWC is to move the vertex points of each polygon so that the cure width of the material, which forms upon exposure to a beam of the synergistic stimulation, will be entirely encompassed within the polygon. For each vertex, a path known as a vertex bisector will be formed to define a path for the vertex to migrate along. Each bisector will be situated to bisect the angle formed at each vertex. This step is illustrated in Fig. 22a, which shows polygon 80, with vertices 81a, 81b, 81c, and 81d. The corresponding vertex bisectors are illustrated by the dashed lines emanating from each vertex. The vertex bisectors form the path along which each vertex will be migrated until the cure width along the border will be entirely encompassed within the border. The cure width of the material which results from the exposure of the material to the beam of the synergistic stimulation is identified by numeral 84. In the following discussion, this will be referred to as the beam trace.

Focusing on vertex 81c for the moment, the vertex will be migrated along the bisector to point 81c', which is defined as that point at which the beam trace will entirely fit within the confines of the polygon 80.

The beam trace will typically be in the shape of a circle as shown. In this instance, the migration of the vertex point, which is identified by numeral 82 in the figure, will be continued until the shortest distance from the migrated vertex point to the sides of the polygon, which shortest distance is generally along lines which are perpendicular to the sides of the polygon, identified by numerals 83a and 83b in the figure, are equal to the radius of the beam trace. This situation will generally occur, as illustrated in the figure, only after the vertex point has been migrated by more than the radius along the bisector line.

Each vertex is then adjusted in order.

After adjusting the vertices as described above, the LWC algorithm will next perform a series of adjustments in case the vertex point may have migrated too far. An example of this situation is shown in Fig. 22b, where the above approach has given rise to unacceptable migration along the bisector line at a sharp vertex. The extent of this migration is unacceptable since it may cause unacceptable distortion in the final object. For example, the shaded area in Fig. 22b represents the distortion in the final object, since this area, although encompassed by the layer boundary 86, will not be exposed. As indicated, this distortion can be substantial.

Therefore, to reduce the distortion which may result in these extreme cases, the LWC algorithm limits the length of migration of any vertex point to a value which is the square root of two times the radius of the beam trace:

$$sqrt\ (2)\ x\ r$$

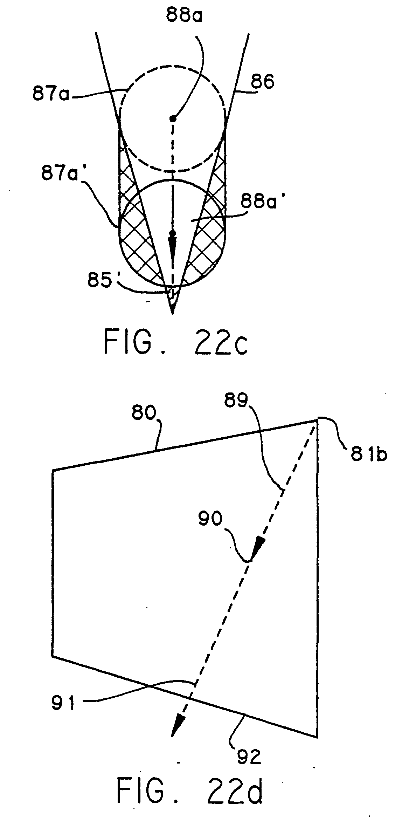

In Fig. 22c, for example, in which like elements are referenced with like reference numerals compared to Fig. 22b, the migration of the vertex point will be limited to 88a', and will not be allowed to proceed to 88a, as shown in Fig. 22b. When the beam trace is limited to 88a', the migration distance 85' is equal to the value specified above. The resultant beam trace will then be 87a' instead of 87a, as shown in Fig. 22b.

Note that this approach still results in some distortion, identified by the cross-hatched areas in Fig. 22c, and in fact even introduces some distortion. However, the intended result of limiting migration is to reduce the resultant distortion from what it was previously, and it has been found that limiting migration accomplishes this result in a wide variety of circumstances, even though distortion is not completely limited.

The LWC algorithm performs another adjustment to prevent undue migration. To perform this adjustment, the LWC algorithm first forms a displacement vector, defined as the vector which points from the original to the migrated vertex point. The LWC algorithm will next double the length of the displacement vector along the bisector line, and if the doubled displacement vector crosses a segment on the polygon, the migrated vertex point is adjusted back towards the original vertex point until the doubled displacement vector just touches the intersected segment.

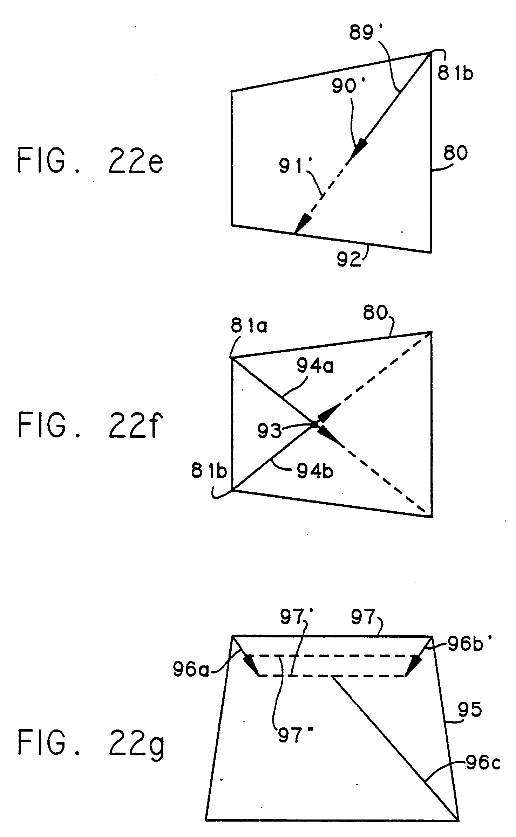

This process is illustrated in Figs. 22d and 22e, which shows polygon 80 with vertex point 81b, and segment 92. As shown in Fig. 22d, after the vertex point has been migrated to 90, the displacement vector 89 is doubled to obtain the doubled displacement vector 91 shown in phantom. As shown, the doubled displacement vector intersects segment 92, so as shown in Fig. 22e, the vertex point is migrated back to 90', towards its original location, so that the resulting displacement vector 89', when doubled to obtain vector 91' (shown in phantom), does not intersect, but, in fact, just touches vector 92.

A third adjustment performed by the LWC algorithm is triggered when two displacement vectors cross, as shown in Fig. 22f, which shows displacement vectors 94a and 94b, for vertices 81a and 81b, respectively, crossing at intersection point 93. In this instance, the migrated vertices are moved back to the intersection point 93 so that the resulting displacement vectors do not cross each other.

A fourth adjustment is triggered when the displacement vector crosses a compensated segment (a compensated segment is the segment that results from connecting migrated vertices). This situation is illustrated in Fig. 22g, which shows polygon 95, and compensated segment 97'. Segment 97' is obtained by migrating vertex points along displacement vectors 96a and 96b, and then connecting the migrated points. Also shown is displacement vector 96c. This displacement vector has resulted from the migration of a vertex point opposing segment 97', and has intersected the compensated segment 97'. In this instance, the LWC algorithm will move the compensated segment (not the vertex point as per the adjustments above) back towards the original segment it was derived from, keeping it parallel with the original segment, until the cross over is eliminated. In Fig. 22g, the original segment is designated by 97, and the moved compensated segment, designated by identifying numeral 97", is shown in phantom. As shown, the moved compensated segment is parallel with the original segment 97. Alternatively, the compensated segment 97' can be moved back towards the position of the uncompensated segment while simultaneously shortening the displacement vector 96c so that the final segments meet near the middle of the uncompensated region thereby resulting in a better approximation to the most proper locations of the final compensated segment.

After all the vertices has been migrated, they are connected to form the compensated segments. This completes the line width compensation process.

Turning back to Fig. 13, in step 39, a series of boolean intersections are next performed to form the non-overlapping regions U[i]', D[i], and L[i]'''. The specific boolean operations which need to be performed are illustrated in Fig. 3, steps 17-21. Each of these steps comprises a boolean subtraction of one area from another or of one set of areas from another set of areas, which, as indicated previously, is equivalent to performing the boolean intersection between one area and the complement of the other. This section will explain the first embodiment of the implementation of the intersection operation. In the following discussion, it is assumed that the two polygons to be differenced are denoted as A and B.

The first step in this implementation is to take the complement of B. This is accomplished simply by breaking up the B polygon into its constituent segments, ordering the segments by their minimum z component, as described earlier, and then reversing, i.e., negating the orientation and biorientation values of each segment. For bigons representing collapsed solids, this step has the effect of turning these into bigons representing collapsed hollows.

The second step in this implementation is taking the intersection between A and the complement of B. To accomplish this, in a similar manner to that already described for B, polygon A is divided up into its constituent segments, and reordered by minimum z. Then, the list of segments for both A and the complement of B are merged. Upon merging the sets, crossing points of intersecting vectors are determined and the intersecting vectors are split into smaller vectors at these points. A further step then takes place on the merged segments, whereby overlapping segments are used to form segment groupings, such as bigons, which were discussed previously. A special case occurs if a first segment overlaps a second longer segment. In this instance, the second segment will be split up into a third segment of equal length to the first segment, and a fourth segment which is the remainder. The first and third segments are then combined into a bigon.

After the above steps have been accomplished, the merged segments are intersected with a plurality of spaced infinity lines, and the orientations of the segments are then used to derive the QV values associated with various portions of the infinity lines. Only if a segment triggers a transition in the QV value from below 2 through or to the number 2 or vice-versa (through the range of 1 to 2) will the segment be retained. All other segments will be discarded. The result is the boolean difference between the two polygons or sets of polygons.

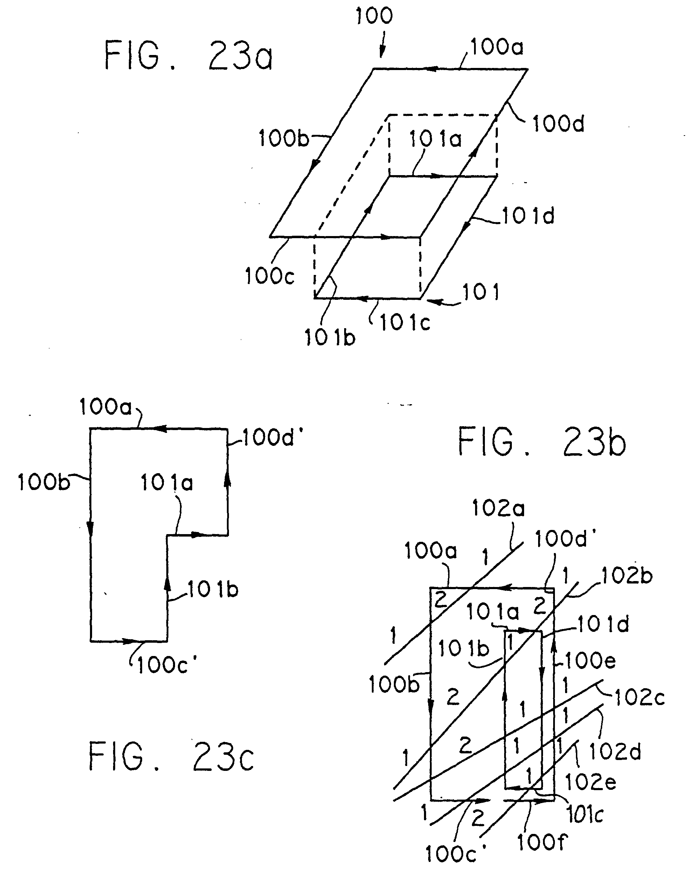

The above differencing step is illustrated in Fig. 23a-23c. Fig. 23a illustrates the two polygons to be intersected, numeral 100 designating polygon A, and numeral 101 designating the complement of polygon B. These polygons are shown as separated for ease of viewing. As illustrated, the segments which make up polygon A, illustrated by reference numerals 100a, 100b, 100c, and 100d, are oriented in a counter-clockwise direction, while the segments which make up the complement of polygon B, identified by reference numerals, 101a, 101b, 101c, and 101d, are oriented in a clockwise direction, which is reversed from polygon A because of the complementing operation.

Fig. 23b illustrates these same segments after overlapping segments have been split up to form bigons, after these segments have been ordered by their minimum z component, and then intersected with a plurality of infinity lines which are sufficient in number so that each segment is intersected at least once. For example, segment 100c is split up into segments 100c' and 100f, and then segments 100f and 101c are merged to form a bigon. In addition, segment 100d is split up into segments 100d' and 100e, and then segments 100e and 101d are merged to form a bigon. The QV values associated with different portions of the infinity lines are shown directly adjacent to the corresponding portion of the infinity line. Each infinity line is assumed to originate at infinity, but unlike the union operation discussed previously, where the infinity lines were given an initial QV value of 0 (consistent with the assumption that they originated in a hollow region), here, each infinity line is given a QV value of one. This is because here, it is assumed these segments originate in a solid region, consistent with taking the complement of B.

Considering infinity line 102a first, the QV values associated with this line makes a transition from 1 to 2 as the line passes segment 100b, and makes a transition from 2 back to 1 as segment 100a is crossed. Therefore, these two segments will be retained.

Considering infinity line 102b next, the QV values associated with this line makes a transition from 1 to 2 as it crosses segment 100b, makes a transition from 2 back to 1 as segment 101b is crossed, makes a transition from 1 back to 2 as segment 101a is crossed, and then makes a transition from 2 back to 1 as segment 100d' is crossed. Therefore, segments 100b, 101b, 101a, and 100d' will be retained by virtue of this infinity line. Turning to infinity line 102c next, the QV value for this line makes a transition from 1 to 2 as segment 100b is crossed, changes from 2 back to 1 as segment 101b is crossed, and doesn't make a transition as segments 101d and 100e are crossed. (Note: These segments actually overlap each other and are shown offset from each other in the figure for illustrative purposes only. Therefore, since these segments overlap each other, and actually form a bigon as will be discussed subsequently, the QV value doesn't change.) Therefore, by virtue of this infinity line, segments 101d and 100e will be discarded.

It should be noted that the transition across the bigon will actually be more complicated than indicated above, and will take account of the biorientation value of the bigon, as discussed previously. Here, the biorientation value of the bigon will be 0. This is because the biorientation value for 101d will be 1, while for 100e, it will be -1. The sum of these two values determines the biorientation value of the bigon. Therefore, the value of QV' after exiting the bigon (equal to the QV value just prior to the bigon) added to the bigon biorientation value will be 1. Since the value does not transition through or to 2, the bigon will not be retained.

Considering infinity line 102d next, the QV value for this line makes a transition to 2 as it passes through segment 100c', transitions back to 1 through segment 101b, and does not change as it passes through segments 101d and 100e. Moreover, the QV' value for this bigon is still 1. Therefore, by virtue of this infinity line, segment 100c' will be retained while decisions regarding the other crossed segments were previously made and remain uncontradicted by the present results (e.g., 101b to remain and 101d and 100e will be removed).

Considering infinity line 102e next, the QV value for this line does not make a transition as it passes through segments 100f and 101c, and also through segments 100e and 101d. In addition, the biorientation values for both these bigons will be 0. Therefore, the QV' values for these bigons will be 1. Therefore, by virtue of this infinity line, segments 100f and 101c will be discarded.

The end result is shown in Fig. 23c. A comparison with Fig. 23a shows that this polygon does, in fact, represent the boolean difference between polygons A and B.

Note that after the intersection operation, if any bigons had been retained, they would be converted back to individual segments. The orientation value for each segment while part of the bigon would be retained, but a biorientation value of 1 would be assigned to each segment.

Turning back to Fig. 13, the next implementation step to be discussed is skin retraction step 40. Skin retraction is performed during the vector generation step 24 in Fig. 3b. Basically, in general terms, the net result of skin retraction is the retraction of skin vectors slightly at points where the vectors would otherwise intersect or overlay the borders used to generate these vectors. The benefits of performing skin retraction are to reduce over-exposure of certain areas, also to prevent the filling of areas too small to benefit from skin vectors and to prevent generation of excess skin vectors which must be stored and/or processed resulting in less efficient operation of the system, all of which were described previously.

Skin retraction is performed by adjusting all the borders (up-facing, or down-facing) inwards to create phantom borders while still retaining the original borders. The skin vectors and/or possibly hatch vectors are then generated from the phantom borders using the skin generation algorithm to be discussed subsequently. The original borders are retained, since these, not the phantom borders, will be used to create the border vectors. Skin retraction, or more appropriately hatch retraction can be done in the layer borders L" or on the separate sets of layer borders L''' and up borders U' for the purpose of generating retracted hatch.

The phantom borders are generated from the original borders, in steps 16, 22, and 23 in Fig. 3a.

The adjustments made to the original borders in order to arrive at the phantom borders, is much less elaborate than line width compensation.

Basically, the only step performed is to displace, towards solid area, each border vector by the UBO or LBO value, while keeping each border vector parallel to the original border vector along with a substep of clipping vectors. Once the phantom borders are created, they will be converted into phantom segments. There is no need to split segments since crossing or overlapping segments will be processed properly by the algorithm.

Once the phantom segments have been created, the next steps are to merge them with the original border segments, and then sort the merged segments by the minimum-y dimension. Next, these segments are rotated, if necessary, in preparation of intersecting these segments with a plurality of spaced, parallel, horizontal infinity lines. Next, quantitative volume analysis is successively performed for each skin line to generate the skin vectors. As before, each infinity line is assumed to originate at infinity, and has a quantitative volume value of zero at infinity. Next, considering each infinity line in turn, the quantitative volume value for each infinity line is incremented by the orientation value of each segment it crosses. When a transition is made from below 2 to or through 2, the generation of a skin vector at the intersection point is begun, and when a transition is made from 2 or above 2 to below 2, the generation of a previously-commenced skin vector is stopped. Note that this operation is very similar to the intersection operation described previously except boundaries are not actually fully determined.

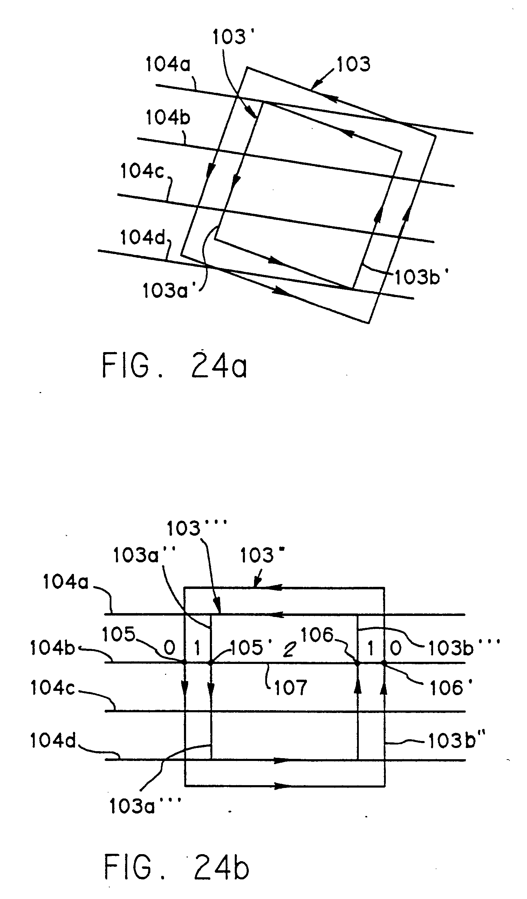

Skin vector generation is illustrated in Figs. 24a-24c. Fig. 24a illustrates borders 103, and phantom borders 103', which may either be layer or up, down-facing borders, overlayed with infinity lines 104a, 104b, 104c, and 104d.

Presently, preferred algorithms for generating hatch and fill only do so by creating vectors parallel to the x-axis. Therefore, if hatch or skin vectors are to be generated parallel to a direction other than that of the x-axis, the boundary of the area being considered is rotated by an appropriate angle, the appropriate hatch or fill vectors are generated, then both the boundary and hatch or fill are rotated back. This effect is shown in Fig. 24b. The rotated original borders are designated with numeral 103", and the rotated phantom borders are designated with numeral 103"'.

Then, quantitative volume analysis is performed along each of the infinity lines. At each intersection between a line and a segment, the quantitative volume number for the segment is incremented by the orientation value for the segment. Taking infinity line 104b as an example, at intersection point 105, the quantitative volume number for the segment is incremented by the orientation value for segment 103a" (which is 1), to arrive at a quantitative volume of 1. Next, at intersection point 105', the QV value makes a transition to 2. Therefore, at point 105', the generation of hatch vector 107 is begun. Next, at point 106, the orientation number for segment 103b"' (which is -1) is added to quantitative volume number to arrive at a quantitative volume of 1. (QV values are indicated on the corresponding portion of the infinity line to which they apply). Since the quantitative volume value has made a transition from 2 or above 2 to below 2, the generation of skin vector 107 is ceased at point 106. Next, at point 106', the QV value makes a transition to 0, which has no effect on the skin vector generation process. This completes the formation of skin vector 107. This analysis is successively performed for each of the infinity lines which intersect the segments.

Note that skin retraction only, and not hatch retraction, is performed in the this embodiment. However, hatch retraction could be performed as well in a similar manner to that described above for skin vector retraction, and is intended to be included within the scope of the subject invention.

Turning back to Fig. 13, in step 40, the rest of the vector types are generated, including border and hatch vectors. The border vectors are simply determined from the border segments, and the hatch vectors are determined from the border vectors in a manner similar to that described above for the generation of skin vectors, with the exception that the spacing of the hatch vectors will typically be wider than that for the skin vectors.

Skin retraction is accomplished by moving the vertices of up or down-facing borders (already adjusted for line-width compensation while still part of the L border) inwards, then connecting the moved vertices to create phantom borders, and then generating the skin vectors from the merged set of original and phantom borders.

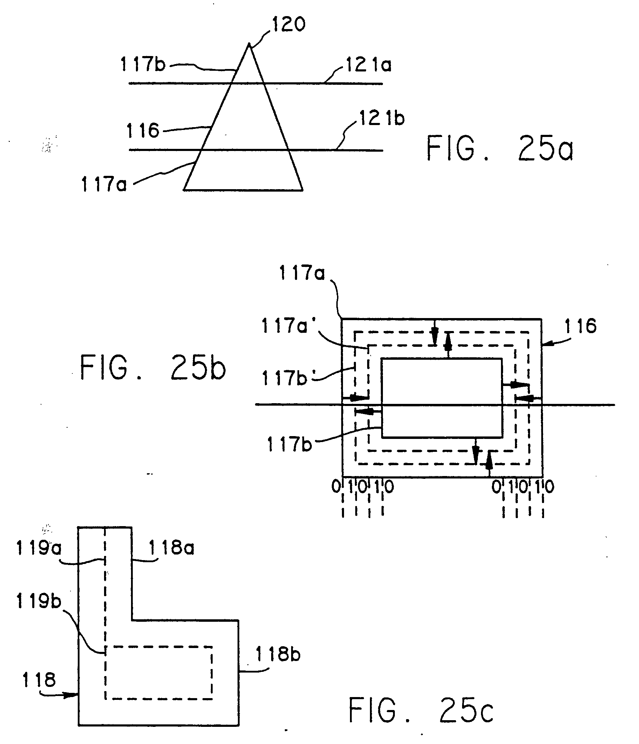

It is accomplished by migrating the vertices along vertex bisectors (as with LWC) until phantom borders drawn from the migrated vertices have been moved inwards by an appropriate amount (about one-half the cure width) from the original borders. If phantom borders from opposing sides touch, or cross over each other, then skin vector generation will automatically be suppressed in those areas since transitions to 2 or above 2 will not be made. Two illustrative examples are provided in Figs. 25a-28c.

Fig. 25a illustrates a hollow four-sided pyramid 120 (only one side is visible in this sideview) framed by two slicing layers 121a and 121b to form cross-section 116. The layer boundaries for this cross-section are designated by numerals 117a and 117b. Fig. 25b illustrates a top view of these layer borders.

The phantom borders for borders 117a and 117b are shown in phantom (by dashed lines), and identified with identifying numerals 117a' and 117b'. As shown, the phantom borders cross; therefore, no skin vectors are generated. As movement is made along an infinity line which crosses the combined real and phantom borders, the transitions in QV are from 0 to 1 to 0 to 1 to 0 on one side and then 0 to 1 to 0 to 1 to 0 on the opposite side.

This is indicated by the series of 0's and 1's at the bottom of the figure. Since no transitions through the range 1 to 2 occur, no skin or hatch is generated.

Another example is shown in Fig. 25c, in which the phantom border for border 118 is identified with reference numeral 119. The phantom border 119 comprises phantom borders 119a and 119b. As shown, the phantom borders for the top portion 118a of border 118, have collapsed into phantom border 119a, and are therefore discarded, while the phantom border 119b for the bottom portion 118b of the border 118 have not collapsed, and are therefore retained. As a result, skin vectors will only be generated for the area encompassed by phantom border 119b.

Next, in the creation of phantom borders, several additional steps are performed to further increase resolution and to avoid possible problems. First, the phantom borders at corners, where the angle of the corner is less than 180° as traversed through hollow, are clipped or rounded to further increase resolution, and to avoid the problem of not producing sufficient skin to prohibit possible drainage in the supposedly solid portions of these corners.

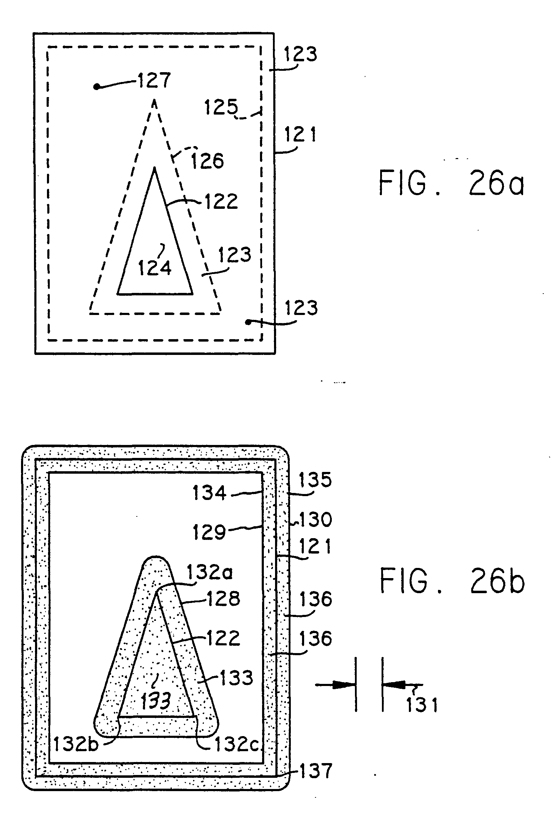

An example of clipping is shown in Figs. 26a-26d. Fig. 26a depicts a cross-section of an object along with various real borders and phantom borders that would be produced without utilization of clipping methods. The area 123 between outer boundary 121 and inner boundary 122 is an up-facing area of the layer and the area 124 enclosed by inner boundary 122 is a continuing area. Since area 123 is an up-facing area, skin fill vectors will be generated.

However, the skin vectors will be formed in a reduced area 127 which is a subarea of area 123. This sub-area is located between outer phantom border 125 and inner phantom border 126 (drawn in phantom) due to skin retraction as discussed earlier. Phantom borders 125 and 126 are the borders which would be used to determine skin placement if clipping methods are not used. The amount of retraction used in creating phantom boundary 125 from real boundary 121, and phantom boundary 126 from real boundary 122, is typically somewhat less than the cure width associated with curing a vector to a depth equal to that which boundaries 122 and 121 will be cured with.

Fig. 26b depicts the same cross-section as Fig. 26a including the real cross-sectional boundaries 122 and 121. Surrounding boundary 122 is contour line 128. Contour line 128 represents the horizontal extent of cure that occurs when-boundary 122 is traced with a beam of synergistic stimulation which induces a cure width of dimension 131. A contour which depicts the inner extent of cure when boundary 122 is cured is not shown since the entire area within 122 will be cured due to the size of the area and the width of cure associated with the beam. It can be seen that the extent of cure near vertices 132a, 132b, and 132c does not form sharp corners of cured material, but instead produces curved regions of cured material of radius similar to that of the cure width. The area cured when boundary 122 is exposed is represented by number 133 and is shaded by small dots. In a similar manner, when boundary 121 is exposed, the area 136 (represented by small dashes) between inner contour 134 and outer contour 135 is cured. From considering vertex 137, where two non-collinear boundary vectors meet, it can be seen that on the side of the vectors at the vertex where the angle between the vectors is greater than 180°, the extent of cured material will form a smooth curved surface whereas on the side of the vectors at the vertex where the angle is less than 180°, a sharp corner will be formed.

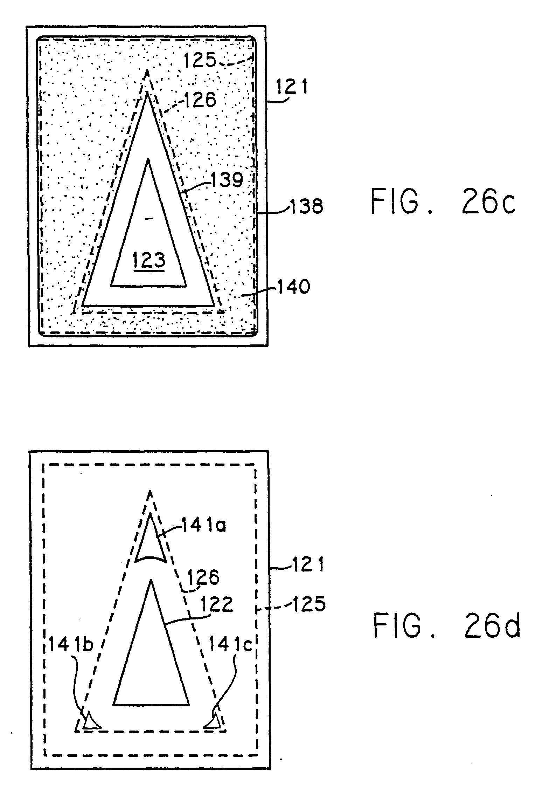

Fig. 26c depicts the same cross-section as did Figs. 26a and 26b. Real boundaries 121 and 122 are depicted as well as phantom boundaries 125 and 126. Typically, when skin fill is exposed up to a boundary, the cured material associated with the skin fill will extend somewhat beyond the line of the boundary. When clipping methods are not used, skin fill is exposed between phantom boundaries 125 and 126. Contours 138 and 139 depict the extend of cure associated with curing the skin fill vectors up to phantom boundaries 125 and 126, respectively. Therefore, associated with the skin fill is cured material 140, extending between contours 139 and 138. This is depicted in this figure using small dots.

Fig. 26d again depicts the same cross-section, but this time, with the cured area described in association with Figs. 26b and 26c superimposed. This superposition indicates that there are several regions 141a, 141b, and 141c, within the region that should have been entirely cured, but that did not get cured. Consideration of this figure, as well as of the previous three Figures, indicates that when two non-collinear vectors meet, there is an inner and outer edge of cured material associated with the junction, the outer edge being on the side of the vectors where the angle is greater than 180°, while the inner edge is on the side of the vectors where the angle is less than 180°. When curing material along the vectors, the inner edge always forms a sharp point and the outer edge always forms a curved region of transition from one vector to the other. This curved transition region always extends too little along the bisector of the angle, and this lack of extension becomes more severe as the inner angle becomes smaller. Therefore, when one is curing material in association with a portion of an original boundary that contains inner and outer sides, and wherein that portion of the original boundary is being offset in the direction of the outer edge of the boundary so that a secondary (phantom) boundary is formed which is to act as an inner side of a region to be cured, a difference in extent of cure occurs which results in an unexposed region of the part.

Since such uncured regions are undesired, a method of "clipping" has been developed which substantially eliminates the problems of uncured regions, at the cost of possible minor excess exposure in these regions. This method of clipping involves the creation of phantom boundaries that more closely resemble the cure that results from the exposure of the original boundaries. This correction to the phantom boundaries need only occur when the phantom boundary which is being created is offset from the original boundary toward the outer edge of a junction (of two vectors). This is how clipping is implemented in the presently preferred embodiment. Clipping is implemented when the junction is being offset in the direction of its outer edge, that is when the junction is being offset towards the side of the junction which has an angle which is greater than 180°.

It may be conceptually more convenient to literally offset all vectors, and for clipping to occur at all junctions followed by removing any negative areas which may be created. Alternatively, it may be more convenient to literally offset all vectors, recompute the intersection points, and form clipped vectors when an intersection point does not exist due to consecutive vectors no longer intersecting each other after the offset.

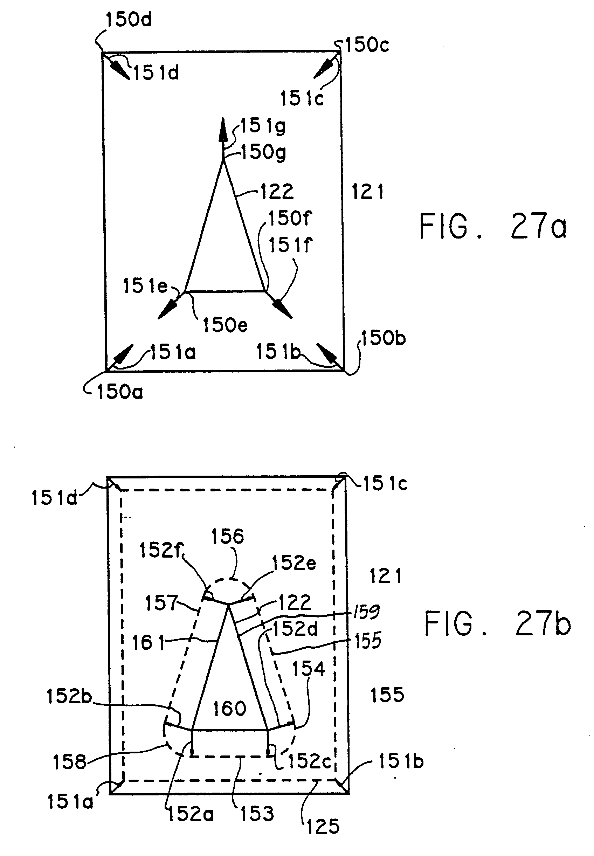

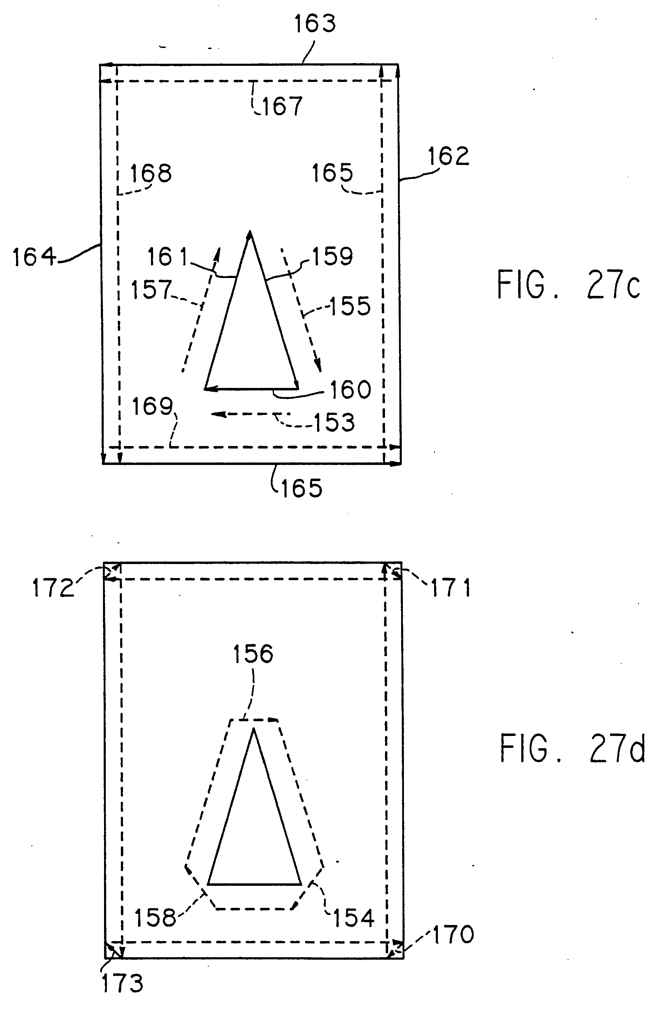

A method of implementing clipping, as applied to the example of Figs. 26a-26d, is depicted in Figs. 27a and 27b, along with a first alternative being described in Figs. 27c and 27d.

Fig. 27a depicts the same cross-section as did Figs. 26a-26d. Boundaries 121 and 122 are depicted along with vertices 105a-150g and associated vertex offset vectors 151a-151g. These offset vectors indicate the direction along which the vertices will be offset to form the phantom boundaries 125 and 126 of Fig. 26a. It can be seen that vertices 150a-150d are offset toward the inner edge of their respective junctions (toward the side which is formed by an angle less than 180°) while vertices 150e-150g are offset toward the outer edge of their respective junctions (toward the side which is formed by an angle greater than 180°). In this implementation, those vertices which are offset toward the inner edge are offset in a manner analogous to that described for cure width compensation. In other words, the vertex points are moved to the tips of their respective offset vectors. However, the vertices that are to be offset toward the outer edge are not shifted along a single displacement vector. Instead for this embodiment, each of the single angle bisecting displacement vectors 151e-151g are replaced by two displacement vectors, one associated with and perpendicular to each segment forming the junction. These two new offset vectors continue to indicate an offset to the same side of the junction as did the original offset vector. These new offset vectors are indicated in Fig. 27b, in which original offset vector 151e has been replaced by offset vectors 152a and 152b, original offset vector 151f has been replaced by offset vectors 152c and 152d, and original offset vector 151g has been replaced by offset vectors 152e and 152f. These offset vectors are formed by splitting the single vertex point into two vertex points along lines perpendicular to each junction vector individually. It can be seen in the figure that when both ends of a junction (boundary) vector are offset in this manner, this offsetting does not result in a change in length of the vector. Original boundary vectors 159, 160, and 161 become phantom vectors 155, 153, and 157, respectively. However, when a vertex is offset in this way, the original junction vectors are no longer adjacent. Instead, the splitting of the single vertex into two vertices results in the creation of an intermediate segment which connects the two vectors together. Such intermediate phantom segments are depicted in Fig. 27b as vectors 154, 156, and 158 for original vertices 150f, 150g, and 150e. These intermediate vectors are called clipping vectors since they clip off a portion of the area which would be incorporated on the inner side of the junctions if the vertices were allowed to offset in the previously described manner. It can be seen, by comparing Figs. 26a, 26b, 27a and 27b, that the phantom boundary comprising phantom vectors (or segments) 153-158 more closely approximates the outer extent 128 of the region cured when exposing boundary 122 than did the phantom boundary 126 obtained by the previously-described approach. This more accurate approximation forms the phantom boundary which will be used for determining the extent of cure associated with skin fill. Therefore, this more accurate approximation removes the undesirable untransformed regions 141a, 141b, and 141c of Fig. 26d that would typically be formed by the non-clipping approach described earlier.

Figs. 27c and 27d depict another way of conceptually understanding and implementing clipping methods of skin retraction. Instead of offsetting vertices, all vectors can themselves be shifted perpendicular to themselves by the desired amount. This is indicated in Fig. 27c where vectors 159, 160, 161, 162, 163, 164, and 165 are the original vectors which, when offset, produce phantom vectors 155, 153, 157, 166, 167, 168, and 169 which are offset by the proper amount in the proper directions. It can be seen that all vectors retain their original length. Each boundary and phantom vector in the figure also contains an arrow head which indicates its respective orientation. Next, each pair of successive vectors, that no longer adjoin head to tail, have the gap bridged by the creation of an additional vector which is oriented in a manner compatible with the orientation of the pair. Several such bridging vectors are indicated in Fig. 27d. Vector 171 bridges vector 166 to 167, 172 bridges 167 to 168, 173 bridges 168 to 169, 170 bridges 169 to 166, 158 bridges 157 to 153, 154 bridges 153 to 155, and 156 bridges 155 to 157. Next, at points where vectors crossover, they are split into smaller vectors, so that independent polygons can be formed. These polygons are then evaluated to see if they should be retained for use as phantom borders for skin fill production. If a polygon is determined to contain negative area, that is if the quantitative volume associated with it is determined to be negative, it is removed from further consideration as a possible phantom border. On the other hand, if a polygon is determined to contain a quantitative volume with a positive or zero net value, it is retained as a phantom border.

An additional alternative method is to use the approach just described for offsetting entire vectors, followed by the creation of properly oriented bridging vectors for those pairs of successive vectors that no longer touch or cross each other (as described above). This is followed by the determination of intersection points (new vector heads and tails) for those pairs of successive vectors that did crossover each other, which is followed by the splitting of vectors where they crossover each other (this pertains to non-successive vectors), which is followed by the determination of consistently oriented polygons (all vectors in the polygon have compatible orientations): These polygons remain for further processing and removal of inconsistently oriented polygons, (where one or more vectors within a polygon have incompatible orientations), followed by the removal of polygons which contain negative areas. The remaining polygons are used to form the phantom boundaries which are used in determining extent of skin fill.

The computer software used to implement the first embodiment is advantageously written in the C language, and executes on an NEC, Silicon Graphics, or IBM compatible computer or the like. This computer is known as the SLICE computer, and is a component in an overall stereolithography apparatus described PCT Publication WO 89/10256.

The SLICE computer typically generates the border, hatch, and skin vectors. However, other embodiments are possible, including a "slice on the fly" implementation, whereby the SLICE computer generates the border vectors only, and distributes hatch and skin vector generation to the PROCESS computer. Moreover, the PROCESS or SLICE computers need not be single computers, but can be a multi-processor configuration, in which parallel processing is employed. Also possible is an optical computer embodiment. Although no optical computers are presently available commercially, current research indicates they show promise in performing boolean operations optically. The proceedings of the 10th International Optical Computing Conference of 1983, contains a paper by J. Tanida and Y. Ichioka entitled "Optical Logic Array Processor" which gives further details on this topic. This referenced paper is fully incorporated by reference herein as though set forth in full.

Typically, the SLICE computer specifies the desired layer thickness for each layer, either from user input or from the data obtained from the external source, slices the object representation accordingly-, and then passes this data to the PROCESS computer, which in turn directs a recoating means to provide a layer of stereolithography material having the specified layer thickness.

Because of the finite tolerance of the layer recoating process, it may not be possible to obtain a layer of material exactly of the desired layer thickness. Instead, it may only be possible to obtain a thickness which is within a few mils (i.e., 2-3 mils) of the desired thickness.

Therefore, as an alternative to the above, a "recoating on the fly" algorithm is possible (which is to be distinguished from the "slice on the fly" algorithm discussed previously), whereby recoating takes place first, the precise layer thickness is determined, and then the slicing algorithm is executed to slice the next layer representation out of the object representation, using this previously-determined layer thickness. The advantage of doing so is to ensure exact correspondence between the assumed layer thickness (which determines the exposure of the synergistic stimulation to be used to trace the layer) with the actual layer thickness. If the assumed value of thickness is greater than the actual value, then the present layer will be overcured by more than the desired amount into the previous layer, which can lead to associated distortion problems. If the assumed value of thickness is less than the actual value, then the present layer will be overcured by less than the desired amount into the next layer, which can lead to associated adherence problems. Exact correspondence between these two values will eliminate these two problems. Additionally, if a recoating method is used which is not self-compensating, as was the previously-described embodiment, then any slight error in thickness may continue to build up from layer to layer resulting in a final part whose vertical dimensions are out of tolerance.

A second and most preferred embodiment of the slice procedure will now be described. This embodiment is very similar to the first embodiment. Therefore, only those aspects of the second embodiment which are deviations from the first embodiment will be emphasized.

As an overview of these deviations, a significant aspect of this embodiment is the ability to accept, as input, border representations of a three-dimensional object as opposed to just a tesselated triangle formatted object representation as per the previous embodiment. As a result, this embodiment can accept input directly from a CAT Scan system or the like, which provides input in the form of a plurality of spaced, cross-sectional scans of a three-dimensional object. Each of these cross-sectional scans will include information descriptive of the borders of each scan, and this is the information which this embodiment requires. Of course, this embodiment retains compatibility with the tesselated triangle formatted object representation as per the first embodiment, which is provided by most commercial CAD systems. Another deviation of this embodiment is the orientation values assigned to the segments. In the previous embodiment, all segments were oriented according to the right hand rule, and segments pointing downwards were assigned an orientation value of 1, while those pointing upwards were assigned an orientation value of -1. In this embodiment, this is reversed, with upward-pointing segments being assigned an orientation value of 1, and downward-pointing segments being assigned an orientation value of -1. Then, to compute the QV value along the infinity lines, at the intersection points with the segments, in the course of performing a union operation, intersection operation, hatch generation, or skin generation, the orientation values are subtracted from the QV value just prior to intersecting the segment, instead of being added to this QV value as per the previous embodiment. Therefore, the target transition values for all these operations can remain the same.

Another important aspect of this embodiment is its ability to slice larger stl files with less or no use at all of virtual memory. In this embodiment, an stl file is read, the triangles are sorted by their minimum z values, and the sorted triangle data is output to a temporary file. Then, the SLICE program only brings into memory the triangle data pertaining to a desired range of layers as opposed to holding the whole stl file in memory during the processing. After processing the various layers that a particular triangle pertains to, the triangle is discarded from memory. This reading in of only necessary triangles results in two significant benefits: (1) More memory is left available for the slicing process thereby reducing the need for memory swapping to the hard disk, and also resulting in faster slice times for files that would have required memory swapping; and (2) the need for maintaining large quantities of memory is reduced thereby reducing the cost of the computer system.

Various alternative schemes can be used that lead to various additional advantages. The first of these alternatives is to not create a sorted stl file but to instead create a table, by scanning the stl file, that contains information on how many triangles are associated with each layer. Then, each time additional triangle data is needed, the file can be scanned and triangles loaded into memory until the proper number of them have been loaded. This has somewhat of a disadvantage in processing time over the previous approach but has the advantage of not requiring hard disk space to store an extra (sorted) stl file.

A second alternative or set of alternatives is with regard to loading in as much of the stl file as possible but avoiding the need to utilize time-consuming virtual memory. The amount of memory needed to process a given layer is, to a large extent, based on the number of triangles that contribute to vector formation on that layer. Therefore, an embodiment can be used where the number of triangles associated with the necessary process for each layer can be determined. This information can then be matched to the estimated amount of additional memory needed to process the triangular data into vectors. Then, the optimum amount of input data can be read in at the optimum times in order to minimize the number of disk accesses and to maximize memory use thereby minimizing the slicing time associated with large files. For some files, these techniques will not only optimize the slicing process, but they may be necessary to ensure the ability to slice extremely large files with a reasonably priced and sized computer.

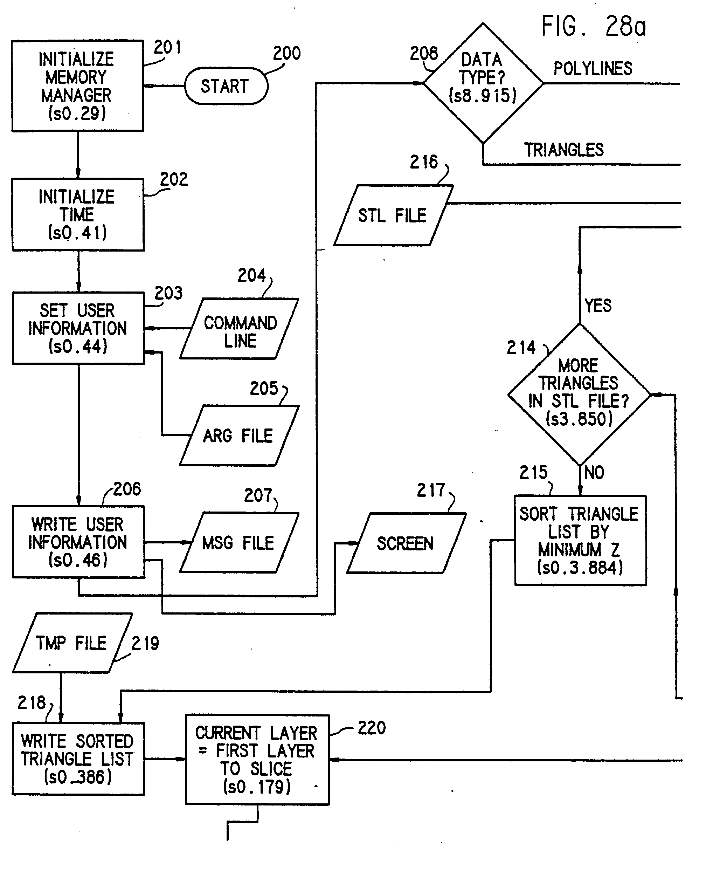

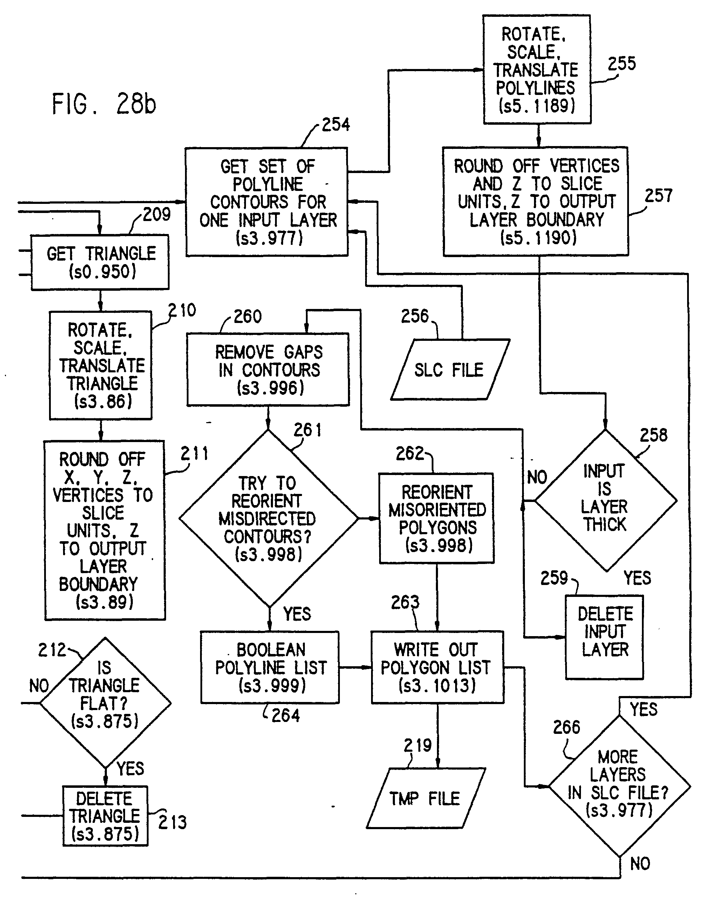

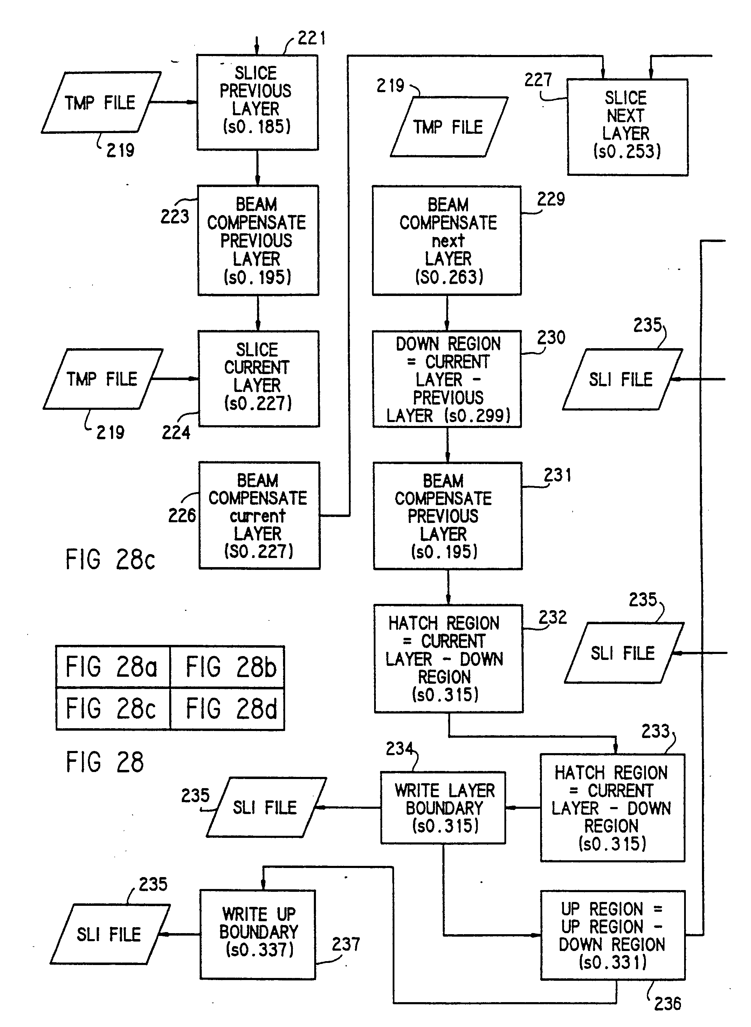

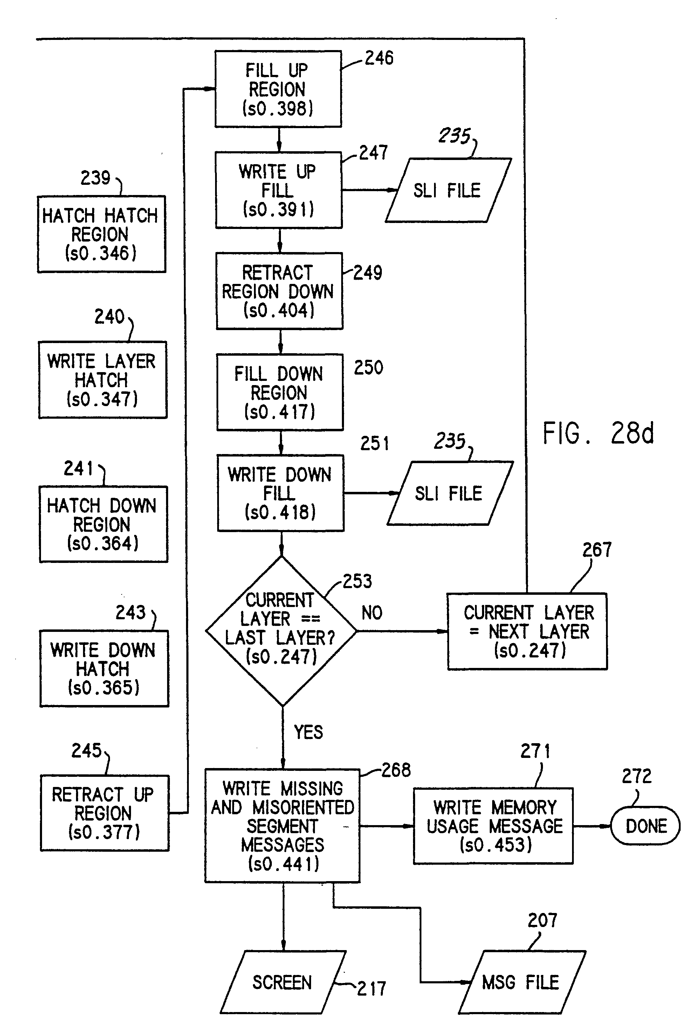

This completes an overview of the major deviations. A flowchart of the second embodiment, provided in Figs. 28a-d will now be discussed.

Turning to Figs. 28a-28d, the elliptically shaped polygons represent starting and stopping points of SCHLEISS, the rectangular-shaped polygons all represent process steps, the diamond polygons all represent decision points, and the trapezoidal-shaped polygons all represent input or output files. As indicated previously, for each process step, the flowchart indicates the particular SCHLEISS module, and the line number within that module, where that particular process step is executed.

In step 200, the SCHLEISS program is started. In step 201, the memory manager is initialized. Briefly, the memory manager allocates and deallocates memory in response to requests by the various SCHLEISS functions. In step 202, the time counter is initialized. Briefly, this counter is incremented as the execution of the program progresses, and is used to keep track of and possibly record the execution times of the various SCHLEISS functions.

In step 203, SCHLEISS obtains the specifications for slicing from the user. As indicated, the user information is obtained from both command line 204 and from arg file 205. In step 206, SCHLEISS writes out the user-specified parameters to both msg file 207, and screen 217. The screen is the output screen for viewing by the user, while the msg file is simply a file where this information is stored.

In step 208, a query is made as to the type of input. As indicated previously, the input may either be in the form of triangles, or alternatively, may be in the form of border representations known as polylines.

The situation where triangles are input will be considered first. In step 209, the triangles are obtained from stl file 216. In step 210, the triangles are rotated, scaled, or translated according to the user-specified parameters. Next, in step 211, the x, y, and z coordinates of all triangle vertices are rounded to slice units, and in addition, the z coordinates of all vertices are rounded to the nearest slicing plane. Only the z coordinates are so rounded since the z-axis is the assumed slicing axis. Then, in step 212, a query is made to determine which triangles are flat triangles. Then, in step 213, all flat triangles are deleted. Flat triangles are deleted, since they are redundant to the other triangles in terms of creating layer boundaries. In step 214, a query is made as to whether any triangles remain in the stl file. If so, a loop is made back to step 209, and steps 209-214 are repeated until no further triangles are available.

In step 215, the triangles are sorted by the minimum z coordinate of any of their vertices. In step 218, the sorted triangles are written out to tmp file 219. In step 220, the "current layer" indicator is initialized to the first layer to slice. In the current implementation, this is the first layer of the object which is comprised of data obtained from between the first and second slicing planes. The created cross-sectional data is then associated with the z value of the upper slicing plane. In step 221, the previous layer, i.e., region below the first slicing plane (which yields data) is sliced yielding the null set of vectors.

Slicing is done in the manner described previously with respect to the first embodiment, to obtain a net layer boundary comprising intersections between the triangles in the tmp file 219 and the two slicing planes bounding the layer. In step 223, this boundary is beam compensated in the manner described previously with respect to the first embodiment.

Then, in steps 224 and 226, the current layer is sliced and compensated using the triangles in tmp file 219, to form a boundary for the current layer utilizing intersections between the triangles and the slicing planes bounding the layer. Next, in steps 227 and 229, the next layer is sliced and beam compensated to provide a beam-compensated boundary for the next layer in the manner previously described with respect to the first embodiment. These compensated boundaries are the singly adjusted layer boundaries, L[i]', discussed previously. Next, in step 230, any down-facing region associated with the current layer is computed by taking the boolean difference, between the layer boundaries for the current layer and the previous layer. These boundaries are used to generate the FDB vectors previously described with respect to the first embodiment.

In step 231, any up-facing region for the current layer is computed by taking the boolean difference between the current layer boundary and the next layer boundary.

In step 232, the hatch region for the current layer is computed as the boolean difference between the current layer boundary and the boundary for the down-facing regions.

In step 233, the layer boundaries are compensated by removing up-facing regions from the area encompassed by the hatch boundary. This is accomplished by taking the boolean difference between the hatch region and the up region. These layer boundaries are the thrice-adjusted layer boundaries, L[i]'''', and are used to generate the LB vectors as previously described. In step 234, the LB vectors for the current layer are written out to sli file 235.

In step 236, any up-facing boundaries are adjusted to remove any down-facing regions encompassed by these boundaries. This step is performed in order to prevent the down-facing regions from getting over-cured. These boundaries are the adjusted up-facing boundaries, U[i]', discussed previously, and are used to generate the FUB vectors. In step 237, the FUB vectors are written out to sli file 235. In step 239, the hatch region is hatched in the manner described previously. Hatching results in the LH vectors described previously. In step 240, the LH vectors for the hatch region are written out to the sli file.

In step 241, the down-facing regions are hatched. These regions are hatched separately from the rest of the layer boundary so they will not be overcured. This step results in the NFDH vectors described previously. In step 243, the FDB and NFDH vectors are written out to sli file 235. In step 245, the up-facing boundaries for the up-facing regions on the current layer are retracted in the manner described previously. In step 246, the fill vectors for the retracted up-facing boundaries are generated in the manner described previously. This results in FUF vectors. In step 247, the FUF vectors are written out to sli file 235. In step 249, the down-facing boundaries are retracted in the manner described previously. This step results in the adjusted down-facing boundaries, D[i]'. In step 250, the fill vectors (the FDF vectors) for the down-facing regions are generated in the manner described previously, and in step 251, these vectors are written out to sli file 235.

In step 253, a query is made to determine if the current layer is the last layer in the stl file. If not, in step 267, the "current layer" indicator is set to the next layer, and steps 227, 229-234, 236-237, 239-241, 243, 245-247, 249-251, and 253, previously described, are repeated for this layer. When all layers have been processed, in step 268, messages regarding missing or misoriented segments are written out to the output screen 217, and to msg file 207. In step 271, memory usage messages are written out to the screen and msg files. In step 272, the process is considered completed.

Turning back to step 208, the case where the inputted data is already in the form of layer boundaries will now be described. As indicated, the input data should be in the form of polylines. These are obtained from slc file 256.

In step 254, the polylines for a given layer are obtained, and in step 255, these polylines are rotated, scaled, and translated according to user-specified parameters, in a similar manner to that described previously for the triangles.

In step 257, the polyline vertices are rounded to sli units, and the z-component of each vertex is rounded to the nearest slice layer.

In steps 258-259, all polylines having an inputted layer thickness of 0 are deleted, since these layers represent layers which have collapsed upon rounding, and which therefore, are redundant.

In step 260, any gaps in the polyline contours are filled by generating additional segments to fill in the gaps, and in step 261, a user-specified flag is checked to see if misdirected segments are to be reoriented. If so, in step 262, one attempt is made to reorient any misdirected segments in a polyline contour. This can be detected, since all segments within a polyline contour are expected to obey the right hand rule, whereby segments in a contour enclosing a solid do so in a counter-clockwise direction, while segments in a contour enclosing a hollow do so in a clockwise direction. For example, if all segments in a contour except one follow a counter-clockwise oriented loop, these segments are assumed to enclose a solid, and the direction of the one segment will be changed to be consistent with the others.

If the user-specified flag is not set, a jump is made to step 264. In this step, adjusted segments are combined as much as possible.

In step 263, the polylines are written out to tmp file 219.

In step 266, a query is made as to whether any additional layers exist in the sli file. If so, steps 254, 255, 257-264, and 266, described previously, are repeated for each layer in the sli file. Then, a jump is made to step 220, and the same process described previously, beginning with step 220, is performed using the tmp file 219.

The above completes a description of a flowchart of the implementation of the second embodiment.

Another file, SMAKE, when executed, calls SCHIRIS.MAK, which, in turn, appropriately combines S0.C to S6.C, and S.H.

In the previously-described embodiments, the resulting object will be oversized compared to the original representation of the object. In essence, the oversizing is not in the vertical dimension of the object formed, it is basically in the horizontal dimensions of the object formed. However, whenever a horizontal dimension is cured in excess, a corresponding cure of one layer thickness will result in the region where there should have been a cure thickness of something less than one layer thickness. As described previously, the accuracy of reproduction of an oversized object can be increased substantially by sanding off the discontinuities between layers in the regions of the object, whose design did not specify such discontinuities (corresponding to sloped regions in the original design). Objects formed by this oversized style basically have at least a portion, on each layer, of their surface that match the envelope of the object representation- while the other portions of the surface of the formed object extend the solid portions of the object beyond the envelope. 5 There are other styles that lead to other sized objects, wherein these other sized objects have advantages in terms of object buildability, or in terms of object accuracy. One such embodiment forms undersized objects that are in essence opposite to the oversized objects previously described. Such an undersized style is disclosed in previously referenced PCT Publication WO 89/10256. Objects formed by this undersized style basically have at least a portion, on each layer, of their surface that match the envelope of the object representation while the other portions of the surface of the formed object do not extend the solid portions of the object up to the envelope. A basic form of this style can be easily implemented by a slight modification to the earlier described embodiments of the present invention. The modification involves a change in the information and boolean operations used to form the initial layer boundaries for a given cross-section. These layer boundaries L[i] are derived by finding the intersection of the area of the S[i-1]+ borders with the area of the S[i]-borders. In this embodiment, the projection information is not used. After formation of all of the L[i] boundaries, the previously-described operations are used to determine layer boundaries for each layer. This undersized embodiment is particularly useful when discontinuities are to be filled in. This filling in can be done by application of a post-processing technique which fills the discontinuities with material and transforms this material to become part of the final object. Alternatively, and more preferably, this filling in of discontinuities can be performed on a layer-by-layer basis as the object is being formed. Techniques for, and advantages of methods for achieving such coatings are described in Section 3 of this detailed description entitled "Improved Surface Resolution By Inclusion Of Thin Fill Layers.

Another style produces objects which are more undersized than those of the previous embodiment. This style is used to build objects whose maximum solid extent does not result in the appropriately registered reproduced object and object representation envelope contacting each other. This type of sized object is useful when, after formation, the entire surface of the object is to be coated, even in areas that do not contain discontinuities, with a material (e.g., paint, powder coating, metallic coating). So that the surface of the coated object will more closely match the envelope of the object representation, the entire surface of the object must be retracted into the solid regions. This building style can be implemented by the techniques of the present invention. It requires layer comparisons (especially differencing) to offset the down-facing and up-facing features away from their original positions by the appropriate amount (this amount should be approximated by an integral number of layer thicknesses) so that the down-facing and up-facing portions of the object do not contact the object envelope. It also requires a form of LWC or boundary retraction so that horizontal solid portions of the layers can be retracted away from the object envelope.

A style calling for an averaged sized object can also be implemented. This implementation involves the use of additional slicing planes which are located, one each, midway between the slicing planes used to define the positions of triangle vertices of the object representation. The initial layer boundaries L[i] are determined from intersections of the intermediate (midpoint) slicing planes with the triangles that form the representation of the object. These initial layer boundaries are processed according to the teachings previously disclosed to determine up-facing, down-facing, and net layer regions for each cross-section of the object. These initial layers boundaries are conceptually associated with the higher of the two original slicing planes which bound the vertical extent of the layer. After determination of the various net regions associated with each cross-section (or layer), an object can be formed which will be of average size as compared to the objects built by the undersized and oversized styles previously described. In other words, the discontinuities which form due to the object being reproduced on a layer-by-layer basis, wherein the layers have finite thickness, are formed half extending beyond the envelope of the object and the other half falling short of the envelope.

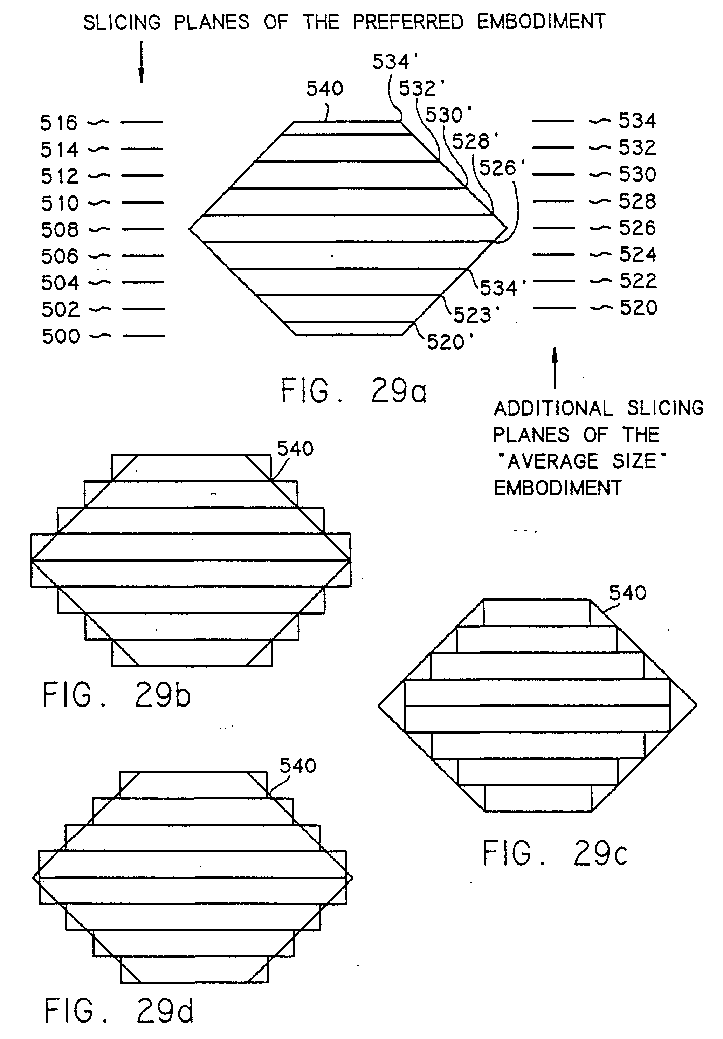

Fig. 29a depicts a two dimensional view, the two dimensions being the vertical dimension and one horizontal dimension, of an object envelope 540 of an object which is to be formed by stereolithography. Planes 500, 502, 504, 506, 608, 510, 512, 514, and 516 depict the vertical position of the slicing planes which bound the vertical extent of each layer to be formed and define the possible vertical locations that triangle vertices can be rounded to, whereas slicing planes 520, 522, 524, 526, 528, 530, 532, and 534 define the vertical dimension from which intersection segments with the triangles will be obtained. The data obtained from slicing plane 520 will be associated with slicing plane 502, since it represents the average positions of the cross-sectional information between slicing planes 500 and 502. Similar up-shifting of data obtained from the other intermediate slicing planes will occur. Fig. 29b depicts the same object envelope 540 superimposed over layers of the object formed using an oversized building style. Fig. 29c depicts the same object envelope 540 superimposed over layers of the object formed using an undersized building style. Fig. 29d depicts the same object envelope 540 superimposed over layers of the object formed using an average sized building style. Examination of these figures indicate why each style was so named. The oversized style is useful when post-processing involves material removal techniques; the undersized style is useful when post-processing or layer-by-layer processing involves filling techniques; and the average size style is useful when it is desired to have reasonably high accuracy without any additional processing.

Cure Width Compensation

As previously-described, if any cure width compensation is desired it can be implemented prior to the determination of the three independent regions of a layer. Alternatively, it may be implemented after the three independent regions are determined, thereby allowing different compensation values for each region. However, when following this alternative approach it is necessary to compensate the boundaries properly. When following this alternative approach, all the LB[i] vectors are compensated inward (normal compensation). The DB[i] and UB[i] vectors that were derived, as per the subject invention, from the boundaries of the previous or next layer by comparing the uncompensated layer boundary for a present layer to the uncompensated boundaries of the previous and next layers, respectively, should be compensated outward (reverse compensation). The DB[i] and UB[i] vectors that comprise boundaries of the present layer (before separation into three regions) are compensated inward, and the UB[i] vectors that are derived from the DB[i] vectors of the present layer (prior to compensation) are compensated inward. The amount of compensation of these vectors may differ according to the sources from which they are derived. LB[i] vectors are compensated by an amount A[i]. UB[i] and DB[i] vectors, which are derived from the uncompensated boundary of the next or previous layer, are compensated by the amount A[i], UB[i] and DB[i] vectors, which are derived from the uncompensated boundaries of the present layer, are compensated by an amount B[i] and C[i] respectively. UB[i] vectors which are derived from the DB[i] vectors of the present layer are compensated by an amount C[i]. This compensation can be done by shifting the vectors and recalculating end points or by shifting the end points initially. The value A[i] represents one-half the width of cure associated with curing of the LB[i] vectors, B[i] represents one-half the width of cure associated with the curing of the UB[i] vectors, and C[i] represents one-half the width of cure associated with the DB[i] vectors. Since many methods utilizing the techniques of layer comparison (especially those of the concurrently-filed applications) might lead to extreme variations in cure depth (and associated cure width) this alternative approach is most preferred so that individual regions can be more accurately compensated.

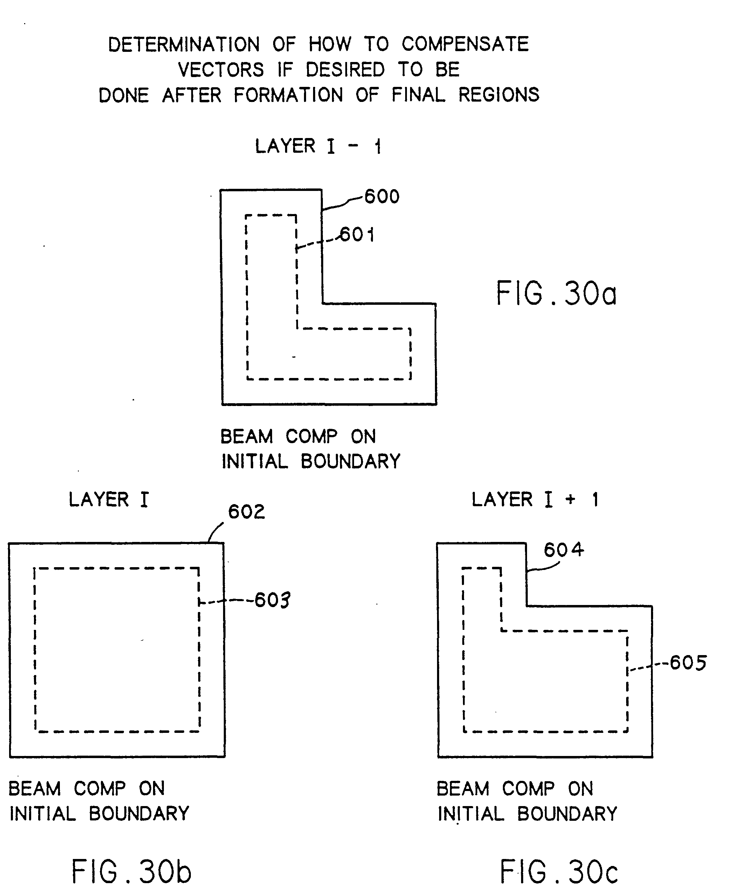

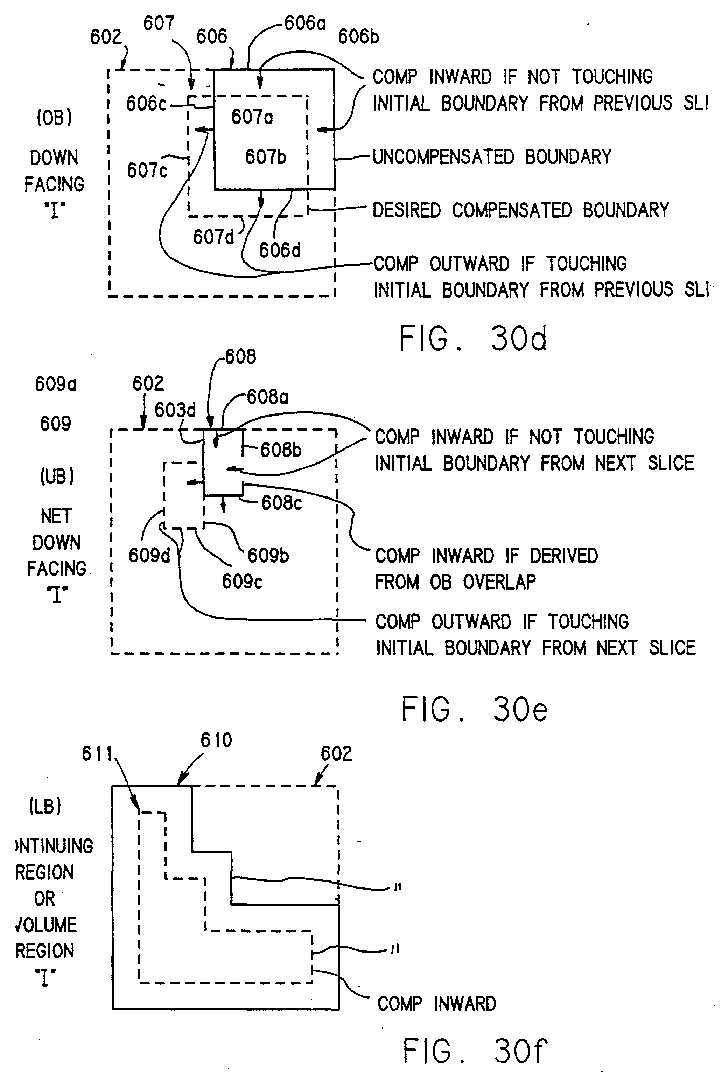

These principles can be illustrated with reference to Figs. 30a-30f, in which like elements are referenced with like reference numerals.

Figs. 30a-30c illustrate the uncompensated layer boundaries, identified with reference numerals 600, 602, and 604, for layers i-1, i, and i+1, respectively, and the compensated layer boundaries, identified with reference numerals 601, 603, and 605, respectively, for these layers.

Fig. 30d illustrates compensating the vectors that make up the down-facing boundary for layer i. The uncompensated down-facing boundary is identified with numeral 606, and the desired compensated down-facing boundary is illustrated with numeral 607. As indicated, the vectors in the uncompensated down-facing boundary that do not touch the uncompensated layer boundary from the previous layer, identified with numerals 606a and 606b, are compensated inward to obtain compensated vectors 607a and 607b. By contrast, the vectors in the uncompensated down-facing boundary that do touch the uncompensated layer boundary from the previous layer, identified with numerals 606c and 606d in the figure, are compensated outward to obtain compensated vectors 607c and 607d.

Turning to Fig. 30e, the compensation of the net up-facing vectors is illustrated. The uncompensated net up-facing boundary for layer i is identified with numeral 608, while the desired compensated boundary is illustrated with numeral 609. As indicated, the uncompensated net up-facing vectors which do not touch the uncompensated layer boundary from the previous layer, identified with numerals 608a and 608b in the figure, are compensated inward to obtain compensated vectors 609a and 609b, respectively. By contrast, the uncompensated net up-facing vectors which do touch the uncompensated layer boundary from the previous layer, identified with numerals 608c and 608d in the figure, are compensated outward to obtain compensated vectors 609c and 609d, respectively.

Turning to Fig. 30f, the uncompensated net layer boundary for layer i, identified with numeral 610, is compensated inward to obtain compensated net layer boundary 611.

## Claims

1. A method of forming an object (Fig. 35), the formed object (Fig. 35) being built of superposed selectively solidified layers of a fluid medium, solidifiable by exposure to a solidifying medium, the method comprising the repeated steps of providing a fresh layer of the fluid medium over a layer previously selectively exposed to the solidifying medium and selectively exposing the fresh layer, **characterised by**

   determining a first layer (Fig. 35,28) at which an up-facing surface is to be provided,
   identifying a second layer (Fig. 35,17), at a portion of which a down-facing surface should be provided, to have a predetermined spacing from the first layer (Fig. 35,28) in the build direction in order to accurately build the object,
   not exposing said portion during the selective exposure of the fresh layer pertaining to said second layer (Fig. 35,17), and
   exposing the superposed portion of one (Fig. 35,20) of the next following fresh layers to achieve exposure of said portion of the second layer (Fig. 35,17) so as to solidify said portion.

2. A method as claimed in Claim 1 in which each fresh layer has a thickness that is less than the minimum solidification depth of the fluid medium.

3. A method as claimed in Claim 1 in which each fresh layer has a thickness that is less than the thickness of solidified fluid medium necessary to avoid curl distortion.

4. A method as claimed in Claim 1 in which the total layer thickness of said second to said one fresh layer inclusive is not less than the minimum solidification depth.

5. A method as claimed in Claim 1 in which said one of the next following layers is chosen such that solidification of fluid medium below said second layer occurs.

6. A method as claimed in Claim 5 in which the total thickness of the layers exposed is equal to the minimum solidification depth.

7. A method as claimed in any one of Claims 1 to 5 in which the exposure used in solidifying said portion of the second layer yields a solidification depth that is substantially equal to the minimum solidification depth.

8. A method as claimed in any one of Claims 1 to 5 in which the exposure used in solidifying said portion of the second layer yields a solidification depth that is greater than the minimum solidification depth.

9. A method as claimed in any one of Claims 1 to 8 wherein said down-facing surface has a spacing from an up-facing surface vertically above it in the build direction that is less than the minimum solidification depth and priority is given to the accurate placement of said down-facing surface with respect to said first layer.

10. A method as claimed in any one of Claims 1 to 8 wherein said down-facing surface has a spacing from an up-facing surface vertically above it in the build direction that is less than the minimum solidification depth and priority is given to the accurate placement of said up-facing surface with respect to said first layer.

11. A method as claimed in any preceding claim in which the minimum solidification depth is specified to be an integral multiple of the layer thickness.

12. A method as claimed in any preceding claim in which the object is built to maintain an overall required vertical dimension.

13. A method as claimed in any preceding claim in which the fluid medium is a liquid photopolymer.

14. A method as claimed in any one of Claims 1 to 12 in which said fluid medium is a powder.

15. A method as claimed in any one of Claims 1 to 12 in which the solidifying medium is UV radiation, visible radiation or IR radiation.

16. A method as claimed in any preceding claim in which the object is built oversized with respect to a desired object envelope.

17. A method as claimed in any one of Claims 1 to 15 in which the object is built undersized with respect to a desired object envelope.

18. Apparatus for forming an object (Fig. 35), the apparatus being of the kind in which the formed object (Fig. 35) is built of superposed selectively solidified layers of a fluid medium, solidifiable by exposure to a solidifying medium, the apparatus including a computer programmed to control the operation of the apparatus, the computer controlled operation including the repeated steps of providing a fresh layer of the fluid medium over a layer previously selectively exposed to the solidifying medium and selectively exposing the fresh layer, the computer controlled operation being **characterised by**

determining a first layer (Fig. 35,28) at which an up-facing surface is to be provided,
identifying a second layer (Fig. 35,17), at a portion of which a down-facing surface should be provided, to have a predetermined spacing from the first layer (Fig. 35,28) in the build direction in order to accurately build the object,
not exposing said portion during the selective exposure of the fresh layer pertaining to said second layer (Fig. 35,17), and

exposing the superposed portion of one (Fig. 35,20) of the next following fresh layers to achieve exposure of said portion of the second layer (Fig. 35,17) so as to solidify said portion.

19. Apparatus as claimed in Claim 18 in the computer controlled operation of which each fresh layer has a thickness that is less than the minimum solidification depth of the fluid medium.

20. Apparatus as claimed in Claim 18 in the computer controlled operation of which each fresh layer has a thickness that is less than the thickness of solidified fluid medium necessary to avoid curl distortion.

21. Apparatus as claimed in Claim 18 in the computer controlled operation of which the total layer thickness of said second to said one fresh layer inclusive is not less than the minimum solidification depth.

22. Apparatus as claimed in Claim 18 in which said one of the next following layers is chosen such that solidification of fluid medium below said second layer occurs.

23. Apparatus as claimed in Claim 22 in the computer controlled operation of which the total thickness of the layers exposed is equal to the minimum solidification depth.

24. Apparatus as claimed in any one of Claims 18 to 22 in the computer controlled operation of which the exposure used in solidifying said portion of the second layer yields a solidification depth that is substantially equal to the minimum solidification depth.

25. Apparatus as claimed in any one of Claims 18 to 22 in the computer controlled operation of which the exposure used in solidifying said portion of the second layer yields a solidification depth that is greater than the minimum solidification depth.

26. Apparatus as claimed in any one of Claims 18 to 25 in the computer controlled operation of which said down-facing surface has a spacing from an up-facing surface vertically above it in the build direction that is less than the minimum solidification depth and priority is given to the accurate placement of said down-facing surface with respect to said first layer.

27. Apparatus as claimed in any one of Claims 18 to 25 in the computer controlled operation of which said down-facing surface has a spacing from an up-facing surface vertically above it in the build direction that is less than the minimum solidification depth and priority is given to the accurate placement of said up-facing surface with respect to said first layer.

28. Apparatus as claimed in any one of Claims 18 to 27 in the computer controlled operation of which the minimum solidification depth is specified to be an integral multiple of the layer thickness.

29. Apparatus as claimed in any one of Claims 18 to 28 in the computer controlled operation of which the object is built to maintain an overall required vertical dimension.

30. Apparatus as claimed in any one of Claims 18 to 29 in which the fluid medium is a liquid photopolymer.

31. Apparatus as claimed in any one of Claims 18 to 29 in which said fluid medium is a powder.

32. Apparatus as claimed in any one of Claims 18 to 29 in which the solidifying medium is UV radiation, visible radiation or IR radiation.

33. Apparatus as claimed in any one of Claims 18 to 32 in the computer controlled operation of which the object is built oversized with respect to a desired object envelope.

34. Apparatus as claimed in any one of Claims 18 to 32 in the computer controlled operation of which the object is built undersized with respect to a desired object envelope.

**Patentansprüche**

1. Ein Verfahren zum Bilden eines Objektes (Figur 35), wobei das gebildete Objekt (Figur 35) aufgebaut ist aus überlagerten selektiv verfestigten Schichten eines flüssigen Mediums, dass verfestigbar ist durch Exposition einem verfestigenden Medium, wobei das Verfahren die wiederholten Schritte umfasst des Bereitstellens einer frischen Schicht des flüssigen Mediums über einer Schicht, die zuvor dem verfestigenden Medium selektiv exponiert wurde, und selektives Exponieren der frischen Schicht, **gekennzeichnet durch**:

   Bestimmen einer ersten Schicht (Figur 35, 28), an der eine aufwärtszeigende Oberfläche bereitzustellen ist,

   Identifizieren einer zweiten Schicht (Figur 35, 17), wobei an einem Bereich der zweiten Schicht eine abwärtszeigende Oberfläche bereitgestellt werden sollte, um einen vorbestimmten Abstand von der ersten Schicht (Figur 35, 28) in der Aufbaurichtung zu haben, um das Objekt genau aufzubauen,

   Nicht-Exponieren des Bereiches während der selektiven Exposition der frischen Schicht, die zu der zweiten Schicht (Figur 35, 17) gehört, und

   Exponieren des überlagerten Abschnitts einer (Figur 35, 20) der nächsten folgenden frischen Schichten, um Exponieren des Bereiches der zweiten Schicht (Figur 35, 17) zu erzielen, so dass der Abschnitt verfestigt wird.

2. Verfahren gemäß Anspruch 1, in dem jede frische Schicht eine Dicke hat, die geringer ist als die minimale Verfestigungstiefe des flüssigen Mediums.

3. Verfahren gemäß Anspruch 1, in dem jede frische Schicht eine Dicke hat, die geringer ist als die Dicke des verfestigten flüssigen Mediums, die notwendig ist, um welliges Verziehen zu verhindern.

4. Verfahren gemäß Anspruch 1, in dem die totale Schichtdicke der zweiten Schicht mit der einen frischen Schicht inklusive nicht geringer ist als die minimale Verfestigungstiefe.

5. Verfahren gemäß Anspruch 1, in dem die eine der nächsten folgenden Schichten derart ausgewählt wird, dass das Verfestigen des flüssigen Mediums unterhalb der zweiten Schicht auftritt.

6. Verfahren gemäß Anspruch 5, in dem die totale Dicke der belichteten Schichten gleich ist zu der minimalen Verfestigungstiefe.

7. Verfahren gemäß einem der Ansprüche 1 - 5, in dem das Exponieren, das zum Verfestigen des Bereiches der zweiten Schicht verwendet wird, eine Verfestigungstiefe ergibt, die im wesentlich gleich der minimalen Verfestigungstiefe ist.

8. Verfahren gemäß einem der Ansprüche 1 - 5, in dem das Exponieren, das zum Verfestigen des Bereiches der zweiten Schicht verwendet wird, eine Verfestigungstiefe ergibt, die größer als die minimale Verfestigungstiefe ist.

9. Verfahren gemäß einem der Ansprüche 1 - 8, wobei die abwärtszeigende Oberfläche einen Abstand von einer aufwärtszeigenden Oberfläche in der Aufbaurichtung vertikal über ihr aufweist, der kleiner ist als die minimale Verfestigungstiefe, und wobei der genauen Positionierung der abwärtszeigenden Oberfläche im Verhältnis zu der ersten Schicht die Priorität gegeben wird.

10. Verfahren gemäß einem der Ansprüche 1 - 8, wobei die abwärtszeigende Oberfläche einen Abstand von einer aufwärtszeigenden Oberfläche in der Aufbaurichtung vertikal über ihr aufweist, der kleiner ist als die minimale Verfestigungstiefe, und wobei der genauen Positionierung der aufwärtszeigenden Oberfläche im Hinblick auf die erste Schicht die Priorität gegeben ist.

11. Verfahren gemäß einem der vorhergehenden Ansprüche, in dem die minimale Verfestigungstiefe spezifiziert ist, ein ganzzahliges Vielfaches der Schichtdikke zu sein.

12. Verfahren gemäß einem der vorhergehenden Ansprüche, in dem das Objekt aufgebaut wird, um eine insgesamt erforderliche vertikale Dimension zu erhalten.

13. Verfahren gemäß einem der vorhergehenden Ansprüche, in dem das flüssige Medium ein flüssiges Fotopolymer ist.

14. Verfahren gemäß einem der Ansprüche 1 - 12, in dem das flüssige Medium ein Pulver ist.

15. Verfahren gemäß einem der Ansprüche 1 - 12, in dem das verfestigende Medium UV-Strahlung, sichtbare Strahlung oder IR-Strahlung ist.

16. Verfahren gemäß einem der vorhergehenden Ansprüche, in dem das Objekt überdimensioniert aufgebaut wird, im Hinblick auf eine gewünschte Objektverkleidung.

17. Verfahren gemäß einem der Ansprüche 1 - 15, in dem das Objekt unterdimensioniert aufgebaut wird, um Hinblick auf eine gewünschte Objektverkleidung.

18. Eine Vorrichtung zum Bilden eines Objektes (Figur 35), wobei die Vorrichtung von dem Typ ist, in dem das gebildete Objekt (Figur 35) aufgebaut ist aus überlagerten, selektiv verfestigten Schichten eines flüssigen Mediums, dass verfestigbar ist durch Exposition einem verfestigenden Medium, wobei die Vorrichtung umfasst: einen Computer, der zur Steuerung des Betriebes der Vorrichtung programmiert ist, wobei der computerkontrollierte Betrieb die wiederholten Schritte umfasst, eine frische Schicht des flüssigen Mediums über einer Schicht bereitzustellen, die zuvor selektiv dem verfestigenden Medium exponiert wurde, und selektives Exponieren der frischen Schicht, wobei der computergesteuerte Betrieb **gekennzeichnet ist durch**:

   Bestimmen einer ersten Schicht (Figur 35, 28), an der eine aufwärtsgerichtete Oberfläche bereitzustellen ist,

   Identifizieren einer zweiten Schicht (Figur 35, 17), wobei an einem Abschnitt der zweiten Schicht eine abwärtsgerichtete Oberfläche bereitgestellt werden sollte, um einen vorbestimmten Abstand von der ersten Schicht (Figur 35, 28) in der Aufbaurichtung zu haben, um das Objekt genau aufzubauen,

   Nicht-Exponieren des Abschnitts während des selektiven Exponierens der frischen Schicht, die zu der zweiten Schicht (Figur 35, 17) gehört, und

   Exponieren des überlagerten Abschnitts einer (Figur 35, 20) der nächsten folgenden frischen Schichten, um Exposition des Abschnitts der zweiten Schicht (Figur 35, 17) zu erzielen, um den Abschnitt zu verfestigen.

19. Vorrichtung gemäß Anspruch 18, in deren computergesteuertem Betrieb jede frische Schicht eine Dicke aufweist, die geringer ist als die minimale Verfestigungstiefe des flüssigen Mediums.

20. Vorrichtung gemäß Anspruch 18, wobei in deren computergesteuertem Betrieb jede frische Schicht eine Dicke aufweist, die geringer ist als die Dicke des verfestigten flüssigen Mediums, die notwendig ist, um welliges Verziehen zu verhindern.

21. Vorrichtung gemäß Anspruch 18, wobei in deren computergesteuertem Betrieb die totale Schichtdicke der zweiten bis zu der einen frischen Schicht inklusive nicht geringer ist als die minimale Verfestigungstiefe.

22. Vorrichtung gemäß Anspruch 18, in der die eine der nächsten folgenden Schichten derart ausgewählt ist, dass die Verfestigung des flüssigen Mediums unter der zweiten Schicht erfolgt.

23. Vorrichtung gemäß Anspruch 22, wobei in dessen computergesteuertem Betrieb die totale Dicke der belichteten Schichten gleich ist zur minimalen Verfestigungstiefe.

24. Vorrichtung gemäß einem der Ansprüche 18 - 22, wobei in dessen computergesteuertem Betrieb die Exposition, die zum Verfestigen des Abschnitts der zweiten Schicht verwendet wird, eine Verfestigungstiefe ergibt, die im wesentlichen gleich der minimalen Verfestigungstiefe ist.

25. Vorrichtung gemäß einem der Ansprüche 18 - 22, wobei in deren computergesteuertem Betrieb die Exposition, die zum Verfestigen des Abschnitts der zweiten Schicht verwendet wird, eine Verfestigungstiefe ergibt, die größer ist als die minimale Verfestigungstiefe.

**26.** Vorrichtung gemäß einem der Ansprüche 18 - 25, wobei in deren computergesteuertem Betrieb die abwärtszeigende Oberfläche einen Abstand von einer aufwärtszeigenden Oberfläche in der Aufbaurichtung vertikal über ihr aufweist, der geringer ist als die minimale Verfestigungstiefe, und wobei dem genauen Positionieren der abwärtszeigenden Oberflächen im Hinblick auf die erste Schicht die Priorität gegeben wird.

**27.** Vorrichtung gemäß einem der Ansprüche 18 - 25, wobei in deren computergesteuertem Betrieb die abwärtszeigende Oberfläche einen Abstand von einer aufwärtszeigenden Oberfläche in der Aufbaurichtung vertikal über ihr aufweist, der geringer ist als die minimale Verfestigungstiefe, und wobei der genauen Positionierung der abwärtszeigenden Oberfläche im Hinblick auf die erste Schicht die Priorität gegeben wurde.

**28.** Vorrichtung gemäß einem der Ansprüche 18 - 27, wobei in deren computergesteuertem Betrieb die minimale Verfestigungstiefe spezifiziert ist, ein ganzzahliges Vielfaches der Schichtdicke zu sein.

**29.** Vorrichtung gemäß einem der Ansprüche 18 - 28, wobei in deren computergesteuertem Betrieb das Objekt aufgebaut ist, um eine insgesamt erforderliche vertikale Dimension zu erhalten.

**30.** Vorrichtung gemäß einem der Ansprüche 18 - 29, in der das flüssige Medium ein flüssiges Fotopolymer ist.

**31.** Vorrichtung gemäß einem der Ansprüche 18 - 29, in der das flüssige Medium ein Pulver ist.

**32.** Vorrichtung gemäß einem der Ansprüche 18 - 29, in der das verfestigende Medium UV-Strahlung, sichtbare Strahlung oder IR-Strahlung ist.

**33.** Vorrichtung gemäß einem der Ansprüche 18 - 32, in deren computergesteuertem Betrieb das Objekt überdimensioniert aufgebaut ist im Hinblick auf eine gewünschte Objektverkleidung.

**34.** Vorrichtung gemäß einem der Ansprüche 18 - 32, in deren computergesteuertem Betrieb das Objekt unterdimensioniert aufgebaut ist im Hinblick auf eine gewünschte Objektverkleidung.

## Revendications

**1.** Un procédé de formation d'un objet (fig. 35), l'objet formé étant construit en couches superposées sélectivement solidifiées d'un milieu fluide, solidifiable par exposition à un milieu solidifiant, le procédé comprenant les étapes répétées d'apport d'une couche neuve du milieu fluide sur une couche précédemment exposée sélectivement au milieu solidifiant et d'exposition sélective de la couche neuve, **caractérisé par**

la détermination d'une première couche (fig. 35,28) à l'endroit de laquelle doit être obtenue une surface tournée vers le haut,
l'identification d'une seconde couche (fig. 35, 17), à l'endroit d'une partie de laquelle doit être obtenue une surface tournée vers le bas, pour avoir un intervalle prédéterminé par rapport à la première couche (fig. 35, 28) dans la direction de construction de manière à construire précisément l'objet,
la non-exposition de ladite partie durant l'exposition sélective de la couche neuve concernant ladite seconde couche (fig. 35, 17), et
l'exposition de la partie en superposition de l'une (fig. 35, 20) des couches neuves suivantes consécutives pour réaliser l'exposition de ladite partie de la seconde couche (fig. 35, 17) afin de solidifier ladite partie.

**2.** Un procédé selon la revendication 1 dans lequel chaque couche neuve a une épaisseur inférieure à la profondeur minimale de solidification du milieu fluide.

**3.** Un procédé selon la revendication 1 dans lequel chaque couche neuve a une épaisseur inférieure à l'épaisseur de milieu fluide solidifié nécessaire pour éviter une déformation de vrillage.

**4.** Un procédé selon la revendication 1 dans lequel l'épaisseur totale de couche de ladite seconde à ladite couche fraîche incluse n'est pas inférieure à la profondeur minimale de solidification.

**5.** Un procédé selon la revendication 1 dans lequel ladite une des couches neuves suivantes consécutives est choisie de sorte qu'ait lieu la solidification du milieu fluide au-dessous de ladite seconde couche.

6. Un procédé selon la revendication 5 dans lequel l'épaisseur totale des couches exposées est égale à la profondeur minimale de solidification.

7. Un procédé selon l'une des revendications 1 à 5 dans lequel l'exposition utilisée pour solidifier ladite partie de la seconde couche donne une profondeur de solidification qui est substantiellement égale à la profondeur minimale de solidification.

8. Un procédé selon l'une des revendications 1 à 5 dans lequel l'exposition utilisée pour solidifier ladite partie de la seconde couche donne une profondeur de solidification qui est supérieure à la profondeur minimale de solidification.

9. Un procédé selon l'une des revendications 1 à 8 dans lequel ladite surface tournée vers le bas présente par rapport à une surface tournée vers le haut au-dessus d'elle dans la direction de construction un intervalle qui est inférieur à la profondeur minimale de solidification et priorité est donnée au placement précis de ladite surface tournée vers le bas par rapport à ladite première couche.

10. Un procédé selon l'une des revendications 1 à 8 dans lequel ladite surface tournée vers le bas présente par rapport à une surface tournée vers le haut au-dessus d'elle dans la direction de construction un intervalle qui est inférieur à la profondeur minimale de solidification et priorité est donnée au placement précis de ladite surface tournée vers le haut par rapport à ladite première couche.

11. Un procédé selon l'une des revendications précédentes dans lequel la profondeur minimale de solidification est spécifiée être un multiple entier de l'épaisseur de couche.

12. Un procédé selon l'une des revendications précédentes dans lequel l'objet est construit pour maintenir une dimension verticale hors-tout requise.

13. Un procédé selon l'une des revendications précédentes dans lequel le milieu fluide est un photopolymère liquide.

14. Un procédé selon l'une des revendications 1 à 12 dans lequel ledit milieu fluide est une poudre.

15. Un procédé selon l'une des revendications 1 à 12 dans lequel le milieu solidifiant est un rayonnement UV, un rayonnement visible ou un rayonnement IR.

16. Un procédé selon l'une des revendications précédentes dans lequel l'objet est construit surdimensionné par rapport à une enveloppe d'objet souhaitée.

17. Un procédé selon l'une des revendications 1 à 15 dans lequel l'objet est construit sous-dimensionné par rapport à une enveloppe d'objet souhaitée.

18. Dispositif de formation d'un objet (fig. 35), ce dispositif étant du type dans lequel l'objet formé (fig. 35) est construit en couches superposées sélectivement solidifiées d'un milieu fluide, solidifiable par exposition à un milieu solidifiant, le dispositif comprenant un calculateur programmé pour commander le fonctionnement du dispositif, le fonctionnement commandé par calculateur comprenant les étapes répétées d'apport d'une couche neuve du milieu fluide sur une couche précédemment exposée sélectivement au milieu solidifiant et d'exposition sélective de la couche neuve, le fonctionnement commandé par calculateur étant **caractérisé par**

la détermination d'une première couche (fig. 35,28) à l'endroit de laquelle doit être obtenue une surface tournée vers le haut,
l'identification d'une seconde couche (fig. 35, 17), à l'endroit d'une partie de laquelle doit être obtenue une surface tournée vers le bas, pour avoir un intervalle prédéterminé par rapport à la première couche (fig. 35, 28) dans la direction de construction de manière à construire précisément l'objet,
la non-exposition de ladite partie durant l'exposition sélective de la couche neuve concernant ladite seconde couche (fig. 35, 17), et
l'exposition de la partie en superposition de l'une (fig. 35, 20) des couches neuves suivantes consécutives pour réaliser l'exposition de ladite partie de la seconde couche (fig. 35, 17) afin de solidifier ladite partie.

19. Dispositif selon la revendication 18 dans le fonctionnement commandé par calculateur duquel chaque couche neuve a une épaisseur inférieure à la profondeur minimale de solidification du milieu fluide.

20. Dispositif selon la revendication 18 dans le fonctionnement commandé par calculateur duquel chaque couche neuve a une épaisseur inférieure à l'épaisseur de milieu fluide solidifié nécessaire pour éviter une déformation de vrillage.

21. Dispositif selon la revendication 18 dans le fonctionnement commandé par calculateur duquel l'épaisseur totale de couche de ladite seconde à ladite couche fraîche incluse n'est pas inférieure à la profondeur minimale de solidification.

22. Dispositif selon la revendication 18 dans lequel ladite une des couches neuves suivantes consécutives est choisie de sorte qu'ait lieu la solidification du milieu fluide au-dessous de ladite seconde couche.

23. Dispositif selon la revendication 22 dans le fonctionnement commandé par calculateur duquel l'épaisseur totale des couches exposées est égale à la profondeur minimale de solidification.

24. Dispositif selon l'une des revendications 18 à 22 dans le fonctionnement commandé par calculateur duquel l'exposition utilisée pour solidifier ladite partie de la seconde couche donne une profondeur de solidification qui est substantiellement égale à la profondeur minimale de solidification.

25. Dispositif selon l'une des revendications 18 à 22 dans le fonctionnement commandé par calculateur duquel l'exposition utilisée pour solidifier ladite partie de la seconde couche donne une profondeur de solidification qui est supérieure à la profondeur minimale de solidification.

26. Dispositif selon l'une des revendications 18 à 25 dans le fonctionnement commandé par calculateur duquel ladite surface tournée vers le bas présente par rapport à une surface tournée vers le haut au-dessus d'elle dans la direction de construction un intervalle qui est inférieur à la profondeur minimale de solidification et priorité est donnée au placement précis de ladite surface tournée vers le bas par rapport à ladite première couche.

27. Dispositif selon l'une des revendications 18 à 25 dans le fonctionnement commandé par calculateur duquel ladite surface tournée vers le bas présente par rapport à une surface tournée vers le haut au-dessus d'elle dans la direction de construction un intervalle qui est inférieur à la profondeur minimale de solidification et priorité est donnée au placement précis de ladite surface tournée vers le haut par rapport à ladite première couche.

28. Dispositif selon l'une des revendications 18 à 27 dans le fonctionnement commandé par calculateur duquel la profondeur minimale de solidification est spécifiée être un multiple entier de l'épaisseur de couche.

29. Dispositif selon l'une des revendications 18 à 28 dans le fonctionnement commandé par calculateur duquel l'objet est construit pour maintenir une dimension verticale hors-tout requise.

30. Dispositif selon l'une des revendications 18 à 29 dans lequel le milieu fluide est un photopolymère liquide.

31. Dispositif selon l'une des revendications 18 à 29 dans lequel ledit milieu fluide est une poudre.

32. Dispositif selon l'une des revendications 18 à 29 dans lequel le milieu solidifiant est un rayonnement UV, un rayonnement visible ou un rayonnement IR.

33. Dispositif selon l'une des revendications 18 à 32 dans le fonctionnement commandé par calculateur duquel l'objet est construit surdimensionné par rapport à une enveloppe d'objet souhaitée.

34. Dispositif selon l'une des revendications 18 à 32 dans le fonctionnement commandé par calculateur duquel l'objet est construit sous-dimensionné par rapport à une enveloppe d'objet souhaitée.

FIG. 1

FIG. 2

FIG. 3

FIG. 3a

FIG. 3b

INTERSECT TRIANGLES WITH SLICING PLANES Z[I]  — 10

CLASSIFY TRIANGLES AS " + ", " - ", OR "NEITHER" — 11

FORM S [I] + FROM INTERSECTIONS BETWEEN Z [I] AND " + " TRIANGLES — 12

FORM S [I] - FROM INTERSECTIONS BETWEEN Z [I] AND " - " TRIANGLES — 13

FORM S [I]* FROM PROJECTING ALL TRIANGLES WHICH LIE BETWEEN Z[I] AND Z[I + 1] ONTO Z[I] — 14

FORM L[I] = S[I] S[I]* + S[I + 1] — 15

COMPUTE LBO[I] PERFORM LWC TO OBTAIN L'[I] — 16

17 — FORM U[I] = L[I]' - L[I + 1]'

18 — FORM D[I] = L[I]' - L[I - 1]'

19 — FORM U[I]' = U[I] - D[I]

20 —

FIG. 3a

FORM L[I]'" = L[I]' − U[I]' —21

COMPUTE UBO[I]
PERFORM LWC TO
OBTAIN U[I]" —22

COMPUTE DBO[I]
PERFORM LWC TO OBTAIN
D[I]' —23

GENERATE AND CLASSIFY
VECTORS FROM ABOVE
BOUNDARIES —24

FIG. 3b

FIG. 4

FIG. 5

FIG. 6

FIG. 7

$S[5]^{-}$

$S[4]^{*}$

$S[4]^{+}$

$S[4]^{*}$

FIG. 8

$L[5]'$

$L[4]'$

$U[4]$

FIG. 9

L[i + 1]'

29

L[i]'

L[i - 1]'

FIG. 11

32    34

31

30

FIG. 10

13    30    13

35
35b
35a

FIG. 12a

36

FIG. 12b

PERFORM UNION
OPERATIONS TO FORM
BOUNDARIES — 37

LINE WIDTH
COMPENSATION — 38

PERFORM INTERSECTION
OPERATIONS TO FORM
NON-OVERLAPPING
BOUNDARIES — 39

PERFORM SKIN
RETRACTION AND
VECTOR GENERATION — 40

FIG. 13

SORT TRIANGLES BY
MINIMUM Z COMPONENT

50

FORM SEGMENT AND
PROJECTION LISTS FOR ALL
TRIANGLES BETWEEN TWO LAYERS

51

SORT SEGMENT LIST
BY MINIMUN Y

52

FORM POLYLINES BY
CHECKING ENDPOINTS

53

FORM POLYGONS BY
CONNECTING ANY GAPS

54

REFORM SEGMENTS
BY SPLITTING AT
INTERSECTIONS

55

56

ORDER BY MINIMUM Y

57

ASSIGN ORIENTATIONS
BY INTERSECTING WITH
INFINITY LINES

58

SQRT PROJECTION SEGMENTS
BY MINIMUM Y

59

MERGE WITH SEGMENTS

60

PERFORM BOOLEAN UNION
OPERATION USING INTERSECTING
INFINITY LINES, AND
Q.V. TRANSITION THRU "1"

FIG. 14

FIG. - 15a

FIG. 15b

FIG. 16

73
QV=0
1
72
QV=1

FIG. 17a

73
QV=1
−1
72
QV=0

FIG. 17b

QV=0
75a
75b
QV=0
74

ORIENTATION = 0
BIORIENTATION = 2

FIG. 18a

QV=1
75a
75b
QV=1
74

ORIENTATION = 0
BIORIENTATION = 2

FIG. 18b

76a
76b
76c
QV=0
QV=1
QV=0
QV=1
77

ORIENT = 1
BIORIENT = 3

FIG. 19a

76a
76b
76c
QV=1
QV=0
QV=1
QV=0
77

ORIENT = 1
BIORIENT = 3

FIG. 19b

FIG. 20a

FIG. 20b

QV'=2

QV=0 | QV=1 ↑ QV=0

79⌐

BIORIENT = 2

FIG. 21a

QV'=3

QV=1 ↑ QV=0 | QV=1

79⌐

BIORIENT = 2

FIG. 21b

81a

80

81B

81d

81c'

84

83a

83b

82

81c

FIG. 22a

86

88a

87a

85

FIG. 22b

FIG. 22c

FIG. 22d

FIG. 22e

FIG. 22f

FIG. 22g

FIG. 23a

FIG. 23b

FIG. 23c

FIG. 24a

FIG. 24b

FIG. 25a

FIG. 25b

FIG. 25c

FIG. 26a

FIG. 26b

FIG. 26c

FIG. 26d

FIG. 27a

FIG. 27b

163

167

168　　　　165　　162

164　　161　　159

157　　　155

160

169　　153

FIG. 27c

165

172　　　　171

156

FIG. 27d

158　　154

170

173

FIG. 28a

START (200)

INITIALIZE MEMORY MANAGER (s0.29) — 201

INITIALIZE TIME (s0.41) — 202

SET USER INFORMATION (s0.44) — 203

COMMAND LINE — 204

ARG FILE — 205

WRITE USER INFORMATION (s0.46) — 206

MSG FILE — 207

SCREEN — 217

DATA TYPE? (s8.915) — 208

POLYLINES

TRIANGLES

STL FILE — 216

MORE TRIANGLES IN STL FILE? (s3.850) — 214

YES

NO

SORT TRIANGLE LIST BY MINIMUM Z (s0.3.884) — 215

TMP FILE — 219

WRITE SORTED TRIANGLE LIST (s0_386) — 218

CURRENT LAYER = FIRST LAYER TO SLICE (s0.179) — 220

FIG. 28b

ROTATE, SCALE, TRANSLATE POLYLINES (s5.1189) — 255

ROUND OFF VERTICES AND Z TO SLICE UNITS, Z TO OUTPUT LAYER BOUNDARY (s5.1190) — 257

GET SET OF POLYLINE CONTOURS FOR ONE INPUT LAYER (s3.977) — 254

GET TRIANGLE (s0.950) — 209

ROTATE, SCALE, TRANSLATE TRIANGLE (s3.86) — 210

REMOVE GAPS IN CONTOURS (s3.996) — 260

SLC FILE — 256

ROUND OFF X, Y, Z, VERTICES TO SLICE UNITS, Z TO OUTPUT LAYER BOUNDARY (s3.89) — 211

TRY TO REORIENT MISDIRECTED CONTOURS? (s3.998) — 261

REORIENT MISORIENTED POLYGONS (s3.998) — 262

INPUT IS LAYER THICK — 258

IS TRIANGLE FLAT? (s3.875) — 212

NO

BOOLEAN POLYLINE LIST (s3.999) — 264

YES

WRITE OUT POLYGON LIST (s3.1013) — 263

NO

DELETE INPUT LAYER — 259

YES

DELETE TRIANGLE (s3.875) — 213

YES

TMP FILE — 219

MORE LAYERS IN SLC FILE? (s3.977) — 266

YES

NO

EP 0 555 369 B1

FIG 28c

| FIG 28a | FIG 28b |
|---------|---------|
| FIG 28c | FIG 28d |

FIG 28

FIG. 28d

FILL UP REGION (s0.398) — 246

WRITE UP FILL (s0.391) — 247

SLI FILE — 235

HATCH HATCH REGION (s0.346) — 239

RETRACT REGION DOWN (s0.404) — 249

WRITE LAYER HATCH (s0.347) — 240

FILL DOWN REGION (s0.417) — 250

HATCH DOWN REGION (s0.364) — 241

WRITE DOWN FILL (s0.418) — 251

SLI FILE — 235

WRITE DOWN HATCH (s0.365) — 243

CURRENT LAYER == LAST LAYER? (s0.247) — 253

NO

CURRENT LAYER = NEXT LAYER (s0.247) — 267

RETRACT UP REGION (s0.377) — 245

YES

WRITE MISSING AND MISORIENTED SEGMENT MESSAGES (s0.441) — 268

WRITE MEMORY USAGE MESSAGE (s0.453) — 271

DONE — 272

SCREEN — 217

MSG FILE — 207

SLICING PLANES OF THE PREFERRED EMBODIMENT

516
514
512
510
508
506
504
502
500

534'
532'
530'
528'
526'
540

534
532
530
528
526
524
522
520

534'
523'
520'

FIG. 29a

ADDITIONAL SLICING
PLANES OF THE
"AVERAGE SIZE"
EMBODIMENT

540

FIG. 29b

540

FIG. 29c

540

FIG. 29d

DETERMINATION OF HOW TO COMPENSATE
VECTORS IF DESIRED TO BE
DONE AFTER FORMATION OF FINAL REGIONS

LAYER I – 1

FIG.30a

BEAM COMP ON
INITIAL BOUNDARY

LAYER I

BEAM COMP ON
INITIAL BOUNDARY

FIG.30b

LAYER I + 1

BEAM COMP ON
INITIAL BOUNDARY

FIG.30c

602
607
606
606a
606b

(OB)

DOWN
FACING
"I"

606c
607a
607b
607c
607d
606d

COMP INWARD IF NOT TOUCHING
INITIAL BOUNDARY FROM PREVIOUS SLI

UNCOMPENSATED BOUNDARY

DESIRED COMPENSATED BOUNDARY

COMP OUTWARD IF TOUCHING
INITIAL BOUNDARY FROM PREVIOUS SLI

FIG. 30d

609a

609

(UB)

NET
DOWN
FACING
"I"

602
603d
608
608a
608b
608c
609d
609b
609c

COMP INWARD IF NOT TOUCHING
INITIAL BOUNDARY FROM NEXT SLICE

COMP INWARD IF DERIVED
FROM OB OVERLAP

COMP OUTWARD IF TOUCHING
INITIAL BOUNDARY FROM NEXT SLICE

FIG. 30e

611
610
602

(LB)

)NTINUING

REGION

OR

/OLUME

REGION

"I"

n

n

COMP INWARD

FIG. 30f

71

10 MILS

FIG. 31

PRIOR ART METHOD USING
HIGH RESOLUTION MATERIAL

FIG. 32

FIG. 33

FIG. 34

FIG. 35

— INDICATES NO CURING OCCURS

FIG. 36

LAYER INVOLVED IN THE CREATION OF THE
OBJECT SHOWN IN FIGURE 2

FIG. 37    1 of 7

FIG. 37    2 of 7

-9

-10

-11

-12

FIG. 37    3 of 7

FIG. 37 4 of 7

FIG. 37    5 of 7

FIG . 37    6 of 7

FIG. 37    7 of 7

LATERS INVOLVED IN THE CREATION OF THE
OBJECT SHOWN IN FIGURE 5

FIG. 38   1 of 7

☑ = MSD CURE DEPTH

◻ = NOT NECESSARILY
MSD CURE DEPTH

FIG. 38    2 of 7

9

10

11

12

FIG. 38    3 of 7

13

14

15

16

FIG. 38     4 of 7

FIG. 38    5 of 7

21

22

23

24

FIG. 38    6 of 7

FIG. 38

LATERS INVOLVED IN THE CREATION OF THE
OBJECT SHOWN IN FIGURE 6

FIG. 39     1 of 7

▨ = MSD CURE DEPTH

◨ = NOT NECESSARILY
    MSD CURE DEPTH

5

6

7

8

FIG. 39    2 OF 7

9

10

11

12

FIG. 39    3 of 7

**FIG. 39** 4 of 7

13

14

15

16

FIG. 39     5 of 7

FIG. 39    6 of 7

FIG. 39

FIG. 40

PRIOR ART METHOD USING
A HIGH RESOLUTION MATERIAL

FIG. 41

FIG. 42

Z

X

FIG. 43a

FIG. 43b

FIG. 43c

FIG. 43d

FIG. 43e

FIG. 44

LB

FDB

-3 CROSS SECTION 3

FUB

NFDB

NFUB

LB

FDB

-4 CROSS SECTION 4

FUB

NFDB

NFUB

FIG. 44

CROSS SECTION -5

LB

FDB

FUB

NFDB

NFUB

CROSS SECTION -6

LB

FDB

FUB

NFDB

NFUB

FIG. 44

CROSS SECTION 7

-7

LB

FDB

FUB

NFDB

NFUB

CROSS SECTION 8

-8

LB

FDB

FUB

NFDB

NFUB

FIG. 44

CROSS SECTION 9

-9

LB

FDB

FUB

NORMALLY MOVED DOWN 1 LAYER

NFDB

NFUB

CROSS SECTION 10

-10

LB

FDB

FUB

NFDB

NFUB

FIG. 44

FIG. 44

CROSS SECTION -13

LB

FDB

FUB

NFDB

13

NFUB

CROSS SECTION -14

LB

FDB

FUB

NFDB

14

NFUB

FIG. 44

FIG. 44

CROSS SECTION -17

LB

FDB

FUB

NFDB

NFUB

CROSS SECTION -18

LB

FDB

FUB

NFDB

NFUB

FIG. 44

CROSS SECTION

−19

LB

FDB

FUB

NFDB

17

NFUB

CROSS SECTION

−20

LB

FDB

FUB

NFDB

18

NFUB

FIG. 44

CROSS SECTION -21

21

LB

FDB

FUB

NORMALLY MOVED DOWN 1 LAYER

NFDB

NFUB

FIG. 44

GENERATE CAD DATA
FOR DESIGN OF
THREE DIMENSIONAL
OBJECT — 708

↓

CONVERT CAD DATA
TO APPROPRIATE
STEREOLITHOGRAPHIC
DATA FORMAT — 709

↓

GENERATE
SOLID INDIVIDUAL LAMINAE
REPRESENTING
CROSS SECTIONS OF
OBJECT TO BE FORMED — 710

↓

COMBINE
SUCCESSIVELY FORMED
ADJACENT LAMINAE
TO FORM
THREE DIMENSIONAL OBJECT — 711

## FIG. 45

GENERATE CAD DATA
FOR DESIGN OF
THREE DIMENSIONAL
OBJECT — 708

↓

CONVERT CAD DATA
TO APPROPRIATE
STEREOLITHOGRAPHIC
DATA FORMAT — 709

↓

CONTAIN A FLUID MEDIUM
CAPABLE OF SOLIDIFICATION
IN RESPONSE TO
PRESCRIBED REACTIVE
STIMULATION — 712

↓

APPLY STIMULATION AS
GRAPHIC PATTERN IN
ACCORDANCE WITH DATA
GENERATED IN STEP(9)
AT FLUID SURFACE TO FORM
THIN SOLID INDIVIDUAL
LAYERS AT THE SURFACE,
EACH LAYER REPRESENTING
AN ADJACENT CROSS SECTION
OF A THREE DIMENSIONAL
OBJECT TO BE PRODUCED — 713

↓

SUPERIMPOSE SUCCESSIVE
ADJACENT LAYERS ON
EACH OTHER AS THEY
ARE FORMED
TO INTEGRATE LAYERS
AND DEFINE
THREE DIMENSIONAL OBJECT — 714

## FIG. 46